# EUROPEAN PATENT SPECIFICATION

(11) **EP 4 459 973 B1**
(45) Date of publication and mention of the grant of the patent: **01.07.2026**
(21) Application number: 23881391.9
(22) Date of filing: 14.08.2023
(51) Int. Cl.: H04M 3/42

(54) **COOPERATIVE CONTROL METHOD AND APPARATUS, AND ELECTRONIC DEVICE AND READABLE STORAGE MEDIUM**
KOOPERATIVES STEUERUNGSVERFAHREN UND -VORRICHTUNG SOWIE ELEKTRONISCHE VORRICHTUNG UND LESBARES SPEICHERMEDIUM
PROCÉDÉ ET APPAREIL DE COMMANDE COOPÉRATIVE, ET DISPOSITIF ÉLECTRONIQUE ET SUPPORT D'ENREGISTREMENT LISIBLE

(30) Priority: 26.10.2022 CN 202211321294
(43) Date of publication of application: 06.11.2024
(73) Proprietor: Honor Device Co., Ltd., Shenzhen, Guangdong 518040 (CN)
(72) Inventor: CHEN, Wenjie, Shenzhen, Guangdong 518040 (CN)
(74) Representative: Isarpatent
(86) International application number: PCT/CN2023/112983
(87) International publication number: WO 2024/087807

(56) References cited:
- WO-A1-2018/072085
- CN-A- 114 077 373
- CN-A- 114 928 831
- CN-A- 115 002 937
- CN-A- 115 038 042
- US-A1- 2016 277 581

## Description

Priority is claimed to Chinese Patent Application No. 202211321294.9, filed with China National Intellectual Property Administration on October 26, 2022 and entitled "COORDINATION CONTROL METHOD AND APPARATUS, ELECTRONIC DEVICE, AND READABLE STORAGE MEDIUM".

### TECHNICAL FIELD

This technical description generally relates to the field of communication technologies, and the invention in particular relates to a coordination control method, an electronic device, and a readable storage medium.

### BACKGROUND

Currently, as full-scene multi-type electronic devices are popularized, multi-device coordination becomes a development trend. However, when performing the multi-device coordination, a user cannot perceive whether a current device has established a connection to a nearby coordination device, cannot determine whether the coordination device has a coordinative condition, and cannot troubleshoot a cause in time when the coordination device cannot coordinate. Consequently, user experience is affected.

US 2016/0277581 A1 discloses a method that includes accessing, at a first user device, an application that coordinates ringing of multiple user devices registered to a smart phone number that are within a predetermined proximity of each other. The method includes broadcasting an identity and a ring state associated with the user device. A presence is to be detected within the predetermined proximity of at least one additional user device associated with the smart phone number. The method includes determining a ringing user device based on predetermined rules of selection between the at least one additional user device and the first user device. The method further includes determining activity to be performed by at least one other user device in event of an incoming call to the smart phone number. The method also includes receiving an incoming call at the smart phone number and ringing the ringing device.

CN 115 002 937 A discloses a multi-device cooperation method, an electronic device and a related product. The method comprises the steps that a first electronic device displays a first page on a display screen, the first page comprises a device identifier of the first electronic device and a device identifier of at least one near-field device, the near-field device comprises a second electronic device, and a plurality of cooperation modes exist between the first electronic device and the second electronic device; in response to an operation of a user on the first page, displaying a mode identifier of at least one collaboration mode in the plurality of collaboration modes on the first page; in response to a click operation of a user on the first mode identifier, determining the cooperation mode corresponding to the first mode identifier as a target cooperation mode; and establishing multi-device collaboration with the second electronic device based on the target collaboration mode. Thus, when the first electronic equipment and the second electronic equipment support multiple cooperation modes, a user can select the expected target cooperation mode on the first electronic equipment to establish multi-equipment cooperation, and the use experience of the user is improved.

### SUMMARY

The object of the present invention is to provide a coordination control method, an electronic device, and a readable storage medium, to determine, by displaying a first device coordination status, whether a coordination device has a coordinative condition. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a coordination control method, applied to a first device, the first device establishing a communication connection to a second device, the first device establishing a communication connection to a third device, and including: displaying a first interface, where the first interface includes a plurality of setting options, and the plurality of setting options includes a super terminal option; displaying a second interface in response to a user clicking the super terminal option in the first interface, where the second interface includes options of a plurality of coordination services, the options of the plurality of coordination services include a super call option, the second interface further includes a my device list, and the my device list includes a second device option and a third device option; displaying a super call interface when the super call option is clicked in the second interface, where the super call interface includes a super call function button; displaying a super setting interface of the second device when the second device option is clicked in the second interface, where the super setting interface of the second device includes a super call function button of the second device; wherein a super call function of each of the first device, the second device, and the third device is enabled, and after a first incoming call request is received, the first incoming call request is displayed by the second device and the third device; disabling the super call function of the first device in response to the user clicking the super call function button in the super call interface, where after a second incoming call request is received, the second device and the third device do not display the second incoming call request; enabling the super call function of the first device in response to the user clicking the super call function button in the super call interface; and disabling the super call function of the second device in response to the user clicking the super call function button in the super setting interface of the second device, where after a third incoming call request is received, the second device does not display the third incoming call request, and the third device displays the third incoming call request.

The first device may stream the incoming call request to the second device and the third device, and the second device does not display the incoming call request of the first device after the super call function of the second device is disabled. The incoming call request of the first device is streamed to the second device and the third device, thereby implementing cross-device streaming use of the incoming call request of the first device. When it is inconvenient for the first device to answer an incoming call, the incoming call of the first device is answered through another device, thereby enhancing user experience. In addition, the first device may perform cross-device management on the super call function of the second device, thereby further enhancing user experience.

In a possible implementation, after the step of displaying a second interface, the method further includes: when a first dialing request of the second device is received, displaying the first dialing request, performing a dialing operation of the first dialing request, wherein the third device does not display the first dialing request; and after the super call function of the first device is disabled, a second dialing request of the second device is not displayed.

In another possible implementation, the first device is a first mobile phone, the second device is a second mobile phone, the super call function of each of the first device, the second device, and the third device is enabled, and after the step of displaying a second interface, the method further includes: when the second device receives a fourth incoming call request, displaying the fourth incoming call request, where the third device displays the fourth incoming call request; disabling the super call function of the first device in response to the user clicking the super call function button in the super call interface; and when the second device receives a fifth incoming call request, not displaying the fifth incoming call request, where the third device displays the fifth incoming call request.

In still another possible implementation, the options of the plurality of coordination services further include a super connection option, and when the super connection option is clicked in the second interface, a super connection interface is displayed, where the super connection interface includes a super connection function button; the super setting interface of the second device includes a super connection function button of the second device; and after the step of displaying a second interface, the method further comprises: displaying a current running interface of the target application , wherein a super connection function of each of the first device, the second device, and the third device is enabled, a target application is installed on each of the first device, the second device, and the third device, , and an icon of the target application is displayed through flickering, by the second device and the third device; disabling the super connection function of the first device in response to the user clicking the super connection function button in the super connection interface, wherein when the first device displays the current running interface of the target application, the second device and the third device do not display the icon of the target application; enabling the super connection function of the first device in response to the user clicking the super connection function button in the super connection interface; and disabling the super connection function of the second device in response to the user clicking the super connection function button in the super setting interface of the second device; wherein when the first device displays the current running interface of the target application, the second device does not display the icon of the target application, and the third device displays the icon of the target application.

In yet another possible implementation, the options of the plurality of coordination services further include a super notification option, and when the super notification option is clicked in the second interface, a super notification interface is displayed, where the super notification interface includes a super notification function button; the super setting interface of the second device includes a super notification function button of the second device; and after the step of displaying a second interface, the method further comprises: receiving first notification information, wherein a super notification function of each of the first device, the second device, and the third device is enabled, and the first notification information is displayed by the second device and the third device; disabling the super notification function of the first device in response to the user clicking the super notification function button in the super notification interface, wherein after second notification information is received, the second device and the third device do not display the second notification information; enabling the super notification function of the first device in response to the user clicking the super notification function button in the super notification interface; and disabling the super notification function of the second device in response to the user clicking the super notification function button in the super setting interface of the second device; wherein after third notification information is received, the second device does not display the third notification information, and the third device displays the third notification information.

In still yet another possible implementation, the super notification interface further includes a plurality of application options, and the plurality of application options include a first application option and a second application option; the first notification information is notification information of a first application or a second application; and after the step of receiving first notification information, and displaying, by the second device and the third device, the first notification information, the method further comprises: in response to the user clicking the first application option in the super notification interface, disabling a super call function corresponding to the first application; wherein after fourth notification information of the first application is received, the second device and the third device do not display the fourth notification information; and after fifth notification information of the second application is received, the second device and the third device display the fifth notification information.

In a further possible implementation, the options of the plurality of coordination services further include a super keyboard and mouse option, when the super keyboard and mouse option is clicked in the second interface, a super keyboard and mouse interface is displayed, where the super keyboard and mouse interface includes a super keyboard and mouse function button; the super setting interface of the second device includes a super keyboard and mouse function button of the second device; and after the step of displaying a second interface, the method further comprises: when an input device sharing instruction of the second device is received, displaying a cursor corresponding to an input device of the second device, wherein a super keyboard and mouse function of each of the first device, the second device, and the third device is enabled; disabling the super keyboard and mouse function of the first device in response to the user clicking the super keyboard and mouse function button in a super keyboard and mouse interface of the first device, and not displaying the cursor corresponding to the input device of the second device, where an icon of the first device is not displayed in a super keyboard and mouse interface of the second device; and enabling the super keyboard and mouse function of the first device in response to the user clicking the super keyboard and mouse function button in the super keyboard and mouse interface of the first device, where the icon of the first device is displayed in the super keyboard and mouse interface of the second device.

In a still further possible implementation, after the step of disabling the super call function of the second device, the method further comprises: sending prompt information of a status modification of the super call function to the second device, wherein the second device present the prompt information in a hovering manner, in response to an operation of the user clicking the prompt information, the second device display a coordination setting interface of the second device, the coordination setting interface includes a super call option of the second device, and the super call function of the second device is disabled.

According to a second aspect, wherein the second aspect and any of its implementations and options below are not claimed, this technical description also describes a coordination control apparatus, applied to a first device, the first device establishing a communication connection to a second device, the first device establishing a communication connection to a third device, and including: a first display module, a second display module, a receiving module, a first disabling module, an enabling module, and a second disabling module, where the first display module is configured to display a first interface, where the first interface includes a plurality of setting options, and the plurality of setting options include a super terminal option;

the second display module is configured to: display a second interface in response to a user clicking the super terminal option in the first interface, where the second interface includes options of a plurality of coordination services, the options of the plurality of coordination services include a super call option, the second interface further includes a my device list, and the my device list includes a second device option and a third device option; display a super call interface when the super call option is clicked in the second interface, where the super call interface includes a super call function button; and display a super setting interface of the second device when the second device option is clicked in the second interface, where the super setting interface of the second device includes a super call function button of the second device;
the receiving module is configured to receive a first incoming call request when a super call function of each of the first device, the second device, and the third device is enabled, where the second device and the third device display the first incoming call request;
the first disabling module is configured to disable the super call function of the first device in response to the user clicking the super call function button in the super call interface, where after a second incoming call request is received, the second device and the third device do not display the second incoming call request; the enabling module is configured to enable the super call function of the first device in response to the user clicking the super call function button in the super call interface; and
the second disabling module is configured to disable the super call function of the second device in response to the user clicking the super call function button in the super setting interface of the second device, where after a third incoming call request is received, the second device does not display the third incoming call request, and the third device displays the third incoming call request.

According to a third aspect according to the invention, the invention also provides an electronic device, including: one or more processors; a memory; and one or more computer programs, where the one or more computer programs are stored in the memory, the one or more computer programs include instructions, and when the instructions are executed by the electronic device, the electronic device is enabled to perform the coordination control method according to any one of the first aspect or the possible implementations of the first aspect.

According to a fourth aspect according to the invention, the invention further provides a computer-readable storage medium, where the computer-readable storage medium stores a computer program, and when the computer program is executed by a processor, the processor is enabled to perform the coordination control method according to any one of the first aspect or the possible implementations of the first aspect.

According to a fifth aspect, wherein the fifth aspect and any of its implementations and options below are not claimed, this technical description also describes a chip, where the chip includes a processor and a data interface, and the processor reads, through the data interface, instructions stored in a memory, to perform the coordination control method according to any one of the first aspect or the possible implementations of the first aspect.

Optionally, in a possible implementation, the chip may further include a memory, where the memory stores instructions, the processor is configured to execute the instructions stored in the memory, and when the instructions are executed, the processor is configured to perform the coordination control method according to any one of the first aspect or the possible implementations of the first aspect.

### BRIEF DESCRIPTION OF DRAWINGS

FIG. 1 is a schematic scenario diagram of performing coordination control in a conventional technology;
FIG. 2 is a schematic diagram of a structure of an electronic device according to an embodiment of this application;
FIG. 3 is a block diagram of a software structure of an electronic device according to an embodiment of this application;
FIG. 4 is a schematic diagram of an application scenario of a coordination control method according to an embodiment of this application;
FIG. 5 is a schematic scenario diagram of a first interface in a coordination control method according to an embodiment of this application;
FIG. 6 is a schematic scenario diagram of a second interface in a coordination control method according to an embodiment of this application;
FIG. 7A is a schematic scenario diagram of a super connection interface of a first mobile phone in a coordination control method according to an embodiment of this application;
FIG. 7B is a schematic scenario diagram of a super call interface of a first mobile phone in a coordination control method according to an embodiment of this application;
FIG. 7C is a schematic scenario diagram of a super notification interface of a first mobile phone in a coordination control method according to an embodiment of this application;
FIG. 7D is a schematic scenario diagram of a super keyboard and mouse interface of a first mobile phone in a coordination control method according to an embodiment of this application;
FIG. 8A is a schematic scenario diagram of a super setting interface of a tablet computer in a coordination control method according to an embodiment of this application;
FIG. 8B is a schematic scenario diagram of a super setting interface of a notebook computer in a coordination control method according to an embodiment of this application;
FIG. 8C is a schematic scenario diagram of a super setting interface of a smart screen in a coordination control method according to an embodiment of this application;
FIG. 8D is a schematic scenario diagram of a super setting interface of a second mobile phone in a coordination control method according to an embodiment of this application;
FIG. 9 is a schematic scenario diagram of a super connection interface of a first mobile phone in a coordination control method according to another embodiment of this application;
FIG. 10 is a schematic scenario diagram of a running interface of a notebook computer in a coordination control method according to an embodiment of this application;
FIG. 11 is a schematic scenario diagram of a running interface of a notebook computer in a coordination control method according to another embodiment of this application;
FIG. 12 is a schematic scenario diagram of a super call interface of a first mobile phone in a coordination control method according to another embodiment of this application;
FIG. 13 is a schematic scenario diagram of a super notification interface of a first mobile phone in a coordination control method according to another embodiment of this application;
FIG. 14 is a schematic scenario diagram of a super keyboard and mouse interface of a first mobile phone in a coordination control method according to another embodiment of this application;
FIG. 15 is a schematic scenario diagram of a super setting interface of a tablet computer in a coordination control method according to another embodiment of this application;
FIG. 16 is a schematic scenario diagram of a super setting interface of a notebook computer in a coordination control method according to another embodiment of this application;
FIG. 17 is a schematic scenario diagram of a super setting interface of a smart screen in a coordination control method according to another embodiment of this application;
FIG. 18 is a schematic scenario diagram of a super setting interface of a second mobile phone in a coordination control method according to another embodiment of this application;
FIG. 19 is a schematic scenario diagram of a second interface in a coordination control method according to another embodiment of this application;
FIG. 20 is a schematic scenario diagram of a third interface of a tablet computer in a coordination control method according to an embodiment of this application;
FIG. 21 is a schematic scenario diagram of a coordination setting interface of a tablet computer in a coordination control method according to an embodiment of this application;
FIG. 22 is a schematic scenario diagram of a super notification interface of a tablet computer in a coordination control method according to an embodiment of this application;
FIG. 23 is a schematic scenario diagram of a super notification interface of a tablet computer in a coordination control method according to another embodiment of this application;
FIG. 24 is a schematic scenario diagram of a super notification interface of a tablet computer in a coordination control method according to still another embodiment of this application;
FIG. 25 is a schematic scenario diagram of a fourth interface of a notebook computer in a coordination control method according to an embodiment of this application;
FIG. 26 is a schematic scenario diagram of a notebook computer coordination interface of a notebook computer in a coordination control method according to an embodiment of this application;
FIG. 27 is a schematic scenario diagram of a coordination setting interface of a notebook computer in a coordination control method according to an embodiment of this application;
FIG. 28 is a schematic scenario diagram of a super call interface of a notebook computer in a coordination control method according to an embodiment of this application;
FIG. 29 is a schematic scenario diagram of a super keyboard and mouse interface of a notebook computer in a coordination control method according to an embodiment of this application;
FIG. 30 is a schematic scenario diagram of a fifth interface of a smart screen in a coordination control method according to an embodiment of this application;
FIG. 31 is a schematic scenario diagram of a coordination setting interface of a smart screen in a coordination control method according to an embodiment of this application;
FIG. 32 is a schematic scenario diagram of a sixth interface of a second mobile phone in a coordination control method according to an embodiment of this application;
FIG. 33 is a flowchart of a coordination control method according to another embodiment of this application; and
FIG. 34 is a schematic diagram of a structure of a coordination control apparatus according to this application.

### DESCRIPTION OF EMBODIMENTS

In the specification, claims, and accompanying drawings of this application, the terms "first", "second", "third", and the like are intended to distinguish between different objects, but do not indicate a particular order. In embodiments of this application, words such as "exemplary" or "for example" are used to indicate an example, an instance, or descriptions. Any embodiment or design scheme described as " exemplary" or "for example" in the embodiments of this application should not be explained as being more preferred or having more advantages than another embodiment or design scheme. To be precise, use of the term such as "exemplary" or "for example" is intended to present a related concept in a specific manner.

For clear and concise descriptions of the following embodiments, a brief introduction to an implementation solution of coordination control is first provided.

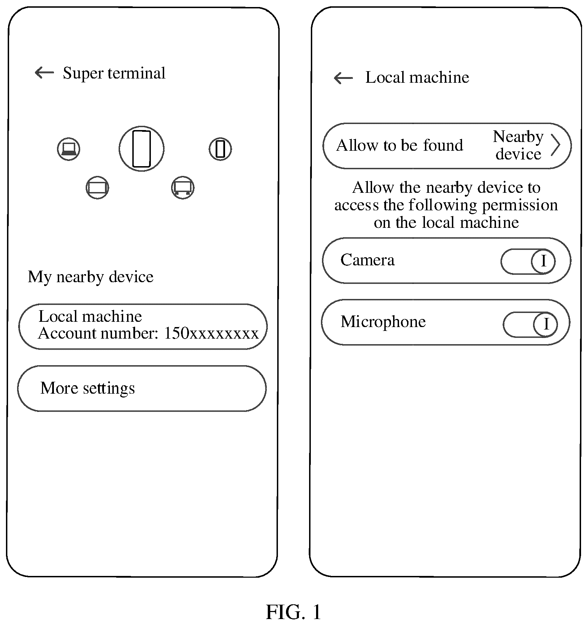

Currently, a terminal such as a mobile phone or a tablet computer is basically loaded with an application program having a setting and communication function, such as a setting, WI-FI, or Bluetooth. A communication connection may be established to a coordination device through WI-FI or Bluetooth, and a user can perform coordination control on a plurality of devices through the communication connection. FIG. 1 is a schematic scenario diagram of performing coordination control in a conventional technology. In the conventional technology, a coordination control interface can display only a coordination device and cannot display a first device coordination status of the coordination device. When a user needs to perform coordination, if the coordination device does not currently have a coordinative condition, for example, the coordination device is too far from a current device to transmit data, when the user clicks the coordination device for coordination, the coordination cannot be performed, thereby affecting user experience.

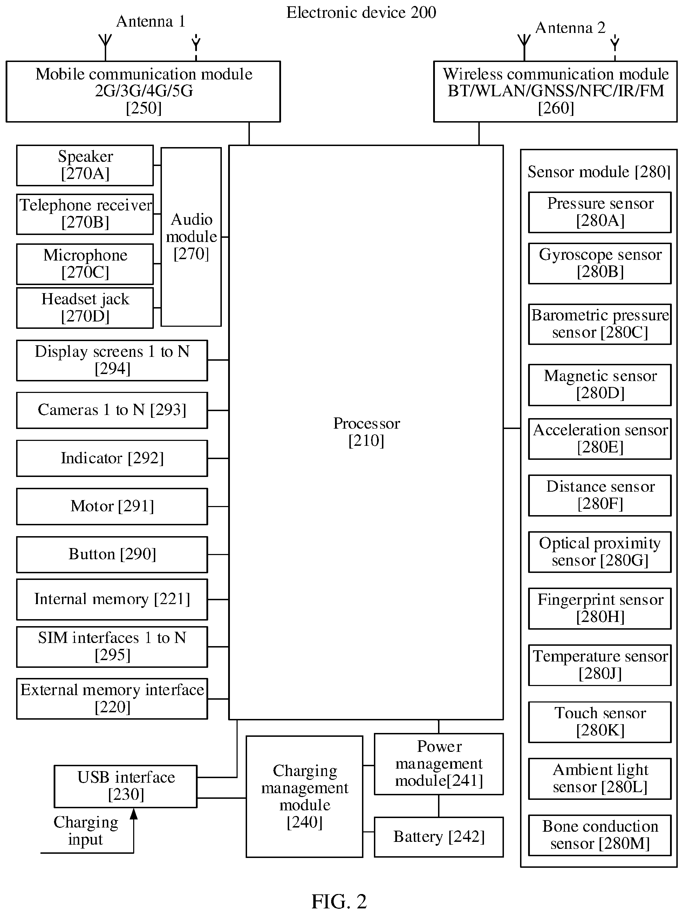

In view of the problem in the above technical solution, this application provides a coordination control method, so that whether a coordination device has a coordinative condition can be determined by displaying a first device coordination status, to ensure that the coordination device selected by a user for coordination has the coordinative condition, thereby enhancing user experience. The provided coordination control method may be applied to an electronic device such as a mobile phone, a tablet computer, a desktop computer, a laptop computer, a notebook computer, an ultra-mobile personal computer (ultra-mobile personal computer, UMPC), a handheld computer, a netbook, a personal digital assistant (Personal Digital Assistant, PDA), a wearable electronic device, or a smartwatch. A structure of the electronic device to which the coordination control method is applied may be shown in FIG. 2.

FIG. 2 is a composition example diagram of an electronic device according to this application. An electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a telephone receiver 270B, a microphone 270C, a headset jack 270D, a sensor module 280, a key 290, a motor 291, an indicator 292, a camera 293, a display screen 294, a subscriber identity module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the schematic structure in this embodiment constitutes no specific limitation on the electronic device 200. In some other embodiments, the electronic device 200 may include more or fewer components than those shown in the figure, or some components may be combined, or some components may be split, or components are arranged in different manners. The components shown in the figure may be implemented by hardware, software, or a combination of software and hardware.

The processor 210 may include one or more processing units, for example: the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent devices, or may be integrated into one or more processors. The controller may be a nerve center and a command center of the electronic device 200. The controller may generate an operation control signal based on an instruction operation code and a time sequence signal, to control instruction reading and instruction execution.

A memory may be further disposed in the processor 210, and is configured to store instructions and data. In some embodiments, the memory in the processor 210 is a cache. The memory may save instructions or data that has just been used or cyclically used by the processor 210. If the processor 210 needs to use the instructions or the data again, the processor may directly invoke the instructions or the data from the memory. This avoids repeated access, and reduces a waiting time of the processor 210, thereby increasing system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). The I2S interface may be configured to perform audio communication. The PCM interface may also be configured to perform audio communication, to sample, quantize, and encode an analog signal. The UART interface is a universal serial data bus and is configured to perform asynchronous communication. The bus may be a bidirectional communication bus. The bus converts to-be-transmitted data between serial communication and parallel communication. The MIPI may be configured to connect the processor 210 and a peripheral device such as the display screen 294 or the camera 293. The MIPI includes a camera serial interface (camera serial interface, CSI), a display serial interface (display serial interface, DSI), and the like. The GPIO interface may be configured by software. The GPIO interface may be configured as a control signal or a data signal. The USB interface 230 is an interface that conforms to a USB standard specification, and may be specifically a mini USB interface, a micro USB interface, a USB TypeC interface, or the like.

It may be understood that a schematic interface connection relationship between the modules in this embodiment is merely a schematic description, and constitutes no limitation on the structure of the electronic device 200. In some other embodiments of this application, the electronic device 200 may alternatively use an interface connection manner different from that in the foregoing embodiment, or use a combination of a plurality of interface connection manners.

The charging management module 240 is configured to receive a charging input from a charger. The charger may be a wireless charger or a wired charger.

The power management module 241 is configured to connect to the battery 242, the charging management module 240, and the processor 210. The power management module 241 receives an input from the battery 242 and/or an input from the charging management module 240, and supplies power to the processor 210, the internal memory 221, the display screen 294, the camera 293, the wireless communication module 260, and the like. The power management module 241 may be further configured to monitor parameters such as a battery capacity, a cycle count of a battery, and a state of health of the battery (leakage and impedance).

A wireless communication function of the electronic device 200 may be implemented by using the antenna 1, the antenna 2, the mobile communication module 250, the wireless communication module 260, the modem processor, the baseband processor, and the like. The antenna 1 and the antenna 2 are configured to: transmit and receive an electromagnetic wave signal. Each antenna in the electronic device 200 may be configured to cover one or more communication frequency bands. Different antennas may be reused to increase antenna utilization.

The mobile communication module 250 may provide a wireless communication solution that includes 2G, 3G, 4G, 5G, or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave by using the antenna 1, perform processing such as filtering or amplification on the received electromagnetic wave, and transmit the electromagnetic wave to the modem processor for demodulation. The mobile communication module 250 may further amplify a signal modulated by the modem processor, and convert, by using the antenna 1, the signal into an electromagnetic wave for radiation.

The modem processor may include a modulator and a demodulator. The modulator is configured to modulate a to-be-sent low-frequency baseband signal into an intermediate-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (this is not limited to the speaker 270A, the telephone receiver 270B, and the like), or displays an image or a video through the display screen 294.

The wireless communication module 260 may provide a wireless communication solution that includes a wireless local area network (wireless local area networks, WLAN) (for example, a wireless fidelity (wireless fidelity, Wi-Fi) network), Bluetooth (bluetooth, BT), and a global navigation satellite system (global navigation satellite system, GNSS), frequency modulation (frequency modulation, FM), a near field communication (near field communication, NFC) technology, an infrared (infrared, IR) technology, and the like and that is applied to the electronic device 200. The wireless communication module 260 may be one or more devices integrating at least one communication processing module. The wireless communication module 260 receives an electromagnetic wave by using the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the to-be-sent signal, and convert, by using the antenna 2, the to-be-sent signal into an electromagnetic wave for radiation.

In some embodiments, the antenna 1 of the electronic device 200 is coupled to the mobile communication module 250, and the antenna 2 is coupled to the wireless communication module 260, so that the electronic device 200 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 200 implements a display function by using the GPU, the display screen 294, the application processor, and the like. The GPU is a microprocessor for image processing and connects the display screen 294 and the application processor. The GPU is configured to: perform mathematical and geometric calculation, and render graphics. The processor 210 may include one or more GPUs, and the GPUs execute program instructions to generate or change display information.

The display screen 294 is configured to display an image, a video, or the like. The display screen 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniled, a microled, a micro-oled, a quantum dot light emitting diode (quantum dot light emitting diodes, QLED), and the like. In some embodiments, the electronic device 200 may include one or N display screens 294, where N is a positive integer greater than 1.

A series of graphical user interfaces (graphical user interface, GUI) may be displayed on the display screen 294 of the electronic device 200, and these GUIs are main screens of the electronic device 200. Generally, a size of the display screen 294 of the electronic device 200 is fixed, and only a limited quantity of controls can be displayed in the display screen 294 of the electronic device 200. A control is a GUI element, is a software component included in an application program, and controls all data processed by the application program and an interaction operation with these data, and a user may interact with the control through a direct manipulation (direct manipulation), to read or edit related information of the application program. Generally, the control may include a visual interface element such as an icon, a key, a menu, a tab, a text box, a dialog box, a status bar, a navigation bar, or a widget.

The electronic device 200 may implement a photographing function by using the ISP, the camera 293, the video codec, the GPU, the display screen 294, the application processor, and the like. The ISP is configured to process data fed back by the camera 293. For example, during photographing, a shutter is pressed, light is transferred to a photosensitive element of the camera through a lens, an optical signal is converted into an electrical signal, and the photosensitive element of the camera transfers the electrical signal to the ISP for processing, to convert the electrical signal into a visible image. The ISP may further perform algorithm optimization on noise, brightness, or a complexion of the image. The ISP may further optimize a parameter such as exposure or a color temperature in a photographing scenario.

The camera 293 is configured to capture a static image or a video. An optical image of an object is generated through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal. For example, when the electronic device 200 performs frequency selection, the digital signal processor is configured to perform Fourier transform or the like on frequency energy.

The video codec is configured to: compress or decompress a digital video. The electronic device 200 may support one or more video codecs. In this way, the electronic device 200 may play or record videos in a plurality of encoding formats, such as moving picture experts group (moving picture experts group, MPEG) 1, MPEG 2, MPEG 3, and MPEG 4. The NPU is a neural-network (neural-network, NN) computing processor that rapidly processes input information by referring to a structure of a biological neural network, for example, by referring to a transmission mode between human brain neurons, and may further perform self-learning continuously.

The external memory interface 220 may be configured to connect to an external storage card, for example, a micro SD card, to expand a storage capability of the electronic device 200. The external memory card communicates with the processor 210 through the external memory interface 220, to implement a data storage function. For example, a file such as music or a video is stored in the external storage card.

The internal memory 221 may be configured to store computer-executable program code. The executable program code includes instructions. The processor 210 runs the instructions stored in the internal memory 221, to implement various functional applications and data processing of the electronic device 200. For example, in this embodiment, the processor 210 may enable or disable a coordination service by executing the instructions stored in the internal memory 221. The internal memory 221 may include a program storage area and a data storage area. The program storage area may store an operating system, an application program required by at least one function (such as a voice playing function and an image playing function), and the like. The data storage area may store data (such as audio data or a phone book) created in a process of using the electronic device 200, and the like. In addition, the internal memory 221 may include a high-speed random access memory, or may include a non-volatile memory such as at least one magnetic disk memory, a flash memory, or a universal flash storage (universal flash storage, UFS). The processor 210 runs the instructions stored in the internal memory 221 and/or the instructions stored in the memory disposed in the processor, to execute various function applications and data processing of the electronic device 200.

The electronic device 200 may implement an audio function by using the audio module 270, the speaker 270A, the telephone receiver 270B, the microphone 270C, the headset jack 270D, the application processor, and the like, such as playing music or recording. The audio module 270 is configured to convert digital audio information into an analog audio signal for output, and is also configured to convert an analog audio input into a digital audio signal. The audio module 270 may be further configured to: encode and decode an audio signal. The speaker 270A, also referred to as a "horn", is configured to convert an audio electrical signal into a sound signal. The telephone receiver 270B, also referred to as an "earphone", is configured to convert an audio electrical signal into a sound signal. The microphone 270C, also referred to as a "mike" or a "microphone", is configured to convert a sound signal into an electrical signal. The headset jack 270D is configured to connect to a wired headset. The headset jack 270D may be a USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display screen 294. There are a plurality of types of pressure sensors 280A, such as a resistive pressure sensor, an inductive pressure sensor, and a capacitive pressure sensor.

The gyroscope sensor 280B may be configured to determine a motion posture of the electronic device 200. The barometric pressure sensor 280C is configured to measure atmospheric pressure. The magnetic sensor 280D includes a Hall sensor. The acceleration sensor 280E may detect an acceleration value of the electronic device 200 in all directions (generally triaxially). The distance sensor 280F is configured to measure a distance. The optical proximity sensor 280G may include, for example, a light-emitting diode (LED), an optical detector, and a photodiode. The light-emitting diode may be an infrared light-emitting diode. The ambient light sensor 280L is configured to sense brightness of ambient light. The fingerprint sensor 280H is configured to collect a fingerprint. The electronic device 200 may implement fingerprint unlock, application lock accessing, fingerprint photographing, fingerprint-based call answering, and the like by using a feature of the collected fingerprint. The temperature sensor 280J is configured to detect temperature. The touch sensor 280K is also referred to as a "touch device". The touch sensor 280K may be disposed on the display screen 294. The touch sensor 280K and the display screen 294 form a touchscreen that is also referred to as a "touch control screen". The bone conduction sensor 280M may obtain a vibration signal. The audio module 270 may obtain a speech signal through parsing based on a vibration signal, of a vibration bone of a vocal-cord part, that is obtained by the bone conduction sensor 280M, to implement a speech function. The application processor may parse heart rate information based on a blood pressure beating signal obtained by the bone conduction sensor 280M, to implement a heart rate detection function.

The button 290 includes a power button, a volume button, or the like. The button 290 may be a mechanical button, or may be a touch button. The motor 291 may generate a vibration prompt. The motor 291 may be configured to provide an incoming call vibration prompt, or may be configured to provide a touch vibration feedback. The indicator 292 may be an indicator light, and may be configured to indicate a charging status or a change in a quantity of electricity, or may be configured to indicate a message, a missed call, a notification, or the like.

The SIM card interface 295 is configured to connect to a SIM card. The SIM card may be inserted into or plugged from the SIM card interface 295, to come into contact with or be separated from the electronic device 200. The electronic device 200 may support one or N SIM card interfaces, where N is a positive integer greater than 1. The SIM card interface 295 may support a nano SIM card, a micro SIM card, a SIM card, or the like. A plurality of cards may be inserted into a same SIM card interface 295 at the same time. The plurality of cards may be of a same type or different types. The SIM card interface 295 may be further compatible with different types of SIM cards. The SIM card interface 295 may alternatively be compatible with an external memory card. The electronic device 200 interacts with a network by using a SIM card, to implement functions such as a call and data communication. In some embodiments, the electronic device 200 uses an eSIM, in other words, an embedded SIM card. The eSIM card may be embedded in the electronic device 200 and cannot be separated from the electronic device 200.

In addition, an operating system runs on the foregoing components, for example, a Hongmeng system, an iOS operating system, an Android operating system, or a Windows operating system. An application program may be installed and run on the operating system.

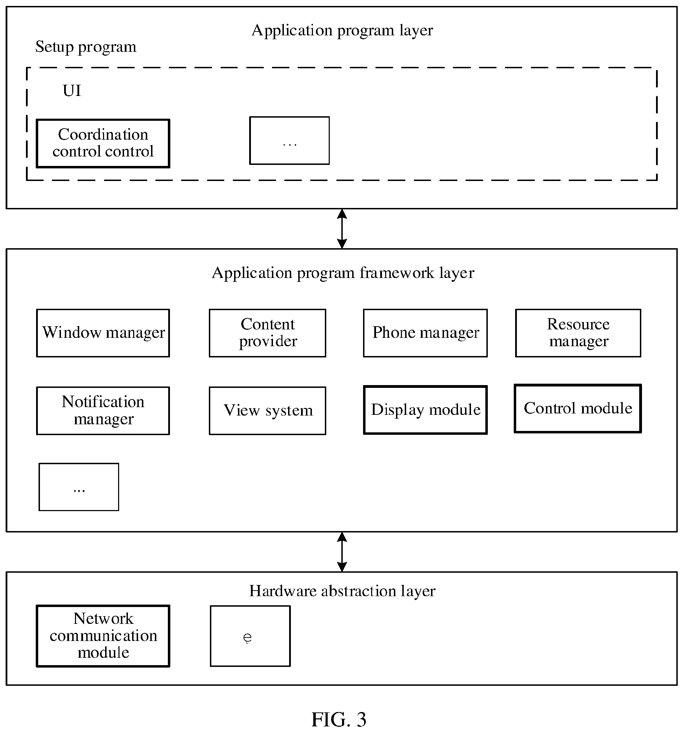

FIG. 3 is a block diagram of a software structure of an electronic device according to an embodiment of this application.

In a hierarchical architecture, software is divided into several layers, and each layer has a clear role and task. The layers communicate with each other through a software interface. In some embodiment of this application, the software architecture of the electronic device includes at least three layers: an application program layer, an application program framework layer, and a hardware abstraction layer respectively from top to bottom. The application program layer may include a series of application program packages. The application program packages may include application programs such as camera, photos, calendar, phone, maps, navigation, WLAN, Bluetooth, music, videos, and SMS messages. In this embodiment this application, a setup program is included in the application program layer, and may include a coordination control control. The coordination control control may be used to display content that needs to be presented, such as a coordination service or a coordination device, on a UI interface of the electronic device.

The application program framework layer provides an application programming interface (application programming interface, API) and a programming framework for an application program at the application program layer. The application program framework layer includes some predefined functions. As shown in FIG. 3, the application program framework layer may include a window manager, a content provider, a view system, a phone manager, a resource manager, a notification manager, and the like. For example, in some embodiments of this application, the application program framework layer may further include a display module and a control module. The display module may display a coordination service of the device and a first device coordination status of the coordination device. In an implementation scenario of a coordination control solution, the display module displays the coordination status of the coordination service of the device and the first device coordination status of the coordination device; and may further display coordination services and coordination statuses of various coordination devices, and determine, by displaying the first device coordination status, whether the coordination devices have a coordinative condition, to ensure that a coordination device selected by a user for coordination have the coordinative condition, thereby enhancing user experience. When receiving a status switching instruction corresponding to the coordination device of the coordination device, the control module controls the coordination device to switch a coordination status of the corresponding coordination service, to implement cross-device management on the coordination device.

The window manager is configured to manage a window program. The window manager may obtain a size of a display screen, determine whether there is a status bar, perform screen locking, take a screenshot of a screen, and the like. The content provider is configured to: store and obtain data, and make the data accessible to an application program. The data may include a video, an image, audio, calls that are made and answered, a browsing history and a bookmark, a phone book, and the like. The view system includes visual controls, for example, a control for displaying a text and a control for displaying an image. The view system may be configured to construct an application program. A display interface may include one or more views. For example, a display interface including a short message service message notification icon may include a view for displaying a text and a view for displaying an image.

The phone manager is configured to provide a communication function of the electronic device, for example, call status management (including getting through, hang-up, and the like).

The resource manager provides various resources for an application program, such as a localized character string, an icon, an image, a layout file, and a video file.

The notification manager enables an application program to display notification information in a status bar, and may be configured to convey a notification-type message. The displayed notification information may automatically disappear after a short stay without a user interaction. For example, the notification manager is configured to notify download completion, provide a message reminder, and the like. The notification manager may alternatively be a notification that appears in a top status bar of a system in a form of a graph or a scroll bar text, for example, a notification of an application program running in the background, or a notification that appears on a screen in a form of a dialog window. For example, text information is prompted in the status bar, an alert tone is produced, the electronic device vibrates, or an indicator light flickers.

The hardware abstraction layer is an interface layer between an operating system kernel of the electronic device 200 and a hardware circuit, and is used to abstract hardware. In some embodiments of this application, the hardware abstraction layer includes a network communication module. The network communication module may be configured to detect whether the electronic device 200 is in a networked state. The networked state in this application is that the electronic device 200 can communicate with another electronic device through the above mobile communication module 250 or wireless communication module 260. The communication may occur either over a closed local area network or through the Internet.

For ease of understanding, in the following embodiments of this application, the electronic device 200 having the structures shown in FIG. 2 and FIG. 3 is used as an example, and with reference to the accompanying drawings and application scenarios, the coordination control method provided in embodiments of this application is described in detail.

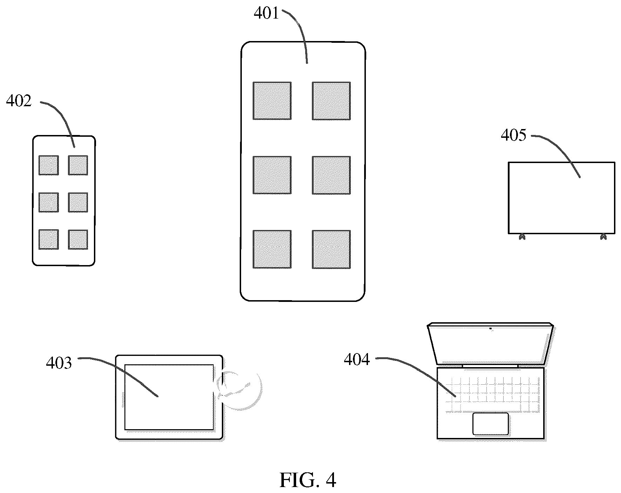

FIG. 4 is a schematic diagram of an application scenario of a coordination control method according to an embodiment of this application. The application scenario includes a first mobile phone 401, a second mobile phone 402, a tablet computer 403, a notebook computer 404, and a smart screen 405, and a wifi connection is established to each other. FIG. 4 shows an example of the diagram of the application scenario. A device icon located in a central area of FIG. 4 is an icon of the first mobile phone 401, and device icons located around the icon of the first mobile phone 401 are respectively device icons of the second mobile phone 402, the tablet computer 403, the notebook computer 404, and the smart screen 405.

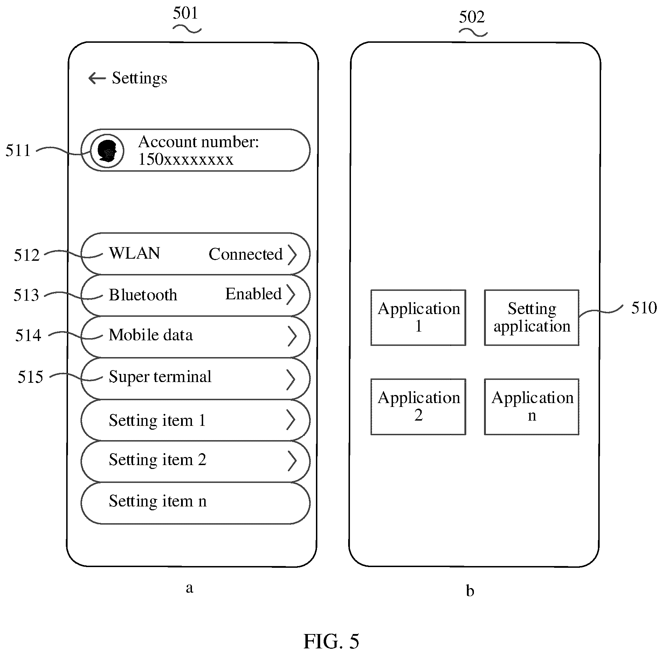

The first mobile phone 401 displays a first interface. FIG. 5a shows an example of a first interface 501. The first interface may be a setting interface. For example, a user clicks a setting application on a desktop of the first mobile phone 401 to proceed the first interface 501. FIG. 5b is a schematic diagram of a desktop 502 of the first mobile phone 401 that has the first interface 501. The first mobile phone 401 displays the first interface 501 in response to an operation used to clicking a setting application 510 on a desktop 502. An example of the setting interface of the first mobile phone 401 is used in FIG. 5a. The second mobile phone 402, the tablet computer 403, the notebook computer 404, and the smart screen 405 may also have a similar interface. The first interface includes a plurality of setting options, as shown in FIG. 5, including an account number option 511, a WLAN option 512, a Bluetooth option 513, a mobile data option 514, a super terminal option 515, and the like.

The account number option 511 may display an account (a mobile phone number or the like) to which login is currently performed on the first mobile phone 401, and the user may click the account number option 511 to perform operations such as logging in to and logging out of the account number. In response to the operation of the user clicking the account number option 511, the first mobile phone 401 may display an account number login interface. The account number login interface may include an account/password entering area and an account logout option. The user may enter the account number and a corresponding password in the account/password entering area of the account number login interface, to perform a login operation of the account number, or may click the account logout option in the account login interface to log out of the account number to which login is currently performed. The user may click the WLAN option 512 to perform an operation, for example, enabling/disabling a WLAN, or a connection to and a disconnection from a WI-FI network. In response to the operation of the user clicking the WLAN option 512, the first mobile phone 401 may display a network selection interface including a WLAN function enabling/disabling option and a WI-FI network currently found by the first mobile phone 401. The user may select, through a WI-FI network in the network selection interface, a WI-FI network currently to be accessed by the first mobile phone 401, or click the WLAN function enabling/disabling option to enable or disable a function corresponding to the WLAN option. The user may click the Bluetooth option 513 to perform operations such as enabling or disabling Bluetooth and selecting a device to which the first mobile phone 401 establishes a Bluetooth connection. In response to the operation of the user clicking the Bluetooth option 513, the first mobile phone 401 may display a Bluetooth interface, and the Bluetooth interface may include a Bluetooth function enabling/disabling option and a device name currently found by the first mobile phone 401 through a Bluetooth function. The user may click the Bluetooth function enabling/disabling option to enable or disable the Bluetooth function, or click the device name. In response to the clicking operation of the user clicking the device name, the first mobile phone 401 establishes a Bluetooth connection to the device corresponding to the click operation, so that the device corresponding to the click operation can perform Bluetooth communication with the first mobile phone 401. The user may click the mobile data option 514 to enable or disable a mobile data network. In response to the operation of the user clicking the mobile data option 514, the first mobile phone 401 may display a mobile data interface. The mobile data interface may include an airplane mode option, a data option, a personal hotspot option, and the like. The user may click the airplane mode option to enable or disable a flight mode of the first mobile phone 401, click the data option to enable or disable the mobile data network of the first mobile phone 401, and click the personal hotspot option to enable or disable a personal hotspot of the first mobile phone 401.

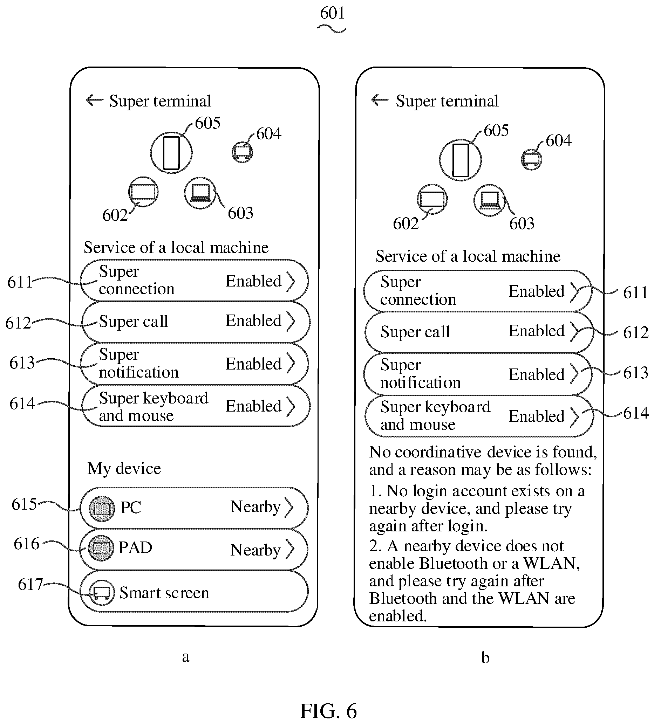

In response to the user clicking the super terminal option 515 in the first interface 501, the first mobile phone displays a second interface. FIG. 6 shows an example of a second interface 601. The second interface 601 includes a trust ring. The trust ring is a display area formed by icons of devices on which the same account number as the first mobile phone is logged in to and that have enabled a super terminal function. For example, in FIG. 4, each of the tablet computer 403, the notebook computer 404, and the smart screen 405 is the device on which the same account number as the first mobile phone 401 is logged in to and that has enabled the super terminal function, and the trust ring in the second interface 601 includes a first mobile phone icon 605 of the first mobile phone 401, a tablet computer icon 602 of the PAD 403, a notebook computer icon 603 of the PC 404, and a smart screen icon 604 of the smart screen 405. The first mobile phone icon 605 is a device icon in a center of the trust ring, and the notebook computer icon 603, the tablet computer icon 602, and the smart screen icon 604 are, in turn, device icons in a ring-like area in the trust ring. In an implementation, another icon may alternatively be displayed in the trust ring, for example, an icon of a device on which the same account number as the first mobile phone is logged in to and that has not enabled a super terminal function, an icon of a device on which the same account number as the first mobile phone is not logged in to and that has enabled a super terminal function, or an icon of a device on which the same account number as the first mobile phone is not logged in to and that has not enabled a super terminal function. In the trust ring of the second interface 601, the first mobile phone 401 has currently enabled Bluetooth and WI-FI, and the PC (the tablet computer 403) and the PAD (the notebook computer 404) has currently enabled Bluetooth and WI-F. That is, the tablet computer 403 and the notebook computer 404 are devices that may currently coordinate with the first mobile phone 401. The smart screen 405 has not currently enabled Bluetooth or WI-FI. That is, the smart screen 405 is a device that may not currently coordinate with the first mobile phone 401. The notebook computer icon 603, the tablet computer icon 602, and the smart screen icon 604 can be discriminately displayed. For example, an area of the notebook computer icon 604 and an area of the tablet computer icon 603 are both greater than an area of the smart screen icon 605, and/or a distance between the notebook computer icon 604 and the first mobile phone icon 606 and a distance between the tablet computer icon 603 and the first mobile phone icon 606 are both less than a distance between the smart screen icon 605 and the first mobile phone icon 606.

The second interface 601 further includes options of a plurality of coordination services. As shown in FIG. 6, the coordination services include a super connection option 611, a super call option 612, a super notification option 613, and a super keyboard and mouse option 614 among services of the first mobile phone 401. The super connection option 611 includes a name "super connection" and status information of a super connection function. If the super connection function is enabled, the status information of the super connection function is "enabled"; otherwise, the status information of the super connection function is "disabled". The super call option 612 includes a name "super call" and status information of a super call function. If the super call function is enabled, the status information of the super call function is "enabled"; otherwise, the status information of the super call function is "disabled". The super notification option 613 includes a name "super notification" and status information of a super notification function. If the super notification function is enabled, the status information of the super notification function is "enabled"; otherwise, the status information of the super notification function is "disabled". The super keyboard and mouse option 614 includes a name "super keyboard and mouse" and status information of a super keyboard and mouse function. If the super keyboard and mouse function is enabled, the status information of the super keyboard and mouse function is "enabled"; otherwise, the status information of the super keyboard and mouse function is "disabled".

The second interface 601 further includes a my device list, and my devices include the tablet computer 403, the notebook computer 404, and the smart screen 405. The devices among the my devices and the first mobile phone 401 have currently enabled a coordination function and a super terminal function and a same account number is logged in to. If the first mobile phone currently finds a coordinative device, the second interface 601 is shown in FIG. 6a, and the my device list includes a PC (notebook computer) option 615, a PAD (tablet computer) option 616, and a smart screen option 617. In addition, the devices among the my devices are discriminately displayed based on a status of each device. The first mobile phone 401 has currently enabled Bluetooth and WI-FI, and the PC (tablet computer) 403 and the PAD (notebook computer) 404 have currently enabled Bluetooth and WI-FI. The PC option 615 and the PAD option 616 may be highlighted, and "nearby" may be displayed in an area corresponding to a device name of the PC and a device name of the PAD. The smart screen 405 is currently uncoordinative because the smart screen 405 has not enabled Bluetooth or WI-FI, and therefore, "nearby" is not displayed in an area corresponding to a device name in the smart screen option 617, to prompt the user with a device that is among the my devices and that can currently coordinate with the first mobile phone. If the first mobile phone does not currently find the coordinative device, the second interface 601 is shown in FIG. 6b. A reason why no coordinative device is found is displayed in the second interface, including that no login account exists on a nearby device, and please try again after login; or a nearby device does not enable Bluetooth or a WLAN, and please try again after Bluetooth and the WLAN are enabled.

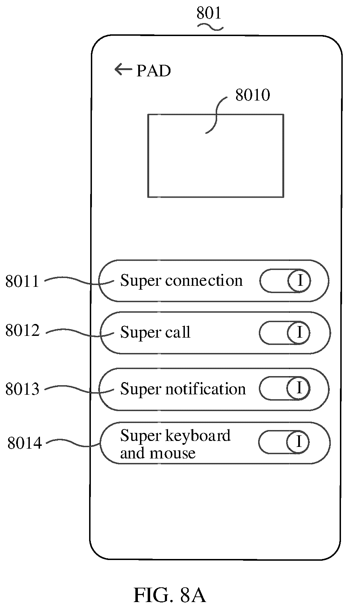

With reference to FIG. 6a and FIG. 8A, the PAD option 616 in FIG. 6a is described:

When the first mobile phone 401 displays the second interface 601, the user may click the PAD option 616 in the second interface 601, and in response to the user clicking the PAD option 616 in the second interface 601, the first mobile phone 401 displays a super setting interface of the tablet computer. FIG. 8A shows an example of the super setting interface 801 of the tablet computer. The super setting interface 801 of the tablet computer includes a tablet computer icon 8010, that is, a device icon displayed in an icon area at an upper portion of the super setting interface 801 of the tablet computer. The super setting interface 801 of the tablet computer further includes options of a plurality of coordination services of the tablet computer. As shown in FIG. 8A, the coordination services include a super connection option 8011, a super call option 8012, a super notification option 8013, and a super keyboard and mouse option 8014 of the tablet computer 403. The super connection option 8011 includes a name "super connection" and a status box of a super connection function. The super call option 8012 includes a name "super call" and a status box of a super call function. The super notification option 8013 includes a name "super notification" and a status box of a super notification function. The super keyboard and mouse option 8014 includes a name "super keyboard and mouse" and a status box of a super keyboard and mouse function. A selected identification in a corresponding status box is located on a right side when the coordination service of the tablet computer 403 is enabled, and the selected identification in the corresponding status box is located on a left side when the coordination service of the tablet computer 403 is disabled.

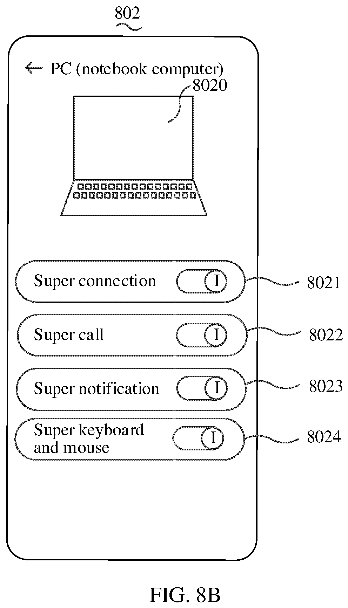

With reference to FIG. 6a and FIG. 8B, the PC option 615 in FIG. 6a is described:

When the first mobile phone 401 displays the second interface 601, the user may click the PC option 615 in the second interface 601, and in response to the user clicking the PC option 615 in the second interface 601, the first mobile phone 401 displays a super setting interface 802 of the notebook computer. FIG. 8B shows an example of the super setting interface 802 of the notebook computer. The super setting interface 802 of the notebook computer includes a notebook computer icon 8020, that is, a device icon displayed in an icon area at an upper portion of the super setting interface 802 of the notebook computer. The super setting interface 802 of the notebook computer further includes options of a plurality of coordination services of the notebook computer. As shown in FIG. 8B, the coordination services include a super connection option 8021, a super call option 8022, a super notification option 8023, and a super keyboard and mouse option 8024 of the notebook computer. The super connection option 8021 includes a name "super connection" and a status box of a super connection function. The super call option 8022 includes a name "super call" and a status box of a super call function. The super notification option 8023 includes a name "super notification" and a status box of a super notification function. The super keyboard and mouse option 8024 includes a name "super keyboard and mouse" and a status box of a super keyboard and mouse function. A selected identification in a corresponding status box is located on a right side when the coordination service of the notebook computer 404 is enabled, and the selected identification in the corresponding status box is located on a left side when the coordination service of the notebook computer 404 is disabled.

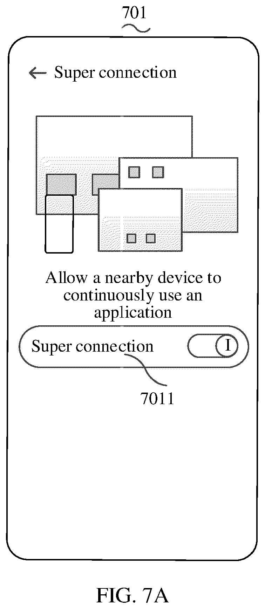

With reference to FIG. 6a, FIG. 7A, FIG. 9, FIG. 10, and FIG. 11, a setting of the super connection is described:
When the first mobile phone 401 displays the second interface 601, the user may click the super connection option 611 in the second interface 601, and in response to the user clicking the super connection option 611 in the second interface 601, the first mobile phone 401 displays a super connection interface. FIG. 7A shows an example of a super connection interface 701. With reference to FIG. 7A, the super connection interface 701 includes icons of one or more devices of the second mobile phone, the tablet computer, the notebook computer, and the smart screen among the my devices, and icons of the second mobile phone, the tablet computer, and the notebook computer are displayed in an icon display area. The super connection interface 701 further includes a super connection function button (a virtual button) 7011. The super connection function button 7011 may include a name "super connection" and a status box of the super connection function button 7011. With reference to FIG. 7A, when a super connection function is enabled, a selected identification in the status box of the super connection function button 7011 is located on a right side of the status box, indicating that the super connection function of the first mobile phone 401 is enabled.

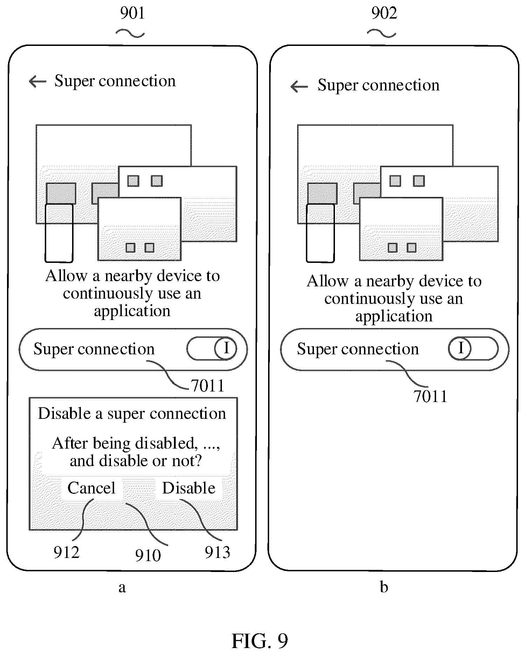

The user may click the super connection function button 7011 to disable the super connection function. In response to the operation of the user disabling the super connection function, that is, in response to the user clicking the super connection function button 7011 in the super connection interface 701, the first mobile phone 401 displays, in the super connection interface 701 in a hovering manner, a super connection prompt window for disabling the super connection function. FIG. 9a shows an example of a super connection interface 901 for displaying a super connection prompt window 910 in a hovering manner. The super connection prompt window 910 may include prompt information, a cancellation option 912, and a disabling option 913. In response to the user clicking the disabling option 913 in the super connection prompt window 910, the first mobile phone 401 disables the super connection function and displays a super connection interface obtained after the super connection function is disabled. FIG. 9b shows an example of a super connection interface 902 obtained after the super connection function is disabled. With reference to FIG. 9b, when the super connection function is disabled, the selected identification in the status box of the super connection function button 7011 is located on a left side of the status box, indicating that the super connection function of the first mobile phone 401 is disabled. The user may return to display the second interface 601 in the super connection interface. For example, the user triggers an operation of returning to display by clicking a returning option (an arrow option in FIG. 9b) in the super connection interface 902 or through a touch operation of sliding to return on the super connection interface 902. In response to the user clicking the returning option in the super connection interface 902 or the touch operation of sliding to return by the user on the super connection interface 902, the first mobile phone 401 displays the second interface. In this case, a difference between the second interface and the second interface 601 is that the status information in the super connection option 611 is "disabled".

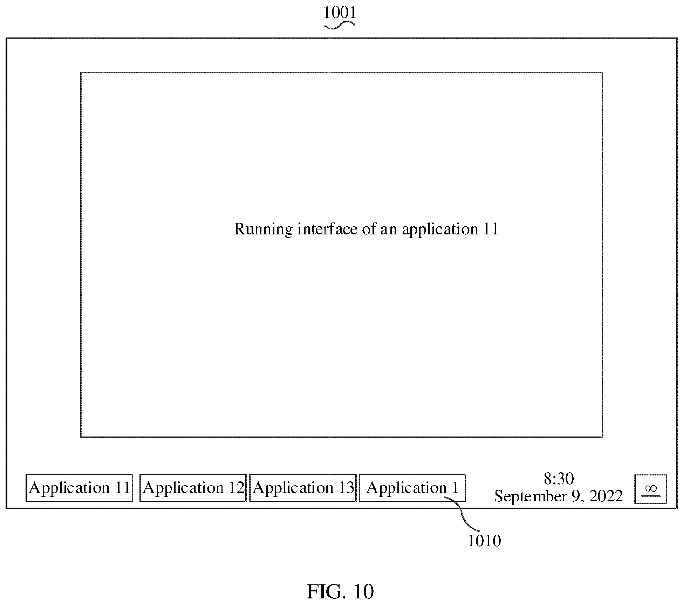

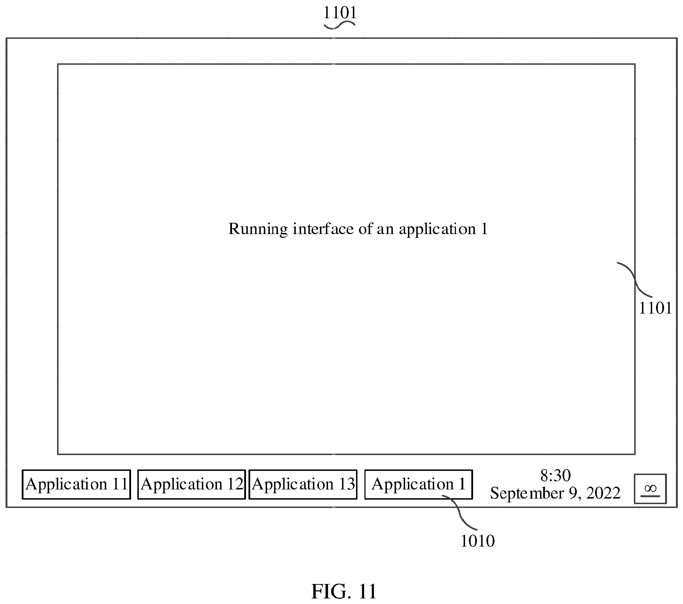

For example, in FIG. 6a, the tablet computer 403 and the notebook computer 404 are devices that may currently coordinate with the first mobile phone 401, the smart screen 405 is a device that may not currently coordinate with the first mobile phone 401, a super connection function of the tablet computer 403 and a super connection function of the notebook computer 404 are enabled, and an application 1 has been installed on each of the first mobile phone 401, the tablet computer 403, and the notebook computer 404. When the super connection function of the first mobile phone 401 is enabled, the application 1 does not run on neither the tablet computer 403 nor the notebook computer 404. If the application 1 is currently running in an interface of the first mobile phone 401, the first mobile phone 401 synchronously transmits running parameter data corresponding to the application 1 to the tablet computer 403 and the notebook computer 404 and does not synchronously transmit the running parameter data corresponding to the application 1 to the smart screen 405. The tablet computer 403 displays an icon of the application 1 in a current interface, and the notebook computer 404 displays the icon of the application 1 at a current interface. For example, the tablet computer 403 and the notebook computer 404 display the icon of the application 1 through flickering, while the smart screen 405 does not display the icon of the application 1 through flickering. The user may click the icon of the application 1 in the tablet computer 403 or the notebook computer 404. In response to the user clicking the icon of the application 1 in the current interface of the tablet computer 403, the tablet computer 403 opens the application 1 and displays the application 1 based on the running parameter data that is corresponding to the application 1 and that is synchronously transmitted by the first mobile phone 401. In response to the user clicking the icon of the application 1 in the current interface of the notebook computer 404, the notebook computer 404 opens the application 1 and displays the application 1 based on the running parameter data that is corresponding to the application 1 and that is synchronously transmitted by the first mobile phone 401, so that the first mobile phone 401, the tablet computer 403, and the notebook computer 404 display a same running interface of the application 1. FIG. 10 shows an example of a current interface 1001 of the notebook computer. The current interface 1001 of the notebook computer 404 includes a running interface of an application 11, an icon 1010 of the application 1, an icon of an application 12, and an icon of an application 13. The application 12 and the application 13 are applications running in a background of the notebook computer 404. FIG. 11 shows an example of a running interface 1101 of the application 1 in the notebook computer 404.

When the tablet computer 403 and the notebook computer 404 display the running interface of the application 1, the user may perform a corresponding operation in an application running interface of the application 1 through the tablet computer 403 or the notebook computer 404. The tablet computer 403 or the notebook computer 404 sends operating information of the user to the first mobile phone 401. The first mobile phone 401 updates the running interface of the application 1 based on the operating information, and synchronously transmits running parameter data of an updated running interface of the application 1 to the tablet computer 403 and the notebook computer 404, so that the tablet computer 403 and the notebook computer 404 display the updated running interface of the application 1. The running interface of the application 1 further includes a minimization option and a closing option. The user may click the minimization option in the running interface of the application 1 when the first mobile phone 401, the tablet computer 403, and the notebook computer 404 each display the running interface of the application 1. In response to the user clicking the minimization option in the running interface on the first mobile phone 401, the tablet computer 403, or the notebook computer 404, the first mobile phone 401, the tablet computer 403, or the notebook computer 404 minimizes display of the running interface of the application 1, for example, display of the icon of the application 1. In response to the user clicking the closing option of the running interface on the tablet computer 403 or the notebook computer 404, the tablet computer 403 or the notebook computer 404 cancels display of the running interface of the application 1, and closes the application 1. In response to the user clicking the closing option of the running interface on the first mobile phone 401, the first mobile phone 401, the tablet computer 403, and the notebook computer 404 all cancel display of the running interface of the application 1 and close the application 1.

In an implementation, after the super connection function of the first mobile phone 401 is disabled, the first mobile phone 401 does not synchronously transmit the running parameter data corresponding to the application 1 to the tablet computer 403 and the notebook computer 404, that is, none of the smart screen 405, the tablet computer 403, and the notebook computer 404 displays the icon of the application 1 through flickering. In an implementation, if the application 1 is not installed on the tablet computer 403 or the notebook computer 404, the first mobile phone 401 does not synchronously transmit the running parameter data corresponding to the application 1 to the tablet computer 403, that is, neither the smart screen 405 nor the tablet computer 403 displays the icon of the application 1 through flickering, and the notebook computer 404 displays the icon of the application 1 through flickering. If the application 1 is not installed on the notebook computer 404, the first mobile phone 401 does not synchronously transmit the running parameter data corresponding to the application 1 to the notebook computer 404, that is, neither the smart screen 405 nor the notebook computer 404 displays the icon of the application 1 through flickering, and the tablet computer 403 displays the icon of the application 1 through flickering.

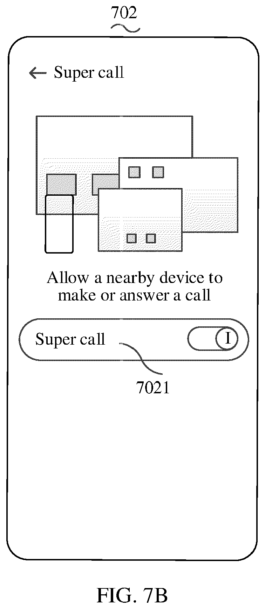

With reference to FIG. 6a, FIG. 7B, and FIG. 12, a setting of the super call is described:
When the first mobile phone 401 displays the second interface 601, the user may click the super call option 612 in the second interface 601, and in response to the user clicking the super call option 612 in the second interface 601, the first mobile phone displays a super call interface. FIG. 7B shows an example of a super call interface 702. The super call interface 702 includes icons of one or more devices of the second mobile phone, the tablet computer, the notebook computer, and the smart screen among the my devices. As shown in FIG. 7B, icons of the second mobile phone, the tablet computer, and the notebook computer are displayed in an icon display area. The super call interface 702 further includes a super call function button (a virtual button) 7021. The super call function button 7021 may include a name "super call" and a status box of the super call function button 7021. With reference to FIG. 7B, when a super call function is enabled, a selected identification in the status box of the super call function button 7021 is located on a right side of the status box, indicating that the super call function of the first mobile phone 401 is enabled.

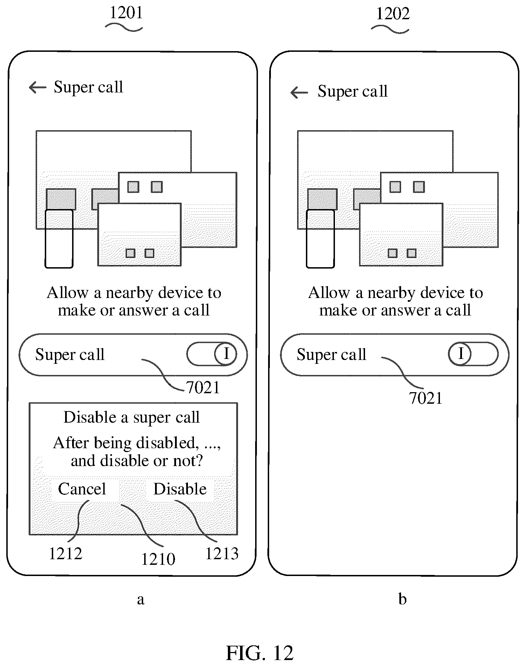

The user may click the super call function button 7021 to disable the super call function. In response to the operation of the user disabling the super call function, that is, in response to the user clicking the super call function button 7021 in the super call interface 702, the first mobile phone 401 displays, in the super call interface 702 in a hovering manner, a super call prompt window for disabling the super call function. FIG. 12a shows an example of a super call interface 1201 for displaying a super call prompt window 1210 in a hovering manner. The super call prompt window 1210 may include prompt information, a cancellation option 1212, and a disabling option 1213. In response to the user clicking the disabling option 1213 in the super call prompt window 1210, the first mobile phone 401 disables the super call function and displays a super call interface obtained after the super call function is disabled. FIG. 12b shows an example of a super call interface 1202 obtained after the super call function is disabled. With reference to FIG. 12b, when the super call function is disabled, the selected identification in the status box of the super call function button 7021 is located on a left side of the status box, indicating that the super call function of the first mobile phone 401 is disabled. The user may return to display the second interface 601 in the super call interface. For example, the user triggers an operation of returning to display by clicking a returning option (an arrow option in FIG. 12b) in the super call interface 1202 or through a touch operation of sliding to return on the super call interface 1202. In response to the user clicking the returning option in the super call interface 1202 or the touch operation of sliding to return by the user on the super call interface 1202, the first mobile phone 401 displays the second interface. In this case, a difference between the second interface and the second interface 601 is that the status information in the super call option 612 is "disabled".

For example, in FIG. 6a, the tablet computer 403 and the notebook computer 404 are devices that may currently coordinate with the first mobile phone 401, the smart screen 405 is a device that may not currently coordinate with the first mobile phone 401, and a super call function of the tablet computer 403 and a super call function of the notebook computer 404 are enabled. When a super call function of the first mobile phone 401 is enabled, when receiving an incoming call request, the first mobile phone 401 synchronously forwards the incoming call request to the tablet computer 403 and the notebook computer 404, and does not synchronously forward the incoming call request to the smart screen 405. The tablet computer 403 and the notebook computer 404 display the incoming call request. The user may answer the incoming call request through the tablet computer 403 or the notebook computer 404. In response to the answering operation of the user through the tablet computer 403 or the notebook computer 404, for example, the user clicks an answering option of the incoming call request on the tablet computer 403 or the notebook computer 404, the tablet computer 403 or the notebook computer 404 sends an answering instruction to the first mobile phone 401, the first mobile phone 401 gets through to the incoming call request and forwards a call to the tablet computer 403 or the notebook computer 404, and the first mobile phone 401 does not output voice information of the call during the call.

When the first mobile phone 401 does not receive the incoming call request, the user may make a call through the tablet computer 403 or the notebook computer 404. If no SIM card is installed on neither the tablet computer 403 nor the notebook computer 404, for example, in response to a dialing request received by the tablet computer 403, the tablet computer 403 sends the dialing request to the first mobile phone 401, and the first mobile phone 401 displays the dialing request when performing a dialing operation based on a phone number corresponding to the dialing request. The notebook computer 404 does not display the dialing request and forwards a current call to the tablet computer 403 after getting through to the call. After the super call function of the first mobile phone 401 is disabled, the tablet computer 403 does not send the dialing request to the first mobile phone 401, and the first mobile phone 401 does not display the dialing request of the tablet computer 403. If the SIM card is installed on the tablet computer 403, when a call is made through the tablet computer 403, in response to the dialing request of the user on the tablet computer 403, the tablet computer 403 displays a selection window in a hovering manner, and the selection window includes a first mobile phone option and a local option. The user may choose to make a call through the first mobile phone 401 or the tablet computer 403. In response to the user clicking the first mobile phone option in the selection window, the tablet computer 403 sends a call request to the first mobile phone 401. In response to the user clicking the local option in the selection window, the tablet computer 403 initiates a call request through the local SIM card.

After the super call function of the first mobile phone 401 is disabled, when receiving the incoming call request, the first mobile phone 401 does not synchronously forward the incoming call request to the tablet computer 403 or notebook computer 404, and then the tablet computer 403 and the notebook computer 404 do not display the incoming call request. In addition, the tablet computer 403 or the notebook computer 404 does not send the call request to the first mobile phone 401.

If the second mobile phone 402 in FIG. 4 enables Bluetooth and WI-FI, the second mobile phone 402 is a device that may currently coordinate with the first mobile phone 401. In this case, the my device list in the second interface 601 in FIG. 6a further includes a second mobile phone option, and a super call function of the second mobile phone 402, the super call function of the tablet computer 403, and the super call function of the notebook computer 404 are enabled. When the super call function of the first mobile phone 401 is enabled, when receiving an incoming call request, the second mobile phone 402 synchronously forwards the incoming call request of the second mobile phone to the first mobile phone 401, the tablet computer 403, and the notebook computer 404, and does not forward the incoming call request of the second mobile phone to the smart screen 405. The first mobile phone 401, the tablet computer 403, and the notebook computer 404 display the incoming call request of the second mobile phone. The user may answer the incoming call request of the second mobile phone through the first mobile phone 401, the tablet computer 403, or the notebook computer 404. After the super call function of the first mobile phone 401 is disabled, when the second mobile phone 402 receives an incoming call request the second mobile phone 402 synchronously forwards the incoming call request of the second mobile phone to the tablet computer 403 and the notebook computer 404, and does not synchronously forward the incoming call request of the second mobile phone to the first mobile phone 401 or the smart screen 405. The tablet computer 403 and the notebook computer 404 display the incoming call request of the second mobile phone, and the first mobile phone 401 and the smart screen 405 do not display the incoming call request of the second mobile phone.

To discriminately display the incoming call request of the first mobile phone and the incoming call request of the second mobile phone on the tablet computer 403 and the notebook computer 404, the tablet computer 403 and the notebook computer 404 display the incoming call request of the first mobile phone and identification information (for example, a name) of the first mobile phone 401 when displaying the incoming call request of the first mobile phone, and the tablet computer 403 and the notebook computer 404 display the incoming call request of the second mobile phone and identification information (for example, a name) of the second mobile phone 401 when displaying the incoming call request of the second mobile phone.

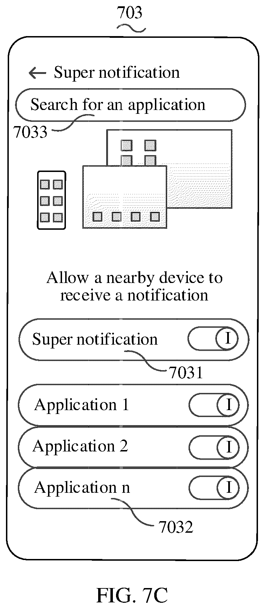

With reference to FIG. 6a, FIG. 7C, and FIG. 13, a setting of the super notification is described: When the first mobile phone 401 displays the second interface 601, the user may click the super notification option 613 in the second interface 601, and in response to the user clicking the super notification option 613 in the second interface 601, the first mobile phone 401 displays a super notification interface. FIG. 7C shows an example of a super notification interface 703. The super notification interface 703 includes icons of one or more devices of the second mobile phone, the tablet computer, the notebook computer, and the smart screen among the my devices. As shown in FIG. 7C, icons of the second mobile phone, the tablet computer, and the notebook computer are displayed in an icon display area. The super notification interface 703 further includes a super notification function button (a virtual button) 7031. The super notification function button 7031 may include a name "super notification" and a status box of the super notification function button 7031. With reference to FIG. 7C, a selected identification in the status box of the super notification function button 7031 is located on a right side of the status box, indicating that the super notification function of the first mobile phone 401 is enabled.

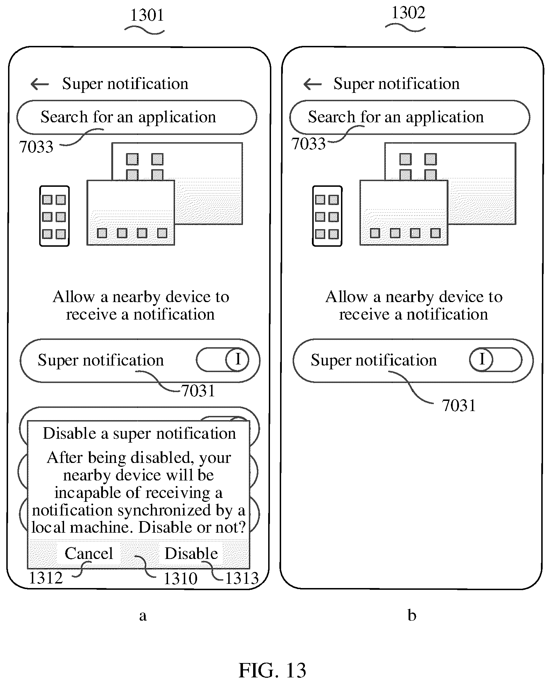

The user may click the super notification function button 7031 to enable or disable the super notification function. In response to the operation of the user disabling the super notification function, that is, in response to the user clicking the super notification function button 7031 in the super notification interface 703, the first mobile phone 401 displays, in the super notification interface 703 in a hovering manner, a super notification prompt window for disabling the super notification function. FIG. 13a shows an example of a super notification interface 1301 for displaying the super notification prompt window 1310 in a hovering manner. The super notification prompt window 1310 may include prompt information, a cancellation option 1312, and a disabling option 1313. As shown in FIG. 13a, the prompt information may be "After being disabled, your nearby device will be incapable of receiving a notification locally synchronized. Disable or not?" In response to the user clicking the disabling option 1313 in the super notification prompt window 1310, the first mobile phone 401 disables the super notification function and displays a super notification interface obtained after the super notification function is disabled. FIG. 13b shows an example of a super notification interface 1302 obtained after the super notification function is disabled. When the super notification function is disabled, the selected identification in the status box of the super notification function button 7031 is located on a left side of the status box, indicating that the super notification function of the first mobile phone 401 is disabled. The user may return to display the second interface 601 in the super notification interface. For example, the user triggers an operation of returning to display by clicking a returning option (an arrow option in FIG. 13b) in the super notification interface 1302 or through a touch operation of sliding to return on the super notification interface 1302. In response to the user clicking the returning option in the super notification interface 1302 or the touch operation of sliding to return by the user on the super notification interface 1302, the first mobile phone 401 displays the second interface. In this case, a difference between the second interface and the second interface 601 is that the status information in the super notification option 613 is "disabled".

For example, in FIG. 6a, the tablet computer 403 and the notebook computer 404 are devices that may currently coordinate with the first mobile phone 401, the smart screen 405 is a device that may not currently coordinate with the first mobile phone 401, and a super notification function of the tablet computer 403 and a super notification function of the notebook computer 404 are enabled. When the super notification function of the first mobile phone 401 is enabled, if the first mobile phone 401 receives notification information of the application 1, an application 2, or an application n in FIG. 7C, the first mobile phone 401 synchronously sends the notification information to the tablet computer 403 and the notebook computer 404, and does not synchronously send the notification information to the smart screen 405. The tablet computer 403 and the notebook computer 404 may synchronously receive the notification information, and pop up a prompt window of the notification information in a current interface. The tablet computer 403 or the notebook computer 404 displays the notification information in response to the user clicking the prompt window of the tablet computer 403 or the notebook computer 404. After the super notification function of the first mobile phone 401 is disabled, if the first mobile phone 401 receives notification information of the application 1, an application 2, or an application n in FIG. 7A, the first mobile phone 401 does not synchronously send the notification information to the tablet computer 403, the notebook computer 404, or the smart screen 405, and neither the smart screen 405, the tablet computer 403, nor the notebook computer 404 displays the notification information.

With reference to FIG. 7C, the super notification interface 703 further includes one or more application options 7032 that may be used by a first host 401 to send a notification to a device in the my device list through the super notification function, and the super notification interface 703 further includes a status box of a super notification function corresponding to each application. A selected identification in the status box is located on a right side of the status box, indicating that the super notification function corresponding to the application is enabled. In response to the user disabling an application notification function, that is, the user clicking the application option 7032 in the super notification interface 703, the first mobile phone 401 disables a super notification function of an application corresponding to the application option 7032, and moves, in the super notification interface 703, a selected identification in a status box corresponding to the application option to a left side of the status box for display, indicating that the super notification function corresponding to the application is disabled. For example, in FIG. 6a, the tablet computer 403 and the notebook computer 404 are devices that may currently coordinate with the first mobile phone 401, and the smart screen 405 is a device that may not currently coordinate with the first mobile phone 401. When the super notification function of the first mobile phone 401 is enabled, if a super notification function of the application 1 is enabled and a super notification function of the application 2 is disabled in 7c, the first mobile phone 401 receives the notification information of the application 1, the first mobile phone 401 synchronously sends the notification information of the application 1 to the tablet computer 403 and the notebook computer 404, the tablet computer 403 and the notebook computer 404 display the notification information of the application 1, the first mobile phone 401 receives the notification information of the application 2, and the first mobile phone 401 does not synchronously send the notification information of the application 2 to the tablet computer 403, the notebook computer 404, or the smart screen 405. In this case, none of the smart screen 405, the tablet computer 403, and the notebook computer 404 can synchronously receive the notification information of the application 2 or display the notification information of the application 2.

With reference to FIG. 7C, the super notification interface 703 further includes an application search box 7033, and the user may click the application search box 7033 to perform an application search operation. In response to the user clicking the application search box 7033 in the super notification interface 703, the first mobile phone 401 displays an application search interface, and the application search interface includes the application search box 7033. The user may enter an application name or a keyword in the application search box 7033 in the application search interface. In response to the user entering the application name or the keyword in the application search box 7033, the first mobile phone 401 searches for a corresponding application based on the application name or the keyword that is entered by the user, and displays applications found below the application search box 7033. The user may click each found application to enable a super notification function of the corresponding application. In response to the to-be-added application clicked by the user in the application search interface, the application is to be added to the super notification function on the first mobile phone 401. The user may exit the application search interface through an exit option in or a sliding operation on the application search interface after adding the application. In response to the exit operation on the application search interface, the first mobile phone 401 displays the super notification interface 703, and an application option of the to-be-added application is included in the super notification interface 703.

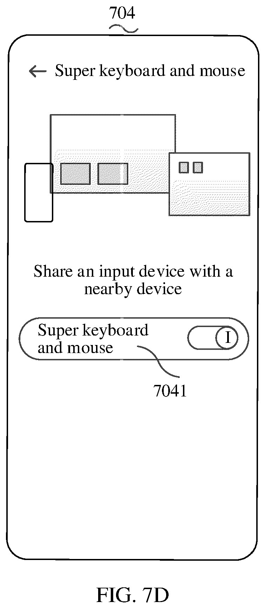

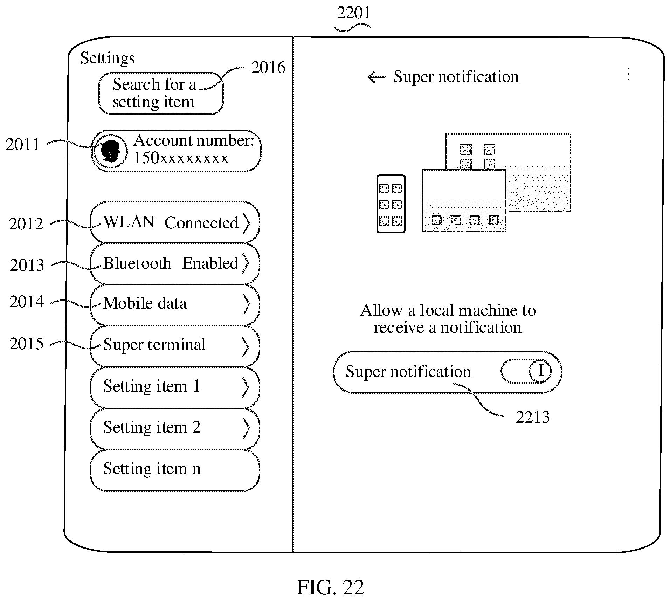

With reference to FIG. 6a, FIG. 7D, and FIG. 14, a setting of the super keyboard and mouse is described: When the first mobile phone 401 displays the second interface 601, the user may click the super keyboard and mouse option 614 in the second interface 601, and in response to the user clicking the super keyboard and mouse option 614 in the second interface 601, the first mobile phone 401 displays a super keyboard and mouse interface 704. FIG. 22 shows an example of the super keyboard and mouse interface 704. With reference to FIG. 7D, the super keyboard and mouse interface 704 includes icons of one or more devices of the second mobile phone, the tablet computer, the notebook computer, and the smart screen among the my devices, and icons of the second mobile phone, the tablet computer, and the notebook computer are displayed in an icon display area. The super keyboard and mouse interface 704 further includes a super keyboard and mouse function button (a virtual button) 7041. The super keyboard and mouse function button 7041 may include a name "super keyboard and mouse" and a status box of the super keyboard and mouse function button 7041. With reference to FIG. 7D, when a super keyboard and mouse function is enabled, a selected identification in a status box of the super keyboard and mouse function button 7041 is located on a right side of the status box, indicating that the super keyboard and mouse function of the first mobile phone 401 is enabled.

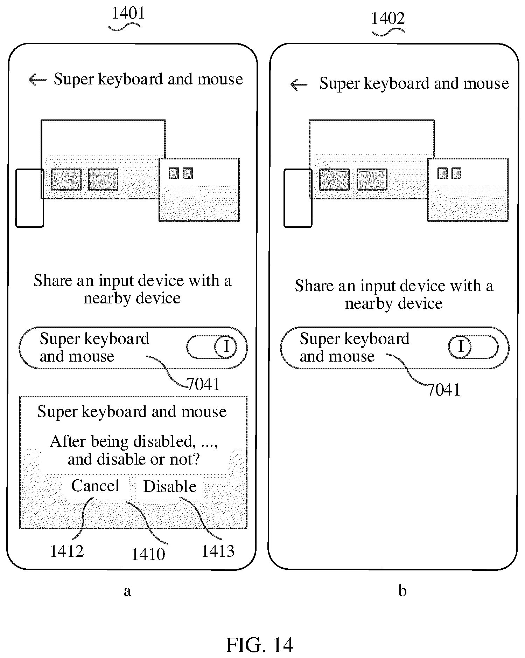

The user may click the super keyboard and mouse function button 7041 to enable or disable the super keyboard and mouse function. In response to the operation of the user disabling the super keyboard and mouse function, that is, in response to the user clicking the super keyboard and mouse function button 7041 in the super keyboard and mouse interface 704, the first mobile phone 401 displays, in the super keyboard and mouse interface 704 in a hovering manner, a super keyboard and mouse prompt window for disabling the super keyboard and mouse function. FIG. 14a shows an example of the super keyboard and mouse interface 1401 for displaying the super keyboard and mouse prompt window 1410 in a hovering manner. The super keyboard and mouse prompt window 1410 may include prompt information, a cancellation option 1412, and a disabling option 1413. In response to the user clicking the disabling option 1413 in the super keyboard and mouse prompt window 1410, the first mobile phone 401 disables the super keyboard and mouse function and displays a super keyboard and mouse interface obtained after the super keyboard and mouse function is disabled. FIG. 14b shows an example of the super keyboard and mouse interface 1402 obtained after the super keyboard and mouse function is disabled. When the super keyboard and mouse function is disabled, the selected identification in the status box of the super keyboard and mouse function button 7041 is located on a left side of the status box, indicating that the super keyboard and mouse function of the first mobile phone 401 is disabled. The user may return to display the second interface 601 in the super keyboard and mouse interface. For example, the user triggers an operation of returning to display by clicking a returning option (an arrow option in FIG. 14b) in the super keyboard and mouse interface 1402 or through a touch operation of sliding to return on the super keyboard and mouse interface 1402. In response to the user clicking the returning option in the super keyboard and mouse interface 1402 or the touch operation of sliding to return by the user on the super keyboard and mouse interface 1402, the first mobile phone 401 displays the second interface. In this case, a difference between the second interface and the second interface 601 is that the status information in the super keyboard and mouse option 614 is "disabled".

For example, in FIG. 6a, the tablet computer 403 and the notebook computer 404 are devices that may currently coordinate with the first mobile phone 401, the smart screen 405 is a device that may not currently coordinate with the first mobile phone 401, and a super keyboard and mouse function of the notebook computer 404 is enabled. When the super keyboard and mouse function of the first mobile phone 401 is enabled, an input device of the notebook computer 404 may be shared with the first mobile phone 401, that is, the user may enter data or an operation through an input device of the tablet computer 403 or the input device of the notebook computer 404, the tablet computer 403 or the notebook computer 404 transmits, to the first mobile phone 401, the data or operation that is entered by the user, and the first mobile phone 401 performs a corresponding operation based on the received data or operation. When the super keyboard and mouse function of the first mobile phone 401 is disabled, the data or operation that is entered by the user through the input device of the tablet computer 403 or the notebook computer 404 is not transmitted to the first mobile phone 401.

With reference to FIG. 6a, FIG. 8A, and FIG. 15, the super connection in the super setting interface 801 of the tablet computer is described:

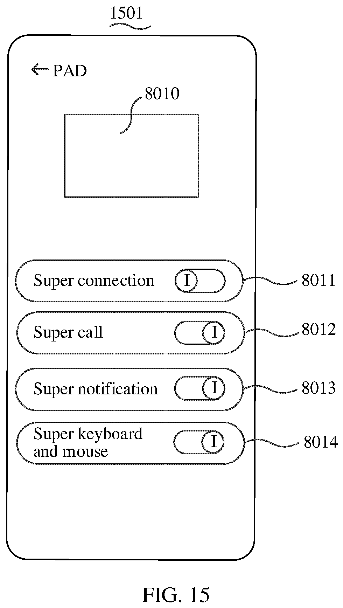

When the first mobile phone 401 displays the super setting interface 801 of the tablet computer, the user may click the super connection option 8011 in the super setting interface 801 of the tablet computer to enable/disable the super connection function. When the super connection function of the tablet computer 403 is enabled, in response to the user clicking the super connection option 8011 in the super setting interface 801 of the tablet computer, the first mobile phone 401 sends an instruction to the tablet computer 403. The tablet computer 403 receives the instruction, and disables the super connection function of the tablet computer 403. The user open a coordination setting interface 2101 of the tablet computer on the tablet computer 403, the user may see that the super connection function is disabled, and the first mobile phone 401 adjusts a status box of the super connection function in the super setting interface 801 of the tablet computer. FIG. 15 shows an example of a super setting interface 1501 that is of the tablet computer and that is obtained after the status box of the super connection function is adjusted. The super setting interface 1501 of the tablet computer is different from the super setting interface 801 of the tablet computer in that a selected identification in a status box of the super connection function in the super setting interface 1501 of the tablet computer is located on a left side of the status box, indicating that the super connection function of the tablet computer 403 is disabled. When the super connection function of the tablet computer 403 is disabled, in response to the user clicking the super connection option 8011 in the super setting interface 1501 of the tablet computer, the first mobile phone 401 sends an instruction to the tablet computer 403. The tablet computer 403 receives the instruction, and enables the super connection function of the tablet computer 403. After opening the coordination setting interface 2101 of the tablet computer on the tablet computer 403, the user may see that the super connection function is enabled, and the first mobile phone 401 displays the super setting interface 801 that is of the tablet computer and that is obtained after the status box of the super connection function is adjusted. A selected identification in the status box of the super connection function in the super setting interface 801 of the tablet computer is located on a right side of the status box, indicating that the super connection function of the tablet computer 403 is enabled.

For example, in FIG. 6a, the tablet computer 403 is a device that may currently coordinate with the first mobile phone 401. When the super connection function of the first mobile phone 401 is enabled and the super connection function of the tablet computer 403 is enabled, if the application 1 is currently running on the first mobile phone 401, the first mobile phone 401 synchronously transmits running parameter data corresponding to the application 1 to the tablet computer 403. After the super connection function of the tablet computer 403 is disabled, the first mobile phone 401 does not synchronously transmit the running parameter data corresponding to the application 1 to the tablet computer 403.

With reference to FIG. 6a and FIG. 8A, the super call in the super setting interface 801 of the tablet computer is described:

When the first mobile phone 401 displays the super setting interface 801 of the tablet computer, the user may click the super call option 8012 in the super setting interface 801 of the tablet computer to enable/disable the super call function. When the super call function of the tablet computer 403 is enabled, in response to the user clicking the super call option 8012 in the super setting interface 801 of the tablet computer, the first mobile phone 401 sends an instruction to the tablet computer 403. The tablet computer 403 receives the instruction, and disables the super call function of the tablet computer 403. After opening a coordination setting interface 2101 of the tablet computer on the tablet computer 403, the user may see that the super call function is disabled, and the first mobile phone 401 adjusts a status box of the super call function in the super setting interface 801 of the tablet computer, to display the super setting interface that is of the tablet computer and that is obtained after the super call function is disabled. In this case, a selected identification in the status box of the super call function is located on a left side of the status box, indicating that the super call function of the tablet computer 403 is disabled. When the super call function of the tablet computer 403 is disabled, in response to the user clicking the super call option 8012 in the super setting interface of the tablet computer, the first mobile phone 401 sends an instruction to the tablet computer 403. The tablet computer 403 receives the instruction, and enables the super call function of the tablet computer 403. After opening the coordination setting interface 2101 of the tablet computer on the tablet computer 403, the user may see that the super call function is enabled, and the first mobile phone 401 adjusts the status box of the super call function in the super setting interface of the tablet computer, to display the super setting interface 801 that is of the tablet computer and that is obtained after the super call function is enabled. In this case, the selected identification in the status box of the super call function is located on a right side of the status box, indicating that the super call function of the tablet computer 403 is enabled.

For example, in FIG. 6a, the tablet computer 403 is a device that may currently coordinate with the first mobile phone 401. When the super call function of the first mobile phone 401 is enabled and the super call function of the tablet computer 403 is enabled, when receiving an incoming call request, and the first mobile phone 401 synchronously forwards the incoming call request to the tablet computer 403. The tablet computer 403 can display the incoming call request, and the user may answer the incoming call request through the tablet computer 403. When the first mobile phone 401 does not receive the incoming call request, the user may make a call through the tablet computer 403. In response to a dialing request received by the tablet computer 403, the tablet computer 403 sends the call request to the first mobile phone 401, and the first mobile phone 401 performs a dialing operation based on a phone number corresponding to the call request, and forwards the current call to the tablet computer 403 after getting through to the call. After the super call function of the tablet computer 403 is disabled, when receiving the incoming call request, the first mobile phone 401 does not synchronously forward the incoming call request to the tablet computer 403, and the tablet computer 403 also does not send the call request to the first mobile phone 401.

With reference to FIG. 6a and FIG. 8A, the super notification in the super setting interface 801 of the tablet computer is described:

When the first mobile phone 401 displays the super setting interface 801 of the tablet computer, the user may further click the super notification option 8013 in the super setting interface 801 of the tablet computer to enable/disable the super call function. When the super notification function of the tablet computer 403 is enabled, in response to the user clicking the super notification option 8013 in the super setting interface 801 of the tablet computer, the first mobile phone 401 sends an instruction to the tablet computer 403. The tablet computer 403 receives the instruction, and disables the super notification function of the tablet computer. After opening a coordination setting interface 2101 of the tablet computer on the tablet computer 403, the user may see that the super notification function is disabled, and the first mobile phone 401 adjusts a status box of the super notification function in the super setting interface 801 of the tablet computer, to display the super setting interface that is of the tablet computer and that is obtained after the super notification function is disabled. In this case, a selected identification in the status box of the super notification function is located on a left side of the status box, indicating that the super notification function of the tablet computer 403 is disabled. When the super notification function of the tablet computer 403 is disabled, in response to the user clicking the super notification option 8013 in the super setting interface 801 of the tablet computer, the first mobile phone 401 sends an instruction to the tablet computer 403. The tablet computer 403 receives the instruction, and enables the super notification function of the tablet computer 403. After opening the coordination setting interface 2101 of the tablet computer on the tablet computer 403, the user may see that the super notification function is enabled, and the first mobile phone 401 adjusts the status box of the super notification function in the super setting interface of the tablet computer, to display the super setting interface 801 that is of the tablet computer and that is obtained after the super notification function is enabled. In this case, the selected identification in the status box of the super notification function is located on a right side of the status box, indicating that the super notification function of the tablet computer 403 is enabled.

For example, in FIG. 6a, the tablet computer 403 is a device that may currently coordinate with the first mobile phone 401. When the super notification function of the first mobile phone 401 and the super notification function of the tablet computer 403 are enabled, if the first mobile phone 401 receives notification information of the application 1, an application 2, or an application n in FIG. 7C, the first mobile phone 401 synchronously sends the notification information to the tablet computer 403. The tablet computer 403 synchronously receives the notification information, and pops up a prompt window of the notification information in a current interface. The tablet computer 403 displays the notification information in response to the user clicking the prompt window of the tablet computer 403. After the super notification function of the tablet computer 403 is disabled, if the first mobile phone 401 receives the notification information of the application 1, the application 2, or the application n in FIG. 7A, the first mobile phone 401 does not synchronously send the notification information to the tablet computer 403.

With reference to FIG. 6a and FIG. 8A, the super keyboard and mouse in the super setting interface 801 of the tablet computer are described:

When the first mobile phone 401 displays the super setting interface 801 of the tablet computer, the user may further click the super keyboard and mouse option 8014 in the super setting interface 801 of the tablet computer to enable/disable the super keyboard and mouse function. When the super keyboard and mouse function of the tablet computer 403 is enabled, in response to the user clicking the super keyboard and mouse option 8014 in the super setting interface 801 of the tablet computer, the first mobile phone 401 sends an instruction to the tablet computer 403. The tablet computer 403 receives the instruction, and disables the super keyboard and mouse function of the tablet computer 403. After opening a coordination setting interface 2101 of the tablet computer on the tablet computer 403, the user may see that the super keyboard and mouse function is disabled, and the first mobile phone 401 adjusts a status box of the super keyboard and mouse function in the super setting interface 801 of the tablet computer, to display the super setting interface that is of the tablet computer and that is obtained after the super keyboard and mouse function is disabled. In this case, a selected identification in the status box of the super keyboard and mouse function is located on a left side of the status box, indicating that the super keyboard and mouse function of the tablet computer 403 is enabled. When the super keyboard and mouse function of the tablet computer 403 is disabled, in response to the user clicking the super keyboard and mouse option 8014 in the super setting interface 801 of the tablet computer, the first mobile phone 401 sends an instruction to the tablet computer 403. The tablet computer 403 receives the instruction, and enables the super keyboard and mouse function of the tablet computer 403. After opening the coordination setting interface 2101 of the tablet computer on the tablet computer 403, the user may see that the super keyboard and mouse function is enabled, and the first mobile phone 401 adjusts the status box of the super keyboard and mouse function in the super setting interface of the tablet computer, to display the super setting interface 801 that is of the tablet computer and that is obtained after the super keyboard and mouse function is enabled. In this case, the selected identification in the status box of the super keyboard and mouse function is located on a right side of the status box, indicating that the super keyboard and mouse function of the tablet computer 403 is enabled.

When the first mobile phone displays the adjusted super setting interface of the tablet computer, the first mobile phone 401 sends prompt information of a status modification of the super connection, the super keyboard and mouse, the super notification, or the super keyboard and mouse. The tablet computer 403 receives the prompt information, and displays the prompt information in a current display interface in a hovering manner. The prompt information includes a modified coordination service and a modified state. In response to an operation of the user clicking the prompt information, the tablet computer 403 displays the coordination setting interface 2101 of the tablet computer, and it can be seen that a state of a function of the modified coordination service is modified.

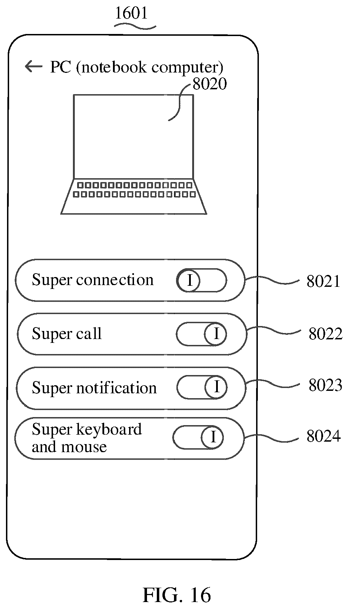

With reference to FIG. 6a, FIG. 8B, and FIG. 16, the super connection in the super setting interface 802 of the notebook computer is described:
When the first mobile phone 401 displays the super setting interface 802 of the notebook computer, the user may click the super connection option 8021 in the super setting interface 802 of the notebook computer to enable/disable the super connection function. When the super connection function of the notebook computer 404 is enabled, in response to the user clicking the super connection option 8021 in the super setting interface 802 of the notebook computer, the first mobile phone 401 sends an instruction to the notebook computer 404. The notebook computer 404 receives the instruction, and disables the super connection function of the notebook computer 404. After opening a coordination setting interface 2701 of the notebook computer on the notebook computer 404, the user may see that the super connection function is disabled, and the first mobile phone 401 adjusts the status box of the super connection function in the super setting interface 802 of the notebook computer. FIG. 16 shows an example of a super setting interface 1601 that is of the notebook computer and that is obtained after the status box of the super connection function is adjusted. The super setting interface 1601 of the notebook computer is different from the super setting interface 802 of the notebook computer in that a selected identification in a status box of the super connection function in the super setting interface 1601 of the notebook computer is located on a left side of the status box, indicating that the super connection function of the notebook computer 404 is disabled. When the super connection function of the notebook computer 404 is disabled, in response to the user clicking the super connection option 8021 in the super setting interface 1601 of the notebook computer, the first mobile phone 401 sends an instruction to the notebook computer 404. The notebook computer 404 receives the instruction, and enables the super connection function of the notebook computer 404. After opening the coordination setting interface 2701 of the notebook computer on the notebook computer 404, the user may see that the super connection function is enabled, and the first mobile phone 401 displays the super setting interface 802 that is of the notebook computer and that is obtained after a status box of the super connection function is adjusted. A selected identification in the status box of the super connection function in the super setting interface 802 of the notebook computer is located on a right side of the status box, indicating that the super connection function of the notebook computer 404 is enabled.

For example, in FIG. 6a, the notebook computer 404 is a device that may currently coordinate with the first mobile phone 401. When the super connection function of the first mobile phone 401 is enabled and the super connection function of the notebook computer 404 is enabled, if an application 1 is currently running on the first mobile phone 401, the first mobile phone 401 synchronously transmits running parameter data corresponding to the application 1 to the tablet computer 403. After the super connection function of the notebook computer 404 is disabled, the first mobile phone 401 does not synchronously transmit the running parameter data corresponding to the application 1 to the tablet computer 403.

With reference to FIG. 6a and FIG. 8B, the super call in the super setting interface 802 of the notebook computer is described:
When the first mobile phone 401 displays the super setting interface 802 of the notebook computer, the user may click the super call option 8022 in the super setting interface 802 of the notebook computer to enable/disable the super call function. When the super call function of the notebook computer 404 is enabled, in response to the user clicking the super call option 8022 in the super setting interface 802 of the notebook computer, the first mobile phone 401 sends an instruction to the notebook computer 404. The notebook computer 404 receives the instruction, and disables the super call function of the notebook computer 404. After opening a coordination setting interface 2701 of the notebook computer on the notebook computer 404, the user may see that the super call function is disabled, and the first mobile phone 401 adjusts a status box of the super call function in the super setting interface 802 of the notebook computer, to display the super setting interface that is of the notebook computer and that is obtained after the super call function is disabled. In this case, a selected identification in the status box of the super call function is located on a left side of the status box, indicating that the super call function of the notebook computer 404 is disabled. When the super call function of the notebook computer 404 is disabled, in response to the user clicking the super call option 8022 in the super setting interface of the notebook computer, the first mobile phone 401 sends an instruction to the notebook computer 404. The notebook computer 404 receives the instruction, and enables the super call function of the notebook computer 404. After opening the coordination setting interface 2701 of the notebook computer on the notebook computer 404, the user may see that the super call function is enabled, and the first mobile phone 401 adjusts the status box of the super call function in the super setting interface of the notebook computer, to display the super setting interface that is of the notebook computer and that is obtained after the super call function is enabled. In this case, the selected identification in the status box of the super call function is located on a right side of the status box, indicating that the super call function of the notebook computer 404 is enabled.

For example, in FIG. 6a, the notebook computer 404 is a device that may currently coordinate with the first mobile phone 401. When the super call function of the first mobile phone 401 is enabled and the super call function of the notebook computer 404 is enabled, when receiving an incoming call request, the first mobile phone 401 synchronously forwards the incoming call request to the notebook computer 404, the notebook computer 404 may display the incoming call request, and the user may answer the incoming call request through the notebook computer 404. When the first mobile phone 401 does not receive the incoming call request, the user may make a call through the notebook computer 404. In response to a dialing request received by the notebook computer 404, the notebook computer 404 sends the call request to the first mobile phone 401, and the first mobile phone 401 performs a dialing operation based on a phone number corresponding to the call request, and forwards the current call to the notebook computer 404 after getting through to the call. After the super call function of the notebook computer 404 is disabled, when receiving the incoming call request, the first mobile phone 401 does not synchronously forward the incoming call request to the notebook computer 404, and the notebook computer 404 also does not send the call request to the first mobile phone 401.

With reference to FIG. 6a and FIG. 8B, the super notification in the super setting interface 802 of the notebook computer is described:
The user may further click the super notification option 8023 in the super setting interface 802 of the notebook computer to enable/disable the super notification function. When the super notification function of the notebook computer 404 is enabled, in response to the user clicking the super notification option 8023 in the super setting interface 802 of the notebook computer, the first mobile phone 401 sends an instruction to the notebook computer 404. The notebook computer 404 receives the instruction, and disables the super notification function of the notebook computer 404. After opening a coordination setting interface 2701 of the notebook computer on the notebook computer 404, the user may see that the super notification function is disabled, and the first mobile phone 401 adjusts a status box of the super notification function in the super setting interface 802 of the notebook computer, to display the super setting interface that is of the notebook computer and that is obtained after the super notification function is disabled. In this case, a selected identification in the status box of the super notification function is located on a left side of the status box, indicating that the super notification function of the notebook computer 404 is disabled. When the super notification function of the notebook computer 404 is disabled, in response to the user clicking the super notification option 8023 in the super setting interface of the notebook computer, the first mobile phone 401 sends an instruction to the notebook computer 404. The notebook computer 404 receives the instruction, and enables the super notification function of the notebook computer 404. After opening the coordination setting interface 2701 of the notebook computer on the notebook computer 404, the user may see that the super notification function is enabled, and the first mobile phone 401 adjusts the status box of the super notification function in the super setting interface of the notebook computer, to display the super setting interface that is of the notebook computer and that is obtained after the super notification function is enabled. In this case, the selected identification in the status box of the super notification function is located on a right side of the status box, indicating that the super notification function of the notebook computer 404 is enabled.

For example, in FIG. 6a, the notebook computer 404 is a device that may currently coordinate with the first mobile phone 401. When the super notification function of the first mobile phone 401 and the super notification function of the notebook computer 404 are enabled, if the first mobile phone 401 receives notification information of the application 1, an application 2, or an application n in FIG. 7C, the first mobile phone 401 synchronously sends the notification information to the notebook computer 404. The notebook computer 404 synchronously receives the notification information, and pops up a prompt window of the notification information on a current interface. The notebook computer 404 displays the notification information in response to the user clicking the prompt window of the notebook computer 404. After the super notification function of the notebook computer 404 is disabled, if the first mobile phone 401 receives the notification information of the application 1, an application 2, or an application n in FIG. 7A, the first mobile phone 401 does not synchronously send the notification information to the notebook computer 404.

With reference to FIG. 6a and FIG. 8B, the super keyboard and mouse in the super setting interface 802 of the notebook computer are described:

The user may further click the super keyboard and mouse option 8024 in the super setting interface 802 of the notebook computer to enable/disable the super keyboard and mouse function. When the super keyboard and mouse function of the notebook computer 404 is enabled, in response to the user clicking the super keyboard and mouse option 8024 in the super setting interface 802 of the notebook computer, the first mobile phone 401 sends an instruction to the notebook computer 404. The notebook computer 404 receives the instruction, and disables the super keyboard and mouse function of the notebook computer 404. After opening a coordination setting interface 2701 of the notebook computer on the notebook computer 404, the user may see that the super keyboard and mouse function is disabled, and the first mobile phone 401 adjusts a status box of the super keyboard and mouse function in the super setting interface 802 of the notebook computer, to display the super setting interface that is of the notebook computer and that is obtained after the super keyboard and mouse function is disabled. In this case, a selected identification in the status box of the super keyboard and mouse function is located on a left side of the status box, indicating that the super keyboard and mouse function of the notebook computer 404 is disabled. When the super keyboard and mouse function of the notebook computer 404 is disabled, in response to the user clicking the super keyboard and mouse option 8024 in the super setting interface of the notebook computer, the first mobile phone 401 sends an instruction to the notebook computer 404. The notebook computer 404 receives the instruction, and enables the super keyboard and mouse function of the notebook computer 404. After opening the coordination setting interface 2701 of the notebook computer on the notebook computer 404, the user may see that the super keyboard and mouse function is enabled, and the first mobile phone 401 adjusts the status box of the super keyboard and mouse function in the super setting interface of the notebook computer, to display the super setting interface that is of the notebook computer and that is obtained after the super keyboard and mouse function is enabled. In this case, the selected identification in the status box of the super keyboard and mouse function is located on a right side of the status box, indicating that the super keyboard and mouse function of the notebook computer 404 is enabled.

When the first mobile phone 401 displays the adjusted super setting interface of the notebook computer, the first mobile phone 401 sends prompt information of a status modification of the super connection, the super keyboard and mouse, the super notification, or the super keyboard and mouse. The notebook computer 404 receives the prompt information, and displays the prompt information in a current display interface in a hovering manner. The prompt information includes a modified coordination service and a modified state. In response to an operation of the user clicking the prompt information, the notebook computer 404 displays the coordination setting interface 2701 of the notebook computer, and it can be seen that a state of a function of the modified coordination service is modified.

For example, in FIG. 6a, when the smart screen 405 enables Bluetooth and WI-FI, the smart screen 405 becomes a device that may currently coordinate with the first mobile phone 401.

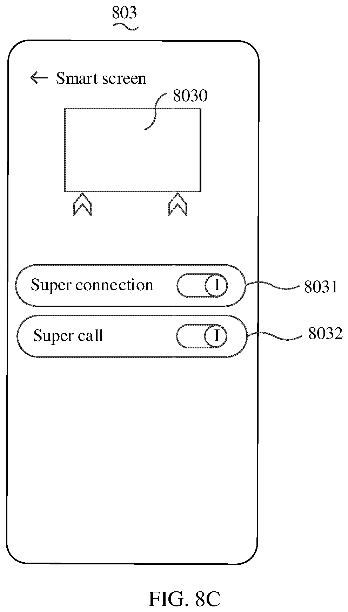

With reference to FIG. 6a and FIG. 8C, the smart screen option 617 in FIG. 6a is described:
When the first mobile phone 401 displays the second interface 601, the user may further click the smart screen option 617 in the second interface 601, and in response to the user clicking the smart screen option 617 in the second interface 601, the first mobile phone 401 displays a super setting interface 803 of the smart screen. FIG. 8C shows an example of the super setting interface 803 of the smart screen. The super setting interface 803 of the smart screen includes a smart screen icon 8030, that is, a device icon displayed in an icon area at an upper portion of the super setting interface 803 of the smart screen. The super setting interface 803 of the smart screen further includes options of a plurality of coordination services of the smart screen. As shown in FIG. 8C, the coordination services include a super connection option 8031 and a super call option 8032 of the smart screen 405. The super connection option 8031 includes a name "super connection" and a status box of a super connection function, and the super call option 8032 includes a name "super call" and a status box of a super call function. A selected identification in a corresponding status box is located on a right side when the coordination service of the smart screen 405 is enabled, and the selected identification in the corresponding status box is located on a left side when the coordination service of the smart screen 405 is disabled.

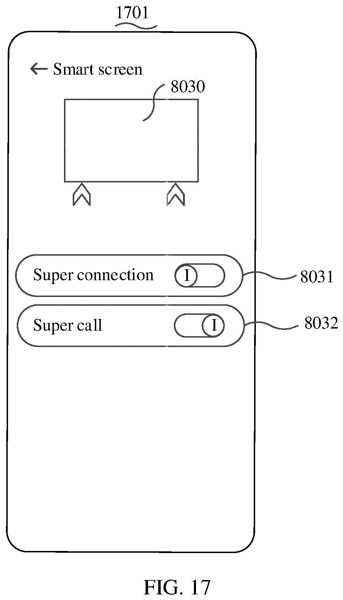

With reference to FIG. 6a, FIG. 8C, and FIG. 17, the super connection in the super setting interface 803 of the smart screen is described:
When the first mobile phone 401 displays the super setting interface 803 of the smart screen, the user may click the super connection option 8031 in the super setting interface 803 of the smart screen to enable/disable the super connection function. When the super connection function of the smart screen 405 is enabled, in response to the user clicking the super connection option 8031 in the super setting interface 803 of the smart screen, the first mobile phone 401 sends an instruction to the smart screen 405. The smart screen 405 receives the instruction, and disables the super connection function of the smart screen 405. After opening a coordination setting interface 3101 of the smart screen on the smart screen 405, the user may see that the super connection function is disabled, and the first mobile phone 401 adjusts a status box of the super connection function in the super setting interface 803 of the smart screen. FIG. 17 shows an example of a super setting interface 1701 that is of the smart screen and that is obtained after the status box of the super connection function is adjusted. The super setting interface 1701 of the smart screen is different from the super setting interface 803 of the smart screen in that a selected identification in a status box of the super connection function in the super setting interface 1701 of the smart screen is located on a left side of the status box, indicating that the super connection function of the smart screen 405 is disabled. When the super connection function of the smart screen 405 is disabled, in response to the user clicking the super connection option 8031 in the super setting interface 1701 of the smart screen, the first mobile phone 401 sends an instruction to the tablet computer403. The smart screen 405 receives the instruction, and enables the super connection function of the smart screen 405. After opening the coordination setting interface 3101 of the smart screen 405, the user may see that the super connection function is enabled, and the first mobile phone 401 displays the super setting interface 803 that is of the smart screen and that is obtained after the status box of the super connection function is adjusted. The selected identification in the status box of the super connection function in the super setting interface 803 of the smart screen is located on a right side of the status box, indicating that the super connection function of the smart screen 405 is enabled.

For example, in FIG. 6a, the smart screen 405 is a device that may currently coordinate with the first mobile phone 401. When the super connection function of the first mobile phone 401 is enabled and the super connection function of the smart screen 405 is enabled, if the application 1 is currently running on the first mobile phone 401, the first mobile phone 401 synchronously transmits running parameter data corresponding to the application 1 to the smart screen 405. After the super connection function of the smart screen 405 is disabled, the first mobile phone 401 does not synchronously transmit the running parameter data corresponding to the application 1 to the smart screen 405.

With reference to FIG. 6a and FIG. 8C, the super call in the super setting interface 803 of the smart screen is described:
When the first mobile phone 401 displays the super setting interface 803 of the smart screen, the user may click the super call option 8032 in the super setting interface 803 of the smart screen to enable/disable the super call function. When the super call function of the smart screen 405 is enabled, in response to the user clicking the super call option 8032 in the super setting interface 803 of the smart screen, the first mobile phone 401 sends an instruction to the smart screen 405. The smart screen 405 receives the instruction, and disables the super call function of the smart screen 405. After opening a coordination setting interface 3101 of the smart screen on the smart screen 405, the user may see that the super call function is disabled, and the first mobile phone 401 adjusts a status box of the super call function in the super setting interface 803 of the smart screen, to display the super setting interface that is of the tablet computer and that is obtained after the super call function is disabled. In this case, a selected identification in the status box of the super call function is located on a left side of the status box, indicating that the super call function of the smart screen 405 is disabled. When the super call function of the smart screen 405 is disabled, in response to the user clicking the super call option 8032 in the super setting interface of the smart screen, the first mobile phone 401 sends an instruction to the smart screen 405. The smart screen 405 receives the instruction, and enables the super call function of the smart screen 405. After opening the coordination setting interface 3101 of the smart screen on the smart screen 405, the user may see that the super call function is enabled, and the first mobile phone 401 adjusts the status box of the super call function in the super setting interface of the smart screen, to display the super setting interface 803 that is of the smart screen and that is obtained after the super call function is enabled. In this case, the selected identification in the status box of the super call function is located on a right side of the status box, indicating that the super call function of the smart screen 405 is enabled.

For example, in FIG. 6a, the smart screen 405 is a device that may currently coordinate with the first mobile phone 401. When the super call function of the first mobile phone 401 is enabled and the super call function of the smart screen 405 is enabled, when receiving an incoming call request, the first mobile phone 401 synchronously forwards the incoming call request to the smart screen 405, the smart screen 405 may display the incoming call request, and the user may answer the incoming call request through the smart screen 405. After the super call function of the smart screen 405 is disabled, when receiving the incoming call request, the first mobile phone 401 does not synchronously forward the incoming call request to the smart screen 405.

When the first mobile phone 401 displays the adjusted super setting interface of the smart screen, the first mobile phone 401 sends prompt information of a status modification of the super connection or the super call. The smart screen 405 receives the prompt information, and displays the prompt information on a current display interface in a hovering manner. The prompt information includes a modified coordination service and a modified state. In response to an operation of the user clicking the prompt information, the smart screen 405 displays the coordination setting interface 3101 of the smart screen, and it can be seen that a state of a function of the modified coordination service is modified.

For example, in FIG. 4a, when the second mobile phone 402 enables Bluetooth and WI-FI, the second mobile phone 402 becomes a device that may currently coordinate with the first mobile phone 401. The my device list in FIG. 6a may further include a second mobile phone option corresponding to the second mobile phone 402.

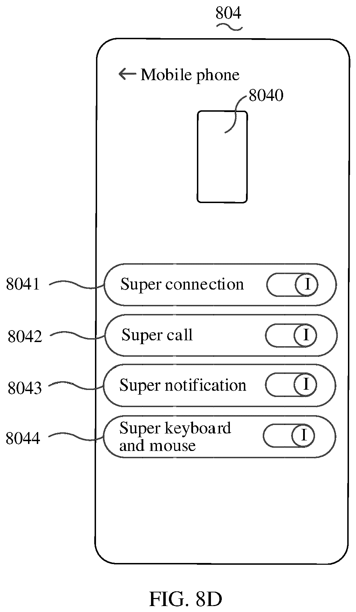

With reference to FIG. 6a and FIG. 8D, the second mobile phone option is described:
When the my device list in the second interface 601 includes the second mobile phone option, the user may click the second mobile phone option in the second interface 601, and in response to the user clicking the second mobile phone option in the second interface 601, the first mobile phone 401 displays a super setting interface of the second mobile phone. FIG. 8D shows an example of a super setting interface 804 of the second mobile phone. The super setting interface 804 of the second mobile phone includes a second mobile phone icon 8040, that is, a device icon displayed in an icon area at an upper portion of the super setting interface 804 of the second mobile phone. The super setting interface 804 of the second mobile phone further includes options of a plurality of coordination services of the second mobile phone. As shown in FIG. 8D, the coordination services include a super connection option 8041, a super call option 8042, a super notification option 8043, and a super keyboard and mouse option 8044 of the second mobile phone. The super connection option 8041 includes a name "super connection" and a status box of a super connection function. The super call option 8042 includes a name "super call" and a status box of a super call function. The super notification option 8043 includes a name "super notification" and a status box of a super notification function. The super keyboard and mouse option 8044 includes a name "super keyboard and mouse" and a status box of a super keyboard and mouse function. A selected identification in a corresponding status box is located on a right side when the coordination service of the second mobile phone 402 is enabled, and the selected identification in the corresponding status box is located on a left side when the coordination service of the second mobile phone 402 is disabled.

With reference to FIG. 6a, FIG. 8D, and FIG. 18, the super connection in the super setting interface 804 of the second mobile phone is described:

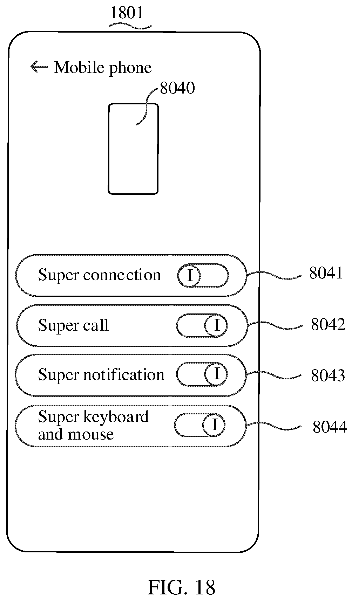

When the first mobile phone 401 displays the super setting interface 804 of the second mobile phone, the user may click the super connection option 8041 in the super setting interface 804 of the second mobile phone to enable/disable the super connection function. When the super connection function of the second mobile phone 402 is enabled, in response to the user clicking the super connection option 8041 in the super setting interface 804 of the second mobile phone 402, the first mobile phone 401 sends an instruction to the second mobile phone 402. The second mobile phone 402 receives the instruction, and disables the super connection function of the second mobile phone 402. After opening a sixth interface 3201 of the second mobile phone on the second mobile phone 402, the user may see that the super connection function is disabled, and the first mobile phone 401 adjusts the status box of the super connection function in the super setting interface 804 of the second mobile phone. FIG. 18 shows an example of a super setting interface 1801 that is of the second mobile phone and that is obtained after the status box of the super connection function is adjusted. The super setting interface 1801 of the second mobile phone is different from the super setting interface 804 of the second mobile phone in that a selected identification in a status box of the super connection function in the super setting interface 1801 of the second mobile phone is located on a left side of the status box. When the super connection function of the second mobile phone 402 is disabled, in response to the user clicking the super connection option 8041 in the super setting interface 1804 of the second mobile phone 402, the first mobile phone 401 sends an instruction to the second mobile phone 402. The second mobile phone 402 receives the instruction, and enables the super connection function of the second mobile phone 402. After opening the sixth interface 3201 of the second mobile phone on the second mobile phone 402, the user may see that the super connection function is enabled, and the first mobile phone 401 displays the super setting interface 804 that is of the second mobile phone and that is obtained after the status box of the super connection function is adjusted. A selected identification in the status box of the super connection function in the super setting interface 804 of the second mobile phone is located on a right side of the status box.

For example, in FIG. 6a, the second mobile phone 402 is a device that may currently coordinate with the first mobile phone 401. When the super connection function of the first mobile phone 401 is enabled and the super connection function of the second mobile phone 402 is enabled, if the application 1 is currently running on the first mobile phone 401, the first mobile phone 401 synchronously transmits running parameter data corresponding to the application 1 to the second mobile phone 402. After the super connection function of the second mobile phone 402 is disabled, the first mobile phone 401 does not synchronously transmit the running parameter data corresponding to the application 1 to the second mobile phone 402.

With reference to FIG. 6a and FIG. 8D, the super call in the super setting interface 804 of the second mobile phone is described:
When the first mobile phone 401 displays the super setting interface 804 of the second mobile phone, the user may click the super call option 8042 in the super setting interface 804 of the second mobile phone to enable/disable the super call function. When the super call function of the second mobile phone 402 is enabled, in response to the user clicking the super call option 8042 in the super setting interface 804 of the second mobile phone 402, the first mobile phone 401 sends an instruction to the second mobile phone 402. The second mobile phone 402 receives the instruction, and disables the super call function of the second mobile phone 402. After opening a sixth interface 3201 of the second mobile phone on the second mobile phone 402, the user may see that the super call function is disabled, and the first mobile phone 401 adjusts the status box of the super call function in the super setting interface 804 of the second mobile phone, to display the super setting interface that is of the second mobile phone and that is obtained after the super call function is disabled. In this case, a selected identification in the status box of the super call function is located on a left side of the status box. When the super call function of the second mobile phone 402 is disabled, in response to the user clicking the super call option 8042 in the super setting interface of the second mobile phone, the first mobile phone 401 sends an instruction to the second mobile phone 402. The second mobile phone 402 receives the instruction, and enables the super call function of the second mobile phone 402. After opening a sixth interface 3201 of the second mobile phone on the second mobile phone 402, the user may see that the super call function is enabled, and the first mobile phone 401 adjusts the status box of the super call function in the super setting interface of the tablet computer, to display the super setting interface 804 that is of the second mobile phone and that is obtained after the super call function is enabled. In this case, the selected identification in the status box of the super call function is located on a right side of the status box.

For example, in FIG. 6a, the second mobile phone 402 is a device that may currently coordinate with the first mobile phone 401. When the super call function of the first mobile phone 401 is enabled and the super call function of the second mobile phone 402 is enabled, when receiving an incoming call request, the first mobile phone 401 synchronously forwards the incoming call request to the second mobile phone 402, the second mobile phone 402 may display the incoming call request, and the user may answer the incoming call request through the second mobile phone 402. When the first mobile phone 401 does not receive the incoming call request, the user may make a call through the second mobile phone 402. In response to a dialing request received by the second mobile phone 402, the second mobile phone 402 sends the call request to the first mobile phone 401, and the first mobile phone 401 performs a dialing operation based on a phone number corresponding to the call request, and forwards the current call to the second mobile phone 402 after getting through to the call. After the super call function of the second mobile phone 402 is disabled, when receiving the incoming call request, the first mobile phone 401 does not synchronously forward the incoming call request to the second mobile phone 402, and the second mobile phone 402 also does not send the call request to the first mobile phone 401.

With reference to FIG. 6a and FIG. 8D, the super notification in the super setting interface 804 of the second mobile phone is described:
When the first mobile phone 401 displays the super setting interface 804 of the second mobile phone, the user may click the super notification option 8043 in the super setting interface 804 of the second mobile phone to enable/disable the super notification function. When the super notification function of the second mobile phone 402 is enabled, in response to the user clicking the super notification option 8043 in the super setting interface 804 of the second mobile phone, the first mobile phone 401 sends an instruction to the second mobile phone 402. The second mobile phone 402 receives the instruction, and disables the super notification function of the second mobile phone 402. After opening a sixth interface 3201 of the second mobile phone on the second mobile phone 402, the user may see that the super notification function is disabled, and the first mobile phone 401 adjusts the status box of the super notification function in the super setting interface 804 of the second mobile phone, to display the super setting interface that is of the second mobile phone and that is obtained after the super notification function is disabled. In this case, a selected identification in the status box of the super notification function is located on a left side of the status box. When the super notification function of the second mobile phone 402 is disabled, in response to the user clicking the super notification option 8043 in the super setting interface of the second mobile phone, the first mobile phone 401 sends an instruction to the second mobile phone 402. The second mobile phone 402 receives the instruction, and enables the super notification function of the second mobile phone 402. After opening the sixth interface 3201 of the second mobile phone on the second mobile phone 402, the user may see that the super notification function is enabled, and the first mobile phone 401 adjusts the status box of the super notification function in the super setting interface of the second mobile phone, to display the super setting interface 804 that is of the second mobile phone and that is obtained after the super notification function is enabled. In this case, the selected identification in the status box of the super notification function is located on a right side of the status box.

For example, in FIG. 6a, the second mobile phone 402 is a device that may currently coordinate with the first mobile phone 401. When the super notification function of the first mobile phone 401 and the super notification function of the second mobile phone 402 are enabled, if the first mobile phone 401 receives notification information of the application 1, an application 2, or an application n in FIG. 7C, the first mobile phone 401 synchronously sends the notification information to the second mobile phone 402. The second mobile phone 402 synchronously receives the notification information, and pops up a prompt window of the notification information in a current interface. The second mobile phone 402 displays the notification information in response to the user clicking the prompt window of the second mobile phone 402. After the super notification function of the tablet computer 403 is disabled, if the first mobile phone 401 receives the notification information of the application 1, the application 2, or the application n in FIG. 7A, the first mobile phone 401 does not synchronously send the notification information to the second mobile phone 402.

With reference to FIG. 6a and FIG. 8D, the super keyboard and mouse in the super setting interface 804 of the second mobile phone are described:
When the first mobile phone 401 displays the super setting interface 804 of the second mobile phone, the user may click the super keyboard and mouse option 8044 in the super setting interface 804 of the second mobile phone to enable/disable the super keyboard and mouse function. When the super keyboard and mouse function of the second mobile phone 402 is enabled, in response to the user clicking the super keyboard and mouse option 8044 in the super setting interface 804 of the second mobile phone, the first mobile phone 401 sends an instruction to the second mobile phone 402. The second mobile phone 402 receives the instruction, and disables the super keyboard and mouse function of the second mobile phone 402. After opening a sixth interface 3201 of the second mobile phone on the second mobile phone 402, the user may see that the super keyboard and mouse function is disabled, and the first mobile phone 401 adjusts a status box of the super keyboard and mouse function in the super setting interface 804 of the second mobile phone, to display the super setting interface that is of the tablet computer and that is obtained after the super keyboard and mouse function is disabled. In this case, a selected identification in the status box of the super keyboard and mouse function is located on a left side of the status box. When the super keyboard and mouse function of the second mobile phone 402 is disabled, in response to the user clicking the super keyboard and mouse option 8044 in the super setting interface of the second mobile phone, the first mobile phone 401 sends an instruction to the second mobile phone 402. The second mobile phone 402 receives the instruction, and enables the super keyboard and mouse function of the second mobile phone 402. After opening a sixth interface 3201 of the second mobile phone on the second mobile phone 402, the user may see that the super keyboard and mouse function is enabled, and the first mobile phone 401 adjusts the status box of the super keyboard and mouse function in the super setting interface of the second mobile phone, to display the super setting interface 804 that is of the second mobile phone and that is obtained after the super keyboard and mouse function is enabled. In this case, the selected identification in the status box of the super keyboard and mouse function is located on a right side of the status box.

When the first mobile phone 401 displays the adjusted super setting interface of the second mobile phone, the first mobile phone 401 sends prompt information of a status modification of the super connection, the super keyboard and mouse, the super notification, or the super keyboard and mouse. The second mobile phone 402 receives the prompt information, and displays the prompt information in a current display interface in a hovering manner. The prompt information includes a modified coordination service and a modified state. In response to an operation of the user clicking the prompt information, the second mobile phone 402 displays the sixth interface of the second mobile phone, and it can be seen that a state of a function of the modified coordination service is modified.

The second interface 601 may further include a returning option. As shown in FIG. 6, an arrow before a super terminal is the returning option. In response to the user clicking the returning option in the second interface 601, the first mobile phone displays the first interface 501. In some embodiments, each of the super notification interface 703, the super call interface 702, the super keyboard and mouse interface 704, the super connection interface 701, the super setting interface 801 of the tablet computer, the super setting interface 804 of the second mobile phone, the super setting interface 802 of the notebook computer, and the super setting interface 803 of the smart screen may include a returning option. In response to the user clicking the returning option in a current interface, the first mobile phone displays an interface displayed before the first mobile phone jumps to a current page.

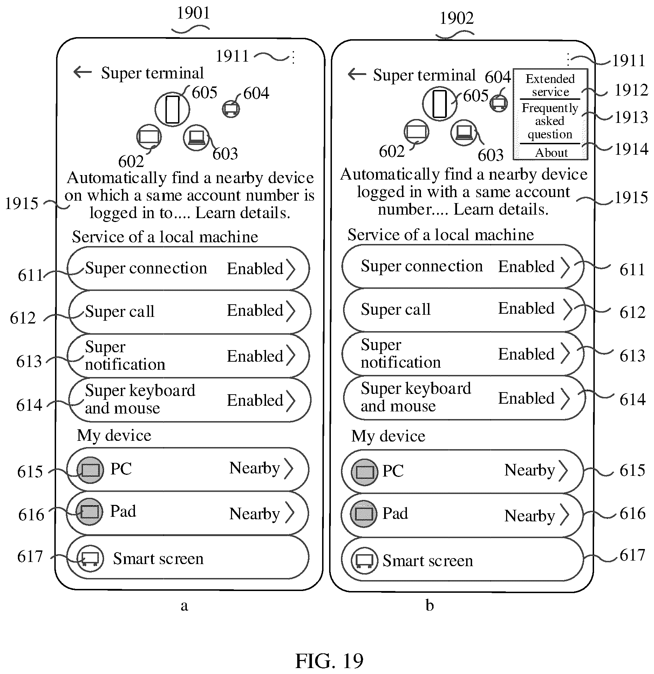

The second interface may further include a detail learning option and more options. With reference to FIG. 19, the detail learning option and more options are described:
FIG. 19a shows an example of a second interface 1901. A detail learning option 1915 is provided below a trust ring, and more options 1911 are provided in an upper right corner of the second interface 1901. In response to the user clicking the detail learning option in the second interface 1901, the first mobile phone 401 displays an introduction interface for a super terminal function. The introduction interface includes text information describing the super terminal function in detail. In response to the user clicking the more options 1911 in the second interface 1901, the first mobile phone 401 displays a function selection window of the more options 1911 in the second interface 1901 in a hovering manner. As shown in FIG. 19b, the function selection window is displayed near the more options 1911 in the second interface 1902 in a hovering manner. The function selection window includes an extended service option 1912, a frequently asked question option 1913, and an about option 1914. In response to the user clicking the extended service option 1912, the first mobile phone 401 displays an extended service interface. The extended service interface includes an extended service function of the super terminal function, for example, an owner identification function. In response to the user clicking the frequently asked question option 1913, the first mobile phone 401 displays a frequently asked question interface, and the frequently asked question interface includes a frequently asked question encountered by the user when using the super terminal function and a solution, for example, "Why does a super terminal not take effect?" and a corresponding solution. In response to the user clicking the about option 1914, the first mobile phone 401 displays an exit interface of the super terminal function. The exit interface includes an icon of the super terminal function, a super terminal learning option, and a service stopping option. In response to the user clicking the super terminal learning option in the exit interface, the first mobile phone 401 displays an introduction interface of the super terminal function, and the introduction interface includes text information describing the super terminal function in detail. In response to the user clicking the service stopping option, the first mobile phone 401 disables the super terminal function. After the super terminal function is disabled, none of super terminal related functions in the first mobile phone is available. More options may alternatively be set on the second mobile phone 402, the notebook computer 404, and the tablet computer 403, and have a same processing procedure as the more options of the first mobile phone 401.

If for the account number option in the first interface 501, a user account number is not logged in to, for example, the user uses the super terminal function of a first host for the first time. If the current user has not confirmed, through the first host 401, a protocol corresponding to the super terminal function, that is, there is no protocol confirmation information of the protocol corresponding to the super terminal function in the first host, in response to the user clicking the super terminal option in the first interface 501, the first mobile phone 401 displays a protocol confirmation interface. The protocol confirmation interface includes text information of the protocol corresponding to the super terminal function and a protocol confirmation option. In response to the user clicking the protocol confirmation option in the protocol confirmation interface, the first mobile phone displays an account number login interface, and the account number login interface includes an account number entering area, a password entering area, and an account number submission option. In response to an operation of the user clicking the account number submission option, the first mobile phone 401 verifies an account number and a password that are entered by the user, and displays the second interface after the account number and the password are successfully verified. If the current user has confirmed, through the first mobile phone 401, a protocol corresponding to the super terminal function, that is, there is protocol confirmation information of the protocol corresponding to the super terminal function in the first mobile phone 401, in response to the user clicking the super terminal option in the first interface 501, the first mobile phone 401 displays an account number login interface, and the account number login interface includes an account number entering area, a password entering area, and an account number submission option. In response to an operation of the user clicking the account number submission option, the first mobile phone verifies an account number and a password that are entered by the user, and displays the second interface after the account number and the password are successfully verified. The second mobile phone 402, the notebook computer 404, the tablet computer 403, and the smart screen 405 have a same processing procedure when the user account number is not currently logged in to and/or there is no protocol confirmation information. In an implementation, after the first mobile phone 401 disables the super terminal function, in response to the user clicking the super terminal option in the first interface 501, the first mobile phone 401 displays a protocol confirmation interface.

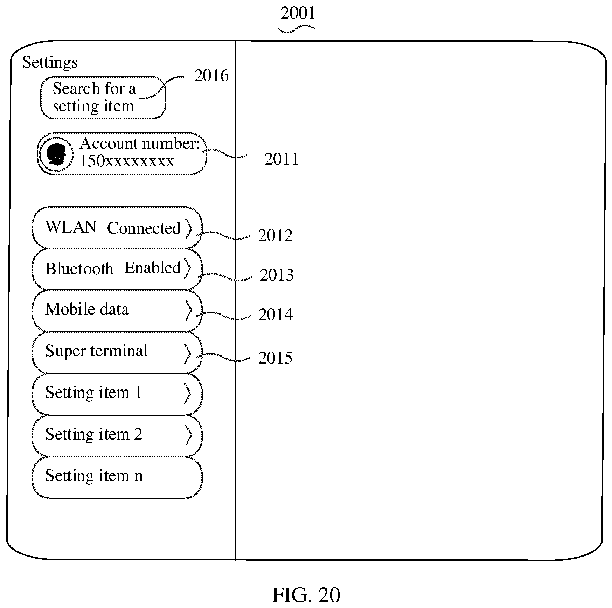

The tablet computer 403 displays a third interface, and the third interface may be a setting interface of the tablet computer 403. FIG. 20 shows an example of a third interface 2001. The third interface includes a plurality of setting options, including an account number option 2011, a WLAN option 2012, a Bluetooth option 2013, a mobile data option 2014, a super terminal option 2015, and the like. The third interface further includes an option 2016 for searching for a setting item. Functions implemented by the account number option 2011, the WLAN option 2012, the Bluetooth option 2013, the mobile data option 2014, and the super terminal option 2015 are respectively the same as those implemented by the account number option 511, the WLAN option 512, the Bluetooth option 513, the mobile data option 514, and the super terminal option 515 in FIG. 5a. Details are not described herein again.

The user may click the option 2016 for searching for a setting item to perform a search operation on the setting item. In response to the user clicking the option 2016 for searching for a setting item in the second interface 2001, the tablet computer 403 may display a setting item search interface in a right area of the second interface 2001. The setting item search interface includes a setting item search box. The user may enter a setting item name or a keyword in the setting item search box. In response to the setting item name or the keyword entered by the user in the setting item search box, the tablet computer 403 searches for a corresponding setting item based on the setting item name or the keyword entered by the user, and displays a found setting item below the setting item search box. The user may click each of found setting items to perform a corresponding setting operation.

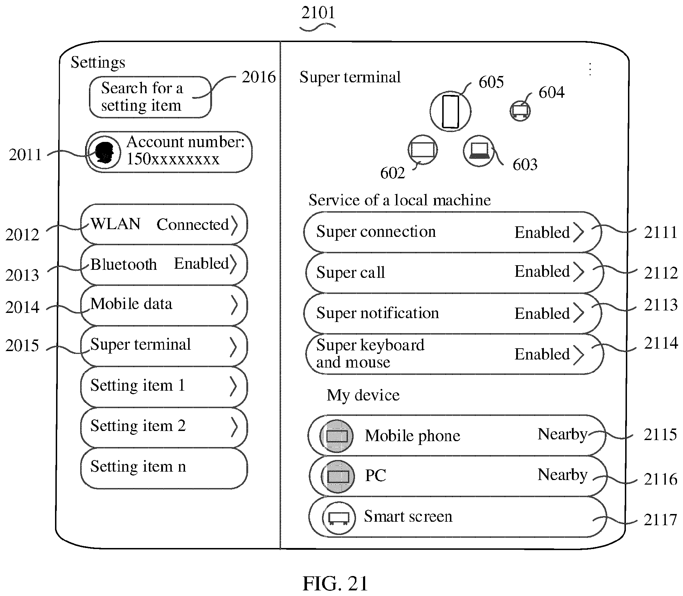

In response to the user clicking the super terminal option 2015 in the third interface 2001, the tablet computer 403 displays a coordination setting interface of the tablet computer. FIG. 21 shows an example of a coordination setting interface 2101 of the tablet computer. The coordination setting interface 2101 of the tablet computer includes all content of the second interface 2001, and further includes a trust ring. The trust ring in the coordination setting interface 2101 of the tablet computer is the same as the trust ring in the second interface 601. Details are not described herein again. The coordination setting interface 2101 of the tablet computer further includes options of a plurality of coordination services. As shown in FIG. 21, the coordination services include a super connection option 2111, a super call option 2112, a super notification option 2113, and a super keyboard and mouse option 2114 among services of the tablet computer. The coordination setting interface 2101 of the tablet computer further includes a my device display area. A device in the my device display area and the first mobile phone have currently enabled the super terminal function and a same account number is logged in to. As shown in FIG. 21, the my device display area includes a mobile phone (the first mobile phone) display area 2115, a PC display area 2116, and a smart screen display area 2117. The mobile phone display area 2115 includes a name "mobile phone" and "nearby", the PC display area 1215 may include a name "PC" and "nearby", and the smart screen display area 1216 may include a name "smart screen". A difference from the second interface 601 displayed on the first mobile phone is that the my device display area in the coordination setting interface 2101 of the tablet computer displayed by the tablet computer 403 cannot be operated.

With reference to FIG. 21, a super connection of the tablet computer 403 is described:

When the tablet computer 403 displays the coordination setting interface 2101 of the tablet computer, the user may click the super connection option 2111 in the coordination setting interface 2101 of the tablet computer, and in response to the user clicking the super connection option 2111 in the coordination setting interface 2101 of the tablet computer, the tablet computer 403 displays a super connection interface. The super connection interface includes icons of one or more devices of a mobile phone, the tablet computer, the notebook computer, and the smart screen among my devices, and icons of the mobile phone, the tablet computer, and the notebook computer are displayed in an icon display area. The super connection interface further includes a super connection function button (a virtual button). The super connection function button may include a name "super connection" and a status box of the super connection function button. When a super connection function is enabled, a selected identification in the status box of the super connection function button is located on a right side of the status box, indicating that the super connection function of the tablet computer 403 is enabled.

The user may click the super connection function button to enable or disable the super connection function. In response to the operation of the user disabling the super connection function, that is, in response to the user clicking the super connection function button in the super connection interface, the tablet computer 403 displays, in the super connection interface in a hovering manner, a super connection prompt window for disabling the super connection function. The super connection prompt window may include prompt information, a cancellation option, and a disabling option. In response to the user clicking the disabling option in the super connection prompt window, the tablet computer disables the super connection function. When the super connection function is disabled, the selected identification in the status box of the super connection function button is located on a left side of the status box. After opening the super setting interface 801 of the tablet computer corresponding to the tablet computer on the first mobile phone 401, the user may see that the super connection function is disabled. The selected identification in the status box of the super connection option 8011 in the super setting interface 801 of the tablet computer is located on a left side, indicating that the super connection function of the tablet computer 403 is disabled.

With reference to FIG. 21, a super call of the tablet computer 403 is described:

When the tablet computer 403 displays the coordination setting interface 2101 of the tablet computer, the user may click the super call option 2112 in the coordination setting interface 2101 of the tablet computer, and in response to the user clicking the super call option 2112 in the coordination setting interface 2101 of the tablet computer, the tablet computer displays a super call interface. The super call interface includes icons of one or more devices of a mobile phone, the tablet computer, the notebook computer, and the smart screen among the my devices, and icons of the mobile phone, the tablet computer, and the notebook computer are displayed in an icon display area. The super call interface further includes a super call function button (a virtual button). The super call function button may include a name "super call" and a status box of the super call function button. When a super call function is enabled, a selected identification in the status box of the super call function button is located on a right side of the status box, indicating that the super call function of the tablet computer 403 is enabled.

The user may click the super call function button to enable or disable the super call function. In response to the operation of the user disabling the super call function, that is, the user clicking the super call function button in the super call interface, the tablet computer 403 displays, in the super call interface in a hovering manner, a super call prompt window for disabling the super call function. The super call prompt window may include prompt information, a cancellation option, and a disabling option. In response to the user clicking the disabling option in the super call prompt window, the tablet computer 403 disables the super call function. When the super call function is disabled, the selected identification in the status box of the super call function button is located on a left side of the status box. After opening the super setting interface 801 of the tablet computer corresponding to the tablet computer 403 on the first mobile phone 401, the user may see that the super call function is disabled. The selected identification in the status box of the super call option 8012 in the super setting interface 801 of the tablet computer is located on a left side, indicating that the super call function of the tablet computer 403 is disabled.

With reference to FIG. 21, FIG. 22, FIG. 23, and FIG. 24, a super notification of the tablet computer 403 is described:

When the tablet computer 403 displays the coordination setting interface 2101 of the tablet computer, the user may click the super notification option 2113 in the coordination setting interface 2101 of the tablet computer, and in response to the user clicking the super notification option 2113 in the coordination setting interface 2101 of the tablet computer, the tablet computer 403 displays a super notification interface. FIG. 22 shows an example of a super notification interface 2201. The super notification interface 2201 includes icons of one or more devices of a tablet computer, a tablet computer, the notebook computer, and the smart screen among my devices. Icons of the tablet computer, the tablet computer, and the notebook computer are displayed in an icon display area. The super notification interface 2201 further includes a super notification function button (a virtual button) 2213. The super notification function button 2213 may include a name "super notification" and a status box of the super notification function button 2213. When the super notification function is enabled, a selected identification in the status box of the super notification function button 2213 is located on a right side of the status box, indicating that the super notification function of the tablet computer 403 is enabled.

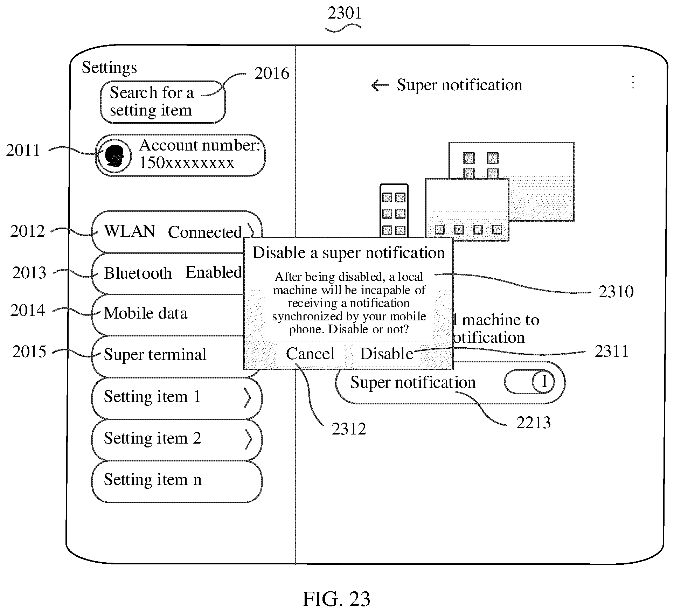

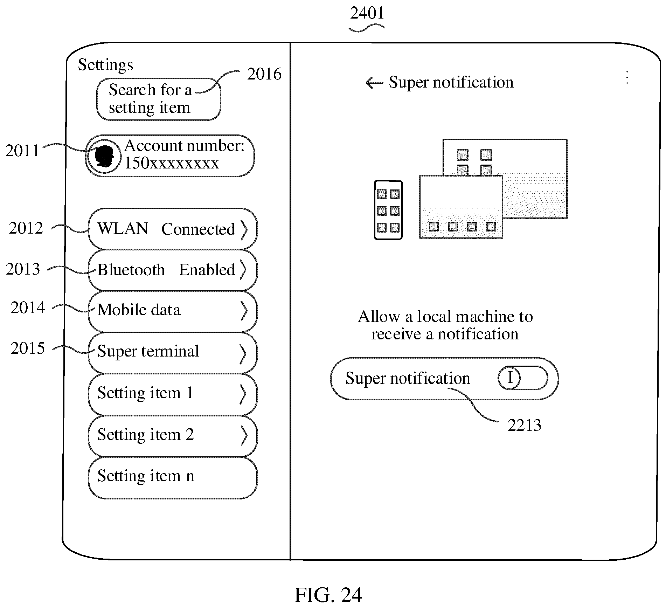

The user may click the super notification function button 2213 to enable or disable the super notification function. In response to the operation of the user disabling the super notification function, that is, the user clicking the super notification function button 2213 in the super notification interface 2201, the tablet computer 403 displays, in the super notification interface 2201 in a hovering manner, a super notification prompt window for disabling the super notification function. FIG. 23 shows an example of the super notification interface 2201 obtained after the super notification prompt window is displayed in the hovering manner. The super notification prompt window 2310 may include prompt information, a cancellation option 2312, and a disabling option 2311. In response to the user clicking the disabling option 2311 in the super notification prompt window 2310, the tablet computer 403 disables the super notification function and displays a super notification interface obtained after the super notification function is disabled. FIG. 24 shows an example of a super notification interface 2401 obtained after the super notification function is disabled. When the super notification function is disabled, the selected identification in the status box of the super notification function button 2213 is located on a left side of the status box. After opening the super setting interface 801 of the tablet computer corresponding to the tablet computer 403 on the first mobile phone 401, the user may see that the super notification function is disabled and may see that the super call function is disabled. The selected identification in the status box of the super notification option 8013 in the super setting interface 801 of the tablet computer is located on a left side, indicating that the super notification function of the tablet computer 403.

With reference to FIG. 21, a super keyboard and mouse of the tablet computer 403 are described:
When the tablet computer 403 displays the coordination setting interface 2101 of the tablet computer, the user may click the super keyboard and mouse option 2114 in the coordination setting interface 2101 of the tablet computer, and in response to the user clicking the super keyboard and mouse option 2114 in the coordination setting interface 2101 of the tablet computer, the tablet computer 403 displays a super keyboard and mouse interface. The super keyboard and mouse interface includes icons of one or more devices of a tablet computer, a tablet computer, the notebook computer, and the smart screen among the my devices. Icons of the tablet computer, the tablet computer, and the notebook computer are displayed in an icon display area. The super keyboard and mouse interface further includes a super keyboard and mouse function button (a virtual button). The super keyboard and mouse function button may include a name "super keyboard and mouse" and a status box of the super keyboard and mouse function button. When a super keyboard and mouse function is enabled, a selected identification in a status box of the super keyboard and mouse function button is located on a right side of the status box, indicating that the super keyboard and mouse function of the tablet computer 403 is enabled. The user may click the super keyboard and mouse function button to enable or disable the super keyboard and mouse function. In response to the operation of the user disabling the super keyboard and mouse function, that is, in response to the user clicking the super keyboard and mouse function button in the super keyboard and mouse interface, the tablet computer 403 displays, in the super keyboard and mouse interface in a hovering manner, a super keyboard and mouse prompt window for disabling the super keyboard and mouse function. The super keyboard and mouse prompt window may include prompt information, a cancellation option, and a disabling option. In response to the user clicking the disabling option in the super keyboard and mouse prompt window, the tablet computer 403 disables the super keyboard and mouse function. When the super keyboard and mouse function is disabled, the selected identification in the status box of the super keyboard and mouse function button is located on a left side of the status box. After opening the super setting interface 801 of the tablet computer corresponding to the tablet computer 403 on the first mobile phone 401, the user may see that the super keyboard and mouse function is disabled. The selected identification in the status box of the super keyboard and mouse option 8014 in the super setting interface 801 of the tablet computer is located on a left side, indicating that the super keyboard and mouse function of the tablet computer 403 is disabled.

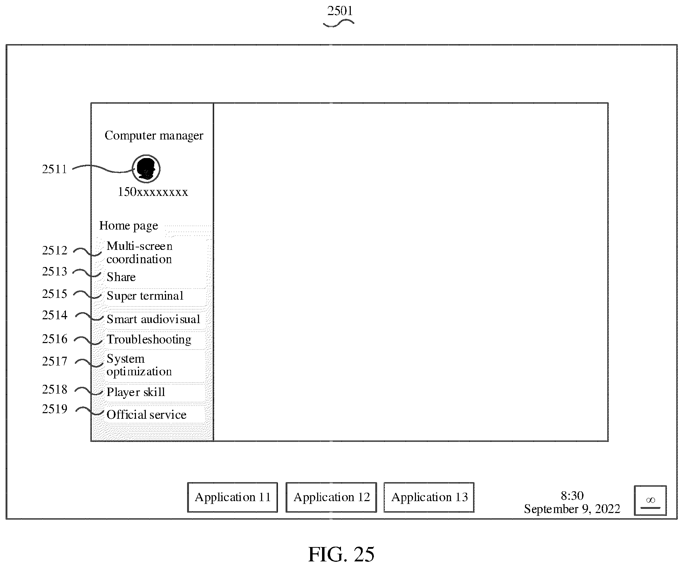

The notebook computer 404 displays a fourth interface, and the fourth interface may be a computer management interface of the notebook computer. FIG. 25 shows an example of a fourth interface 2501. The fourth interface 2501 includes a plurality of setting options including an account number option 2511, a multi-screen coordination option 2512, a sharing option 2513, a super terminal option 2515, a smart audiovisual option 2514, a troubleshooting option 2516, a system optimization option 2517, a player skill option 2518, an official service option 2519, and the like. A function implemented by the account number option 2511 is the same as that implemented by the account number option 511 in FIG. 5a. Details are not described herein again. The user may click the multi-screen coordination option 2512 to enter a multi-screen coordination interface of the notebook computer, and perform a corresponding multi-screen coordination operation on the multi-screen coordination interface. For example, the multi-screen coordination interface includes a multi-screen coordination device currently capable of the multi-screen coordination. The user can click the multi-screen coordination device to add the multi-screen coordination device to the multi-screen coordination. The user may click the sharing option 2513 to enter a sharing interface of the notebook computer, and perform a corresponding sharing operation on the sharing interface. For example, the sharing interface includes a sharing device currently capable of the sharing. The user can click the sharing device to perform a data sharing operation. The user may click the smart audiovisual option 2514 to enter a smart audiovisual interface of the notebook computer, to perform a corresponding smart audiovisual operation on the smart audiovisual interface. The user may click the troubleshooting option 2516 to enter a troubleshooting interface of the notebook computer, and perform a corresponding troubleshooting operation on the troubleshooting interface. The user may click the system optimization option 2517 to enter a system optimization interface of the notebook computer, and perform a corresponding system optimization operation on the system optimization interface. For example, the system optimization interface includes an optimization option, and the user may click the optimization option to perform an optimization operation on the notebook computer. In response to the user clicking the optimization option, the notebook computer performs the optimization operation. The user may click the player skill option 2518 to enter a player skill interface of the notebook computer, and the player skill interface includes usage skill information of the notebook computer. The user may click the official service option 2519 to enter an official service interface of the notebook computer, and the official service interface includes official service contact information of the notebook computer.

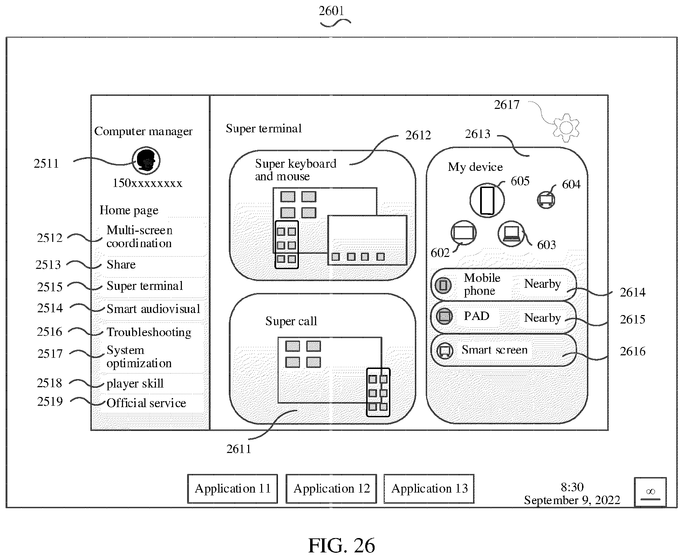

In response to the user clicking the super terminal option 2515 in the fourth interface 2501, the notebook computer 404 displays a notebook computer coordination interface. FIG. 26 shows an example of a notebook computer coordination interface 2601. The notebook computer coordination interface 2601 includes all content of the fourth interface 2501, and further includes a display area of a plurality of coordination services. As shown in FIG. 26, the display area of the coordination services includes a super keyboard and mouse display area 2612 and a super call display area 2611. Each of the super keyboard and mouse display area 2612 and the super keyboard and mouse display area 2612 includes icons of one or more devices of the first mobile phone, the second mobile phone, the tablet computer, the notebook computer, and the smart screen. As shown in FIG. 26, a first mobile phone icon, a tablet computer icon, and a notebook computer icon are included. The super call display area 2611 includes the first mobile phone icon and the notebook computer icon. In an implementation, the display area of the coordination services may further include a super connection display area and a super notification display area.

The notebook computer coordination interface 2601 further includes a my device display area 2613, the my device display area 2613 includes a trust ring, and the trust ring of the my device display area 2613 is the same as the trust ring of the second interface 601. Details are not described herein again. As shown in FIG. 26, the my device display area includes a mobile phone display area 2614, a PAD display area 2615, and a smart screen display area 2616. The notebook computer coordination interface 2601 further includes a setting option 2617. None of the my device display area, the super keyboard and mouse display area, and the super call display area in the notebook computer coordination interface 2601 displayed by the notebook computer cannot be operated.

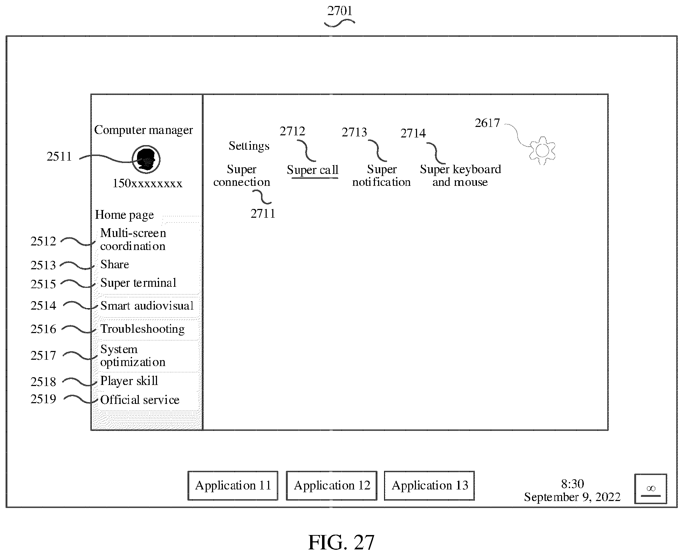

In response to the user clicking the setting option 2617 in the notebook computer coordination interface 2601, the notebook computer displays a coordination setting interface of the notebook computer. FIG. 27 shows an example of a coordination setting interface 2201 of the notebook computer. The coordination setting interface 2701 of the notebook computer includes all content of the computer management interface. The coordination setting interface 2701 of the notebook computer further includes a super connection option 2711, a super call option 2712, a super notification option 2713, and a super keyboard and mouse option 2714.

With reference to FIG. 27, a super connection of the notebook computer 404 is described:
When the notebook computer 404 displays the coordination setting interface 2701 of the notebook computer, the user may click the super connection option 2711 in the coordination setting interface 2701 of the notebook computer, and in response to the user clicking the super connection option 2711 in the coordination setting interface 2701 of the notebook computer, the notebook computer 404 displays a super connection interface. The super connection interface includes all content of the coordination setting interface 2701 of the notebook computer, and further includes icons of one or more devices of a mobile phone, a notebook computer, a notebook computer, and the smart screen among my devices, and icons of the mobile phone, the notebook computer, and the notebook computer are displayed in an icon display area. The super connection interface further includes a super connection function button (a virtual button). The super connection function button may include a name "super connection" and a status box of the super connection function button. When a super connection function is enabled, a selected identification in the status box of the super connection function button is located on a right side of the status box. A display area of the super connection option 2711 in the super connection interface is underlined for display.

The user may click the super connection function button to enable or disable the super connection function. In response to the operation of the user disabling the super connection function, that is, in response to the user clicking the super connection function button in the super connection interface, the notebook computer 404 displays, in the super connection interface in a hovering manner, a super connection prompt window for disabling the super connection function. The super connection prompt window may include prompt information, a cancellation option, and a disabling option. In response to the user clicking the disabling option in the super connection prompt window, the notebook computer disables the super connection function. When the super connection function is disabled, the selected identification in the status box of the super connection function button is located on a left side of the status box. After opening the notebook computer interface 802 corresponding to the notebook computer on the first mobile phone 401, the user may see that the super connection function is disabled. The selected identification in the status box of the super connection option 8021 in the notebook computer interface 802 is located on a left side, indicating that the super connection function of the notebook computer 404 is disabled.

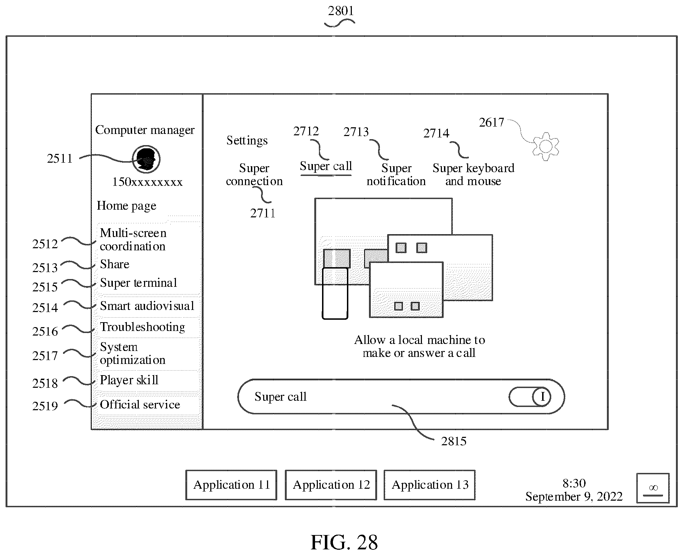

With reference to FIG. 27 and FIG. 28, a super call in the notebook computer 404 is described:
When the notebook computer 404 displays the coordination setting interface 2701 of the notebook computer, the user may click the super call option 2712 in the coordination setting interface 2701 of the notebook computer. In response to the user clicking the super call option 2712 in the coordination setting interface 2701 of the notebook computer, the notebook computer displays a super call interface of the notebook computer. FIG. 28 shows an example of a super call interface 2801 of the notebook computer. The super call interface 2801 of the notebook computer includes all content of the coordination setting interface 2701 of the notebook computer, and further includes icons of one or more devices of a mobile phone, a notebook computer, a notebook computer, and the smart screen among the my devices. The icons of the mobile phone, the notebook computer, and the notebook computer are displayed in an icon display area. The super call interface 2801 of the notebook computer further includes a super call function button (a virtual button) 2815. The super call function button 2815 may include a name "super call" and a status box of the super call function button. When a super call function is enabled, a selected identification in a status box of the super call function button is located on a right side of the status box. A display area of the super call option 2712 in the super call interface is underlined for display.

The user may click the super call function button to enable or disable the super call function. In response to the operation of the user disabling the super call function, that is, the user clicking the super call function button 2815 in the super call interface 2801 of the notebook computer, the notebook computer 404 displays, in the super call interface 2801 of the notebook computer in a hovering manner, a super call prompt window for disabling the super call function. The super call prompt window may include prompt information, a cancellation option, and a disabling option. In response to the user clicking the disabling option in the super call prompt window, the notebook computer 404 disables the super call function. When the super call function is disabled, the selected identification in the status box of the super call function button 2815 is located on a left side of the status box. After opening the notebook computer interface 802 corresponding to the notebook computer 404 on the first mobile phone 401, the user may see that the super call function is disabled. The selected identification in the status box of the super call option 8022 in the notebook computer interface 802 is located on a left side, indicating that the super call function of the notebook computer 404 is disabled.

With reference to FIG. 27, a super notification of the notebook computer 404 is described:
When the notebook computer 404 displays the coordination setting interface 2701 of the notebook computer, the user may click the super notification option 2713 in the coordination setting interface 2701 of the notebook computer. In response to the user clicking the super notification option 2713 in the coordination setting interface 2701 of the notebook computer, the notebook computer 404 displays a super notification interface of the notebook computer. The super notification interface of the notebook computer includes all content of the coordination setting interface 2701 of the notebook computer, and further includes icons of one or more devices of a notebook computer, a notebook computer, a notebook computer, and the smart screen among the my devices. The icons of the notebook computer, the notebook computer, and the notebook computer are displayed in an icon display area. The super notification interface of the notebook computer further includes a super notification function button (a virtual button). The super notification function button may include a name "super notification" and a status box of the super notification function button. When a super notification function is enabled, the selected identification in the status box of the super notification function button is located on a right side of the status box. A display area of the super notification option in the super notification interface is underlined for display.

The user may click the super notification function button to enable or disable the super notification function. In response to the operation of the user disabling the super notification function, that is, in response to the user clicking the super notification function button in the super notification interface of the notebook computer, the notebook computer 404 displays, in the super notification interface in a hovering manner, a super notification prompt window for disabling the super notification function. The super notification prompt window may include prompt information, a cancellation option, and a disabling option. In response to the user clicking the disabling option in the super notification prompt window, the notebook computer 404 disables the super notification function. When the super notification function is disabled, the selected identification in the status box of the super notification function button is located on a left side of the status box. After opening the notebook computer interface 802 corresponding to the notebook computer 404 on the first mobile phone 401, the user may see that the super notification function is disabled. The selected identification in the enabling/disabling status box of the super notification option 8023 in the notebook computer interface 802 is located on a left side, indicating that the super notification function of the notebook computer 404 is disabled.

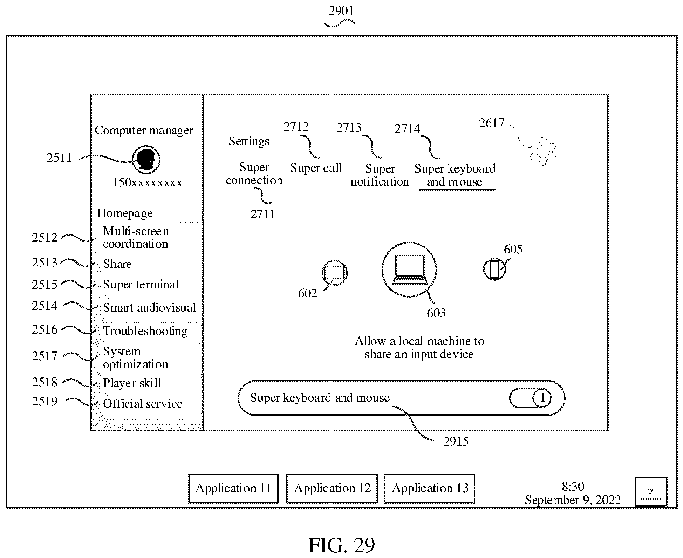

With reference to FIG. 27 and FIG. 29, a super keyboard and mouse of the notebook computer 404 are described:
When the notebook computer 404 displays 2701, the user may click the super keyboard and mouse option 2714 in the coordination setting interface 2701 of the notebook computer. In response to the user clicking the super keyboard and mouse option 2714 in the coordination setting interface 2701 of the notebook computer, the notebook computer 404 displays a super keyboard and mouse interface of the notebook computer. FIG. 29 shows an example of a super keyboard and mouse interface 2901 of the notebook computer. The super keyboard and mouse interface of the notebook computer includes all content of the coordination setting interface 2701 of the notebook computer, and further includes a super keyboard and mouse function button (a virtual button) 2915, and the super keyboard and mouse function button may include a name super keyboard and mouse and a status box of the super keyboard and mouse function button. When the super keyboard and mouse function is enabled, a selected identification in the status box of the super keyboard and mouse function button is located on a right side of the status box. A display area of the super keyboard and mouse option in the super keyboard and mouse interface is underlined for display.

The user may click the super keyboard and mouse function button in the super keyboard and mouse interface 2901 of the notebook computer to enable or disable the super keyboard and mouse function. In response to the operation of the user disabling the super keyboard and mouse function, that is, in response to the user clicking the super keyboard and mouse function button in the super keyboard and mouse interface 2901 of the notebook computer, the notebook computer 404 displays, in the super keyboard and mouse interface in a hovering manner, a super keyboard and mouse prompt window for disabling the super keyboard and mouse function. The super keyboard and mouse prompt window may include prompt information, a cancellation option, and a disabling option. In response to the user clicking the disabling option in the super keyboard and mouse prompt window, the notebook computer 404 disables the super keyboard and mouse function. When the super keyboard and mouse function is disabled, the selected identification in the status box of the super keyboard and mouse function button is located on a left side of the status box. After opening the notebook computer interface 802 corresponding to the notebook computer 404 on the first mobile phone 401, the user may see that the super keyboard and mouse function is disabled. The selected identification in the status box of the super keyboard and mouse option 8024 in the notebook computer interface 802 is located on a left side, indicating that the super keyboard and mouse function of the notebook computer 404 is disabled.

With reference to FIG. 29, the super keyboard and mouse interface 2901 of the notebook computer further includes a super keyboard and mouse control area. The super keyboard and mouse control area includes an icon of a device that enables a super keyboard and mouse function and that is among a device can currently coordinate with the first mobile phone 401. For example, in FIG. 6a, the tablet computer 403 and the notebook computer 404 are devices that may currently coordinate with the first mobile phone 401. The super keyboard and mouse function of each of the first mobile phone 401, the tablet computer 403, and the notebook computer 404 is enabled. In this case, the super keyboard and mouse control area includes a first mobile phone icon 605, a notebook computer icon 603, and a tablet computer icon 602. The notebook computer icon 603 is located in a central area of the super keyboard and mouse control area, and the first mobile phone icon 605 and the tablet computer icon 602 are located around the notebook computer icon 603.

When the notebook computer 404 displays the super keyboard and mouse interface 2901, the user may drag the notebook computer icon 603 by using a mouse of the notebook computer 404. In response to the dragging operation of the user dragging the notebook computer icon 603 by using the mouse, the notebook computer 404 determines an ending location of the drag operation. If the ending location is located in a mobile phone preset area corresponding to the first mobile phone icon 605, the notebook computer 404 sets input devices (a mouse, a keyboard, and a touchscreen) of the notebook computer as input devices of the first mobile phone, so that the first mobile phone 401 can share the input devices of the notebook computer 404. When a cursor of the notebook computer 404 is displayed in a current display interface of the first mobile phone 401 and the user enters data through the input device, the notebook computer 404 sends, to the first mobile phone 401, the data entered by the user, and the first mobile phone 401 performs a display operation or a control operation based on the data entered by the user. If the ending location is located in a tablet computer preset area corresponding to the tablet computer 403, the notebook computer 404 sets input devices (a mouse, a keyboard, and a touchscreen) of the notebook computer as input devices of the tablet computer 403, so that the tablet computer 403 can share the input devices of the notebook computer 404. When a cursor of the notebook computer 404 is displayed in a current display interface of the tablet computer 403 and the user enters data through the input device, the notebook computer 404 sends, to the tablet computer 403, the data entered by the user, and the tablet computer 403 performs a display operation or a control operation based on the data entered by the user. The mobile phone preset area may be an area including a display area occupied by the first mobile phone icon 605 and the tablet computer area may be an area including a display area occupied by the tablet computer icon 602.

In FIG. 7A, when the super keyboard and mouse function of the first mobile phone 401 is disabled by using a super keyboard and mouse function button 7014, display of the first mobile phone icon 605 is canceled in the super keyboard and mouse control area in the super keyboard and mouse interface 2901 of the notebook computer in FIG. 29. In FIG. 8A, the super connection function of the tablet computer 403 is disabled by using the super keyboard and mouse option 8014 in the super setting interface 801 of the tablet computer, or the super keyboard and mouse function of the tablet computer 403 is disabled by using the super keyboard and mouse function button in the super connection interface of the tablet computer 403. Display of the tablet computer icon 602 is canceled in the super keyboard and mouse control area in FIG. 29. When the second mobile phone 402 enables Bluetooth and WI-FI, the second mobile phone 402 becomes a device that may currently coordinate with the first mobile phone 401. When the super keyboard and mouse function of the second mobile phone 402 is enabled, a second mobile phone icon is displayed in the super keyboard and mouse control area in FIG. 29. In FIG. 8D, the super connection function of the second mobile phone 402 is disabled by using the super connection option 8041 in the super setting interface 804 of the second mobile phone, or the super keyboard and mouse function of the second mobile phone 402 is disabled by using the super keyboard and mouse function button 3412 in the super keyboard and mouse interface 3402 of the second mobile phone 402. Display of the second mobile phone icon is canceled in the super keyboard and mouse control area in FIG. 29.

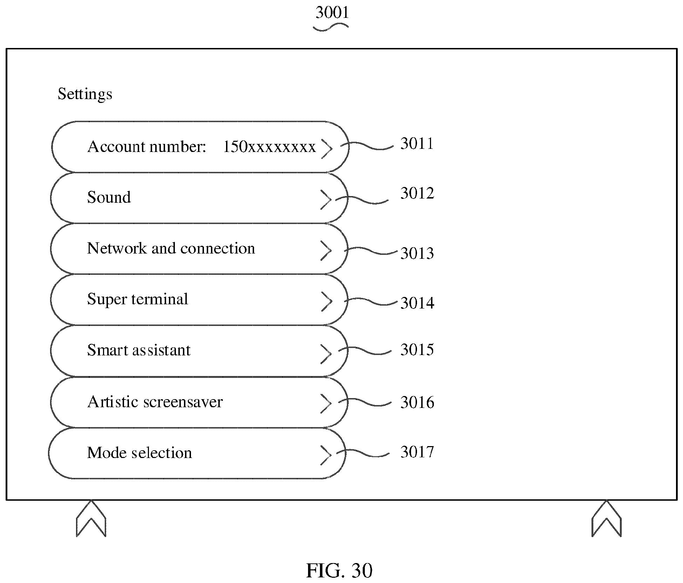

The smart screen displays a fifth interface, and the fifth interface may be a setting interface of the smart screen. FIG. 30 shows an example of a fifth interface 3001. The fifth interface includes a plurality of setting options including an account number option 3011, a sound option 3012, a network and connection option 3013, a super terminal option 3014, a smart assistant option 3015, an artistic screensaver option 3016, a mode selection option 3017, and the like. A function implemented by the account number option 3011 is the same as that implemented by the account number option 511 in FIG. 5a. A function implemented by the network and connection option 3013 is the same as that implemented by the WLAN option 512 in FIG. 5a. Details are not described herein again. The user may click the sound option 3012 to enter a sound setting of the smart screen 405. For example, in response to the operation of the user clicking the sound option 3012, the smart screen 405 displays a sound setting interface or displays a sound setting bar hovering in the fifth interface 3001. The user may set a volume or the like of the smart screen 405 by using the sound setting interface or the sound setting bar. The user may click the smart assistant option 3015 to enter a smart assistant interface of the smart screen, and perform a corresponding smart assistant operation on a smart assistant. The user may click the artistic screensaver option 3016 to enter an artistic screensaver interface of the smart screen 405. The artistic screensaver interface may include a plurality of artistic images. The user may click each artistic image to set an artistic screensaver of the smart screen 405. In response to the operation of the user clicking the artistic image, the smart screen 405 uses, as the artistic screensaver of the smart screen 405, the artistic image clicked by the user. The user may click the mode selection option 3017 to enter a mode selection interface of the smart screen 405. The mode selection interface may include a plurality of pieces of mode information of the smart screen 405. The user may click each piece of the mode information to set a mode of the smart screen 405. In response to the operation of the user clicking the mode information, the smart screen 405 uses, as the mode of the smart screen 405, a mode corresponding to the mode information clicked by the user.

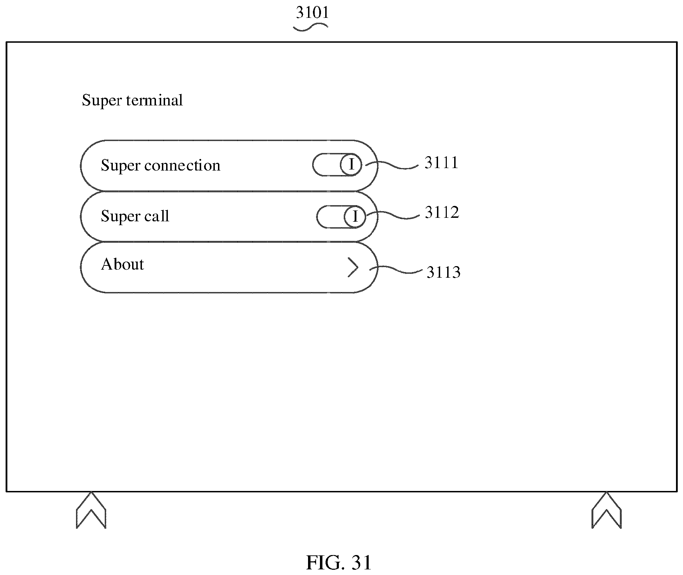

In response to the user clicking the super terminal option 3014 in the fifth interface 3001, the smart screen 405 displays a coordination setting interface of the smart screen. FIG. 31 shows an example of a coordination setting interface 3101 of the smart screen. The coordination setting interface 3101 of the smart screen includes options of a plurality of coordination services. As shown in FIG. 31, the coordination services includes a super connection option 3111 and a super call option 3112 among services of the smart screen, and a super connection function button (a virtual button) and a super call function button (a virtual key) are included. The coordination setting interface 3101 of the smart screen further includes an about option 3113.

With reference to FIG. 31, a super connection of the smart screen 405 is described:

When the smart screen 405 displays the coordination setting interface 3101 of the smart screen, the user may click the super connection option 3111 in the coordination setting interface 3101 of the smart screen. In response to the user clicking the super connection option 3111 in the coordination setting interface 3101 of the smart screen, the smart screen 405 displays, in the coordination setting interface 3101 of the smart screen in a hovering manner, a super call prompt window for disabling a super connection function. The super connection prompt window may include prompt information and an option for canceling or disabling the super call function. In response to the user clicking the option for disabling the super connection function, the smart screen disables the super connection function, and sets a super connection function button to a disabled state in the coordination setting interface 3101 of the smart screen. After opening the super setting interface 803 of the smart screen on the first mobile phone 401, the user may see that the super connection function is disabled. A selected identification in a status box of the super connection option 8031 in the super setting interface 803 of the smart screen is located on a left side, indicating that the super connection function of the smart screen 405 is disabled.

With reference to FIG. 31, a super call of the smart screen 405 is described:

When the smart screen 405 displays the coordination setting interface 3101 of the smart screen, the user may click the super call option 3112 in the coordination setting interface 3101 of the smart screen. In response to the user clicking the super call option 3112 in the coordination setting interface 3101 of the smart screen, the smart screen displays, in the coordination setting interface 3101 of the smart screen in a hovering manner, a super call prompt window for disabling a super call function. The super call prompt window may include prompt information and an option for canceling or disabling the super call function. In response to the user clicking the option for disabling the super call function, the smart screen disables the super call function, and sets a super call function button to a disabled state in the coordination setting interface 3101 of the smart screen. After opening the super setting interface 803 of the smart screen on the first mobile phone 401, the user may see that the super call function is disabled. A selected identification in a status box of the super connection option 8032 in the super setting interface 803 of the smart screen is located on a left side, indicating that the super call function of the smart screen 405 is disabled.

In response to the user clicking the about option 3113 in the coordination setting interface 3101 of the smart screen, the smart screen 405 displays an exit interface of the super terminal function. The exit interface includes a service stopping option. In response to the user clicking the service stopping option in the exit interface, the smart screen disables the super terminal function. After the super terminal function is disabled, none of super terminal related functions in the smart screen is available.

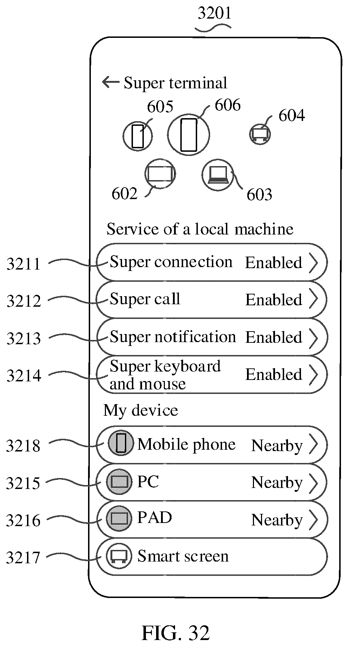

For example, in FIG. 4a, when the second mobile phone 402 enables Bluetooth and WI-FI, the second mobile phone 402 becomes a device that may currently coordinate with the first mobile phone 401. The my device list in FIG. 6a may further include a second mobile phone option corresponding to the second mobile phone 402. A trust ring further includes a second mobile phone icon. The second mobile phone 402 displays a same first interface as the first mobile phone 401. In response to the user clicking the super terminal option in the first interface 501, the second mobile phone 402 displays a sixth interface. FIG. 32 shows an example of a sixth interface 3201. The sixth interface 3201 includes a trust ring similar to that in the second interface 601. A difference from the trust ring in the second interface 401 is that, in the sixth interface 3201, the second mobile phone icon 606 is a device icon in a center of the trust ring, and the first mobile phone icon 605, the notebook computer icon 603, the tablet computer icon 602, and the smart screen icon 604 are, in turn, device icons in a ring-like area in the trust ring. The sixth interface 3201 includes same options of a plurality of coordination services as the second interface 601. As shown in FIG. 32, the coordination services include a super connection option 3211, a super call option 3212, a super notification option 3213, and a super keyboard and mouse option 3214 among services of the second mobile phone 402. The sixth interface 3201 further includes a my device list similar to that in the second interface 601. A PC option 3215, a PAD option 3216, and a smart screen option 3217 are respectively the same as the PC option 615, the PAD option 616, and the smart screen option 617 in the second interface 601, and a difference from the my device list in the second interface 601 is that a mobile phone option 3218 in the sixth interface 3201 is a first mobile phone option. An operation that may be performed by the user on the sixth interface 3201 of the second mobile phone 401, an interface obtained after the operation, and a function of each option are similar to those for the second interface 601. Details are not described herein again.

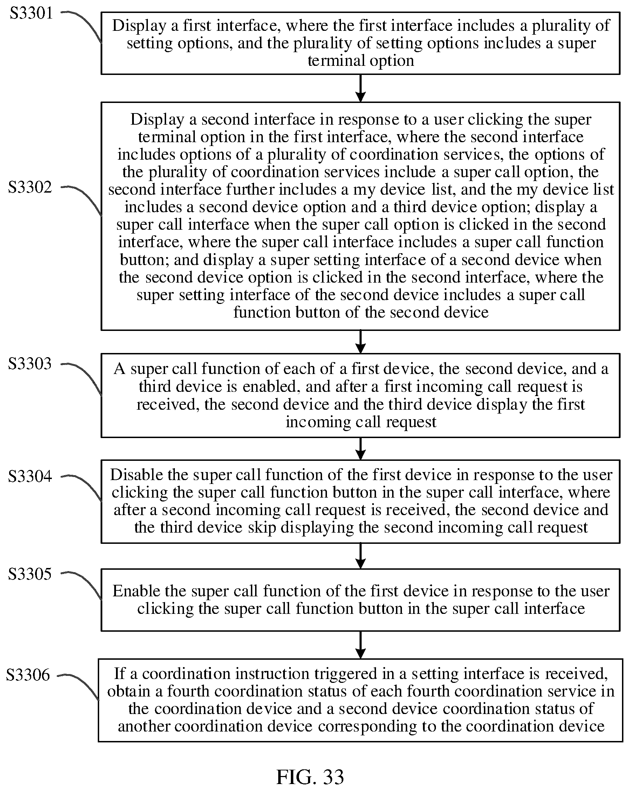

FIG. 33 is a flowchart of a coordination control method according to an embodiment of this application. As shown in FIG. 33, the coordination control method is applied to a first device, the first device establishes a communication connection to a second device, the first device establishes a communication connection to a third device, and the coordination control method may include the following steps.

Step S3301: Display a first interface, where the first interface includes a plurality of setting options, and the plurality of setting options include a super terminal option.

Step S3302: Display a second interface in response to a user clicking the super terminal option in the first interface, where the second interface includes options of a plurality of coordination services, the options of the plurality of coordination services include a super call option, the second interface further includes a my device list, and the my device list includes a second device option and a third device option; display a super call interface when the super call option is clicked in the second interface, where the super call interface includes a super call function button; and display a super setting interface of the second device when the second device option is clicked in the second interface, where the super setting interface of the second device includes a super call function button of the second device;

Step S3303: A super call function of each of the first device, the second device, and the third device is enabled, and after a first incoming call request is received, the second device and the third device display the first incoming call request.

Step S3304: Disable the super call function of the first device in response to the user clicking the super call function button in the super call interface, where after a second incoming call request is received, the second device and the third device skip displaying the second incoming call request.

Step S3305: Enable the super call function of the first device in response to the user clicking the super call function button in the super call interface.

Step S3306: Disable the super call function of the second device in response to the user clicking the super call function button in the super setting interface of the second device, where after a third incoming call request is received, the second device skips displaying the third incoming call request, and the third device displays the third incoming call request.

The first device may be a first mobile phone 401, the second device may be any one of a tablet computer 403, a notebook computer 404, a smart screen 405, and a second mobile phone 402, and the third device may be any one of the tablet computer 403, the notebook computer 404, the smart screen 405, and the second mobile phone 402 except the second device. The first incoming call request, the second incoming call request, and the third incoming call request may be incoming call requests received by the first mobile phone 401. For an execution process of each step of this embodiment, refer to the previous embodiments, including the embodiments corresponding to FIG. 5, FIG. 6, FIG. 7B, FIG. 8A to FIG. 8D, and the like. Details are not described herein again. In this embodiment, the first device may stream the incoming call request to the second device and the third device, the second device does not display the incoming call request of the first device after the super call function of the second device is disabled. The incoming call request of the first device is streamed to the second device and the third device, thereby implementing cross-device streaming use of the incoming call request of the first device. When it is inconvenient for the first device to answer an incoming call, the incoming call of the first device is answered through another device, thereby enhancing user experience. In addition, the first device may perform cross-device management on the super call function of the second device, thereby further enhancing user experience.

In a possible implementation, after step S3302, the coordination control method further includes the following steps:

Step S3307: When a first dialing request of the second device is received, display the first dialing request, perform a dialing operation of the first dialing request, and the third device skips displaying the first dialing request.

Step S3308: After the super call function of the first device is disabled, skip displaying a second dialing request of the second device.

For an execution process of each step of this embodiment, refer to the previous embodiments. Details are not described herein again. In this embodiment, the first device can perform the dialing operation based on the dialing request of the second device, so that when the second device does not have a call making function, the user can make a call on the second device through the dialing operation by the first device, thereby further enhancing user experience.

In a possible implementation, the first device is a first mobile phone, the second device is a second mobile phone, the super call function of each of the first device, the second device, and the third device is enabled, and after step S3302, the coordination control method further includes the following steps:
Step S3309: When the second device receives a fourth incoming call request, display the fourth incoming call request, where the third device displays the fourth incoming call request.

Step S3310: Disable the super call function of the first device in response to the user clicking the super call function button in the super call interface.

Step S3311: When the second device receives a fifth incoming call request, skip displaying the fifth incoming call request, where the third device displays the fifth incoming call request.

For an execution process of each step of this embodiment, refer to the previous embodiments. Details are not described herein again. The fourth incoming call request and the fifth incoming call request may be incoming call requests received by the second mobile phone 402. In this embodiment, the second device may stream the incoming call request to the first device and the third device, thereby implementing cross-device streaming use of the incoming call request of the second device. When it is inconvenient for the second device to answer an incoming call, the incoming call of the second device is answered through another device, thereby enhancing user experience.

In a possible implementation, the options of the plurality of coordination services further include a super connection option, and when the super connection option is clicked in the second interface, a super connection interface is displayed, where the super connection interface includes a super connection function button; the super setting interface of the second device includes a super connection function button of the second device; and after step S3302, the coordination control method further includes the following steps:
Step S3312: A super connection function of each of the first device, the second device, and the third device is enabled, a target application is installed on each of the first device, the second device, and the third device, display a current running interface of the target application, and the second device and the third device display an icon of the target application through flickering.

Step S3313: Disable the super connection function of the first device in response to the user clicking the super connection function button in the super connection interface, and when the first device displays the current running interface of the target application, the second device and the third device skip displaying the icon of the target application.

Step S3314: Enable the super connection function of the first device in response to the user clicking the super connection function button in the super connection interface.

Step S3315: Disable the super connection function of the second device in response to the user clicking the super connection function button in the super setting interface of the second device; and when the first device displays the current running interface of the target application, the second device skips displaying the icon of the target application, and the third device displays the icon of the target application.

For an execution process of each step of this embodiment, refer to the previous embodiments, including the embodiments corresponding to FIG. 5, FIG. 6, FIG. 7A, FIG. 8A to FIG. 8D, and the like. Details are not described herein again. In this embodiment, the first device may stream the current running interface of the application to the second device and the third device, so that the application of the first device is continuously used on the second device and the third device. After the super connection function of the second device is disabled, the second device does not display a current running interface of the first device, thereby implementing cross-device streaming use of the application in the first device, and enhancing user experience. In addition, the first device may perform cross-device management on the super connection function of the second device, thereby further enhancing user experience.

In a possible implementation, the options of the plurality of coordination services further include a super notification option, and when the super notification option is clicked in the second interface, a super notification interface is displayed, where the super notification interface includes a super notification function button; the super setting interface of the second device includes a super notification function button of the second device; and after step S3302, the coordination control method further includes the following steps:
Step S3316: A super notification function of each of the first device, the second device, and the third device is enabled, receive first notification information, and the second device and the third device display the notification information.

Step S3317: Disable the super notification function of the first device in response to the user clicking the super notification function button in the super notification interface, and after second notification information is received, the second device and the third device skip displaying the second notification information.

Step S3318: Enable the super notification function of the first device in response to the user clicking the super notification function button in the super notification interface.

Step S3319: Disable the super notification function of the second device in response to the user clicking the super notification function button in the super setting interface of the second device; and after third notification information is received, the second device skips displaying the third notification information, and the third device displays the third notification information.

For an execution process of each step of this embodiment, refer to the previous embodiments, including the embodiments corresponding to FIG. 5, FIG. 6, FIG. 7C, FIG. 8A to FIG. 8D, and the like. Details are not described herein again. The first notification information, the second notification information, and the third notification information are all notification information received by the first mobile phone 401. In this embodiment, the first device may forward the received notification information to the second device and the third device, so that the second device and the third device display the notification information. After the super notification function of the second device is disabled, the second device does not display the notification information of the first device, thereby implementing cross-device display of the notification information in the first device, and enhancing user experience. In addition, the first device may perform cross-device management on the super notification function of the second device, thereby further enhancing user experience.

In a possible implementation, the super notification interface further includes a plurality of application options, and the plurality of application options include a first application option and a second application option; the first notification information is notification information of a first application or a second application; and step S3316 further includes the following step:
Step S3320: In response to the user clicking the first application option in the super notification interface, disable a super call function corresponding to the first application; after fourth notification information of the first application is received, the second device and the third device skip displaying the fourth notification information; and after fifth notification information of the second application is received, the second device and the third device display the fifth notification information.

For an execution process of each step of this embodiment, refer to the previous embodiments. Details are not described herein again. In this embodiment, the first device may set a super notification function of an application, and forward notification information of the application whose super notification function is enabled to the second device and the third device, so that the second device and the third device display the notification information, thereby implementing cross-device display of the notification information in the first device, and enhancing user experience.

In a possible implementation, the options of the plurality of coordination services further include a super keyboard and mouse option, when the super keyboard and mouse option is clicked in the second interface, a super keyboard and mouse interface is displayed, where the super keyboard and mouse interface includes a super keyboard and mouse function button; the super setting interface of the second device includes a super keyboard and mouse function button of the second device; and after step S3302, the coordination control method further includes the following steps:

Step S3321: A super keyboard and mouse function of each of the first device, the second device, and the third device is enabled, and when an input device sharing instruction of the second device is received, display a cursor corresponding to an input device of the second device.

Step S3322: Disable the super keyboard and mouse function of the first device in response to the user clicking the super keyboard and mouse function button in a super keyboard and mouse interface of the first device, and skip displaying the cursor corresponding to the input device of the second device, where an icon of the first device is not displayed in a super keyboard and mouse interface of the second device.

Step S3323: Enable the super keyboard and mouse function of the first device in response to the user clicking the super keyboard and mouse function button in the super keyboard and mouse interface of the first device, where the icon of the first device is displayed in the super keyboard and mouse interface of the second device.

For an execution process of each step of this embodiment, refer to the previous embodiments, including the embodiments corresponding to FIG. 5, FIG. 6, FIG. 7D, FIG. 8A to FIG. 8D, FIG. 29, and the like. Details are not described herein again. In this embodiment, the first device may display the cursor corresponding to the input device of the second device, to share the input device of the second device, thereby enhancing user experience. In addition, the first device may perform cross-device management on the super keyboard and mouse function of the second device, thereby further enhancing user experience.

In a possible implementation, after step S3306, the coordination control method further includes the following step:
Step S3324: Send prompt information of a status modification of the super call function to the second device, the second device presents the prompt information in a hovering manner, and in response to an operation of the user clicking the prompt information, the second device displays a coordination setting interface of the second device, where the coordination setting interface includes a super call option of the second device, and the super call function of the second device is disabled.

For an execution process of each step of this embodiment, refer to the previous embodiments, including the embodiments corresponding to FIG. 8A to FIG. 8D, and the like. Details are not described herein again. In this embodiment, the first device may send the prompt information of the status modification of the super call function of the second device to the second device for display, to prompt the user that a status of the super call function of the second device is modified. The user may check a coordination status of the super call option of the second device by clicking the prompt information, and may further modify the coordination status of the super call option of the second device again, to further enhance user experience.

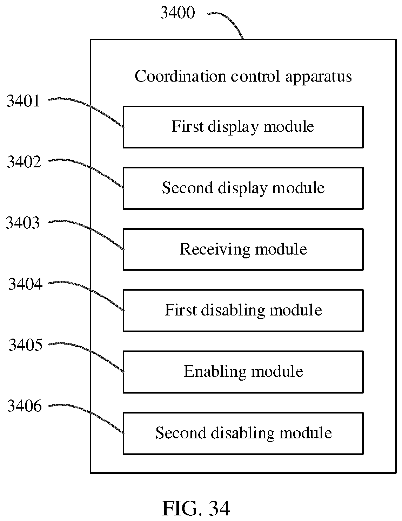

FIG. 34 is a schematic diagram of a structure of a coordination control apparatus according to this application. A coordination control apparatus 3400 provided in this application is applied to a first device, the first device establishes a communication connection to a second device, the first device establishes a communication connection to a third device, and the coordination control apparatus includes: a first display module 3401, a second display module 3402, a receiving module 3403, a first disabling module 3404, an enabling module 3405, and a second disabling module 3406, where
the first display module 3401 is configured to display a first interface, where the first interface includes a plurality of setting options, and the plurality of setting options include a super terminal option;
the second display module 3402 is configured to: display a second interface in response to a user clicking the super terminal option in the first interface, where the second interface includes options of a plurality of coordination services, the options of the plurality of coordination services include a super call option, the second interface further includes a my device list, and the my device list includes a second device option and a third device option; display a super call interface when the super call option is clicked on the second interface, where the super call interface includes a super call function button; and display a super setting interface of the second device when the second device option is clicked in the second interface, where the super setting interface of the second device includes a super call function button of the second device;
the receiving module 3403 is configured to receive a first incoming call request when a super call function of each of the first device, the second device, and the third device is enabled, where the second device and the third device display the first incoming call request;
the first disabling module 3404 is configured to disable the super call function of the first device in response to the user clicking the super call function button in the super call interface, where after a second incoming call request is received, the second device and the third device skip displaying the second incoming call request;
the enabling module 3405 is configured to enable the super call function of the first device in response to the user clicking the super call function button in the super call interface; and
the second disabling module 3406 is configured to disable the super call function of the second device in response to the user clicking the super call function button in the super setting interface of the second device, where after a third incoming call request is received, the second device skips displaying the third incoming call request, and the third device displays the third incoming call request.

It should be understood that the electronic device herein is represented in a form of a functional module. The term "module" herein may be implemented in a form of software and/or hardware. This is not specifically limited. For example, the "module" may be a software program, a hardware circuit, or a combination of the two that implement the foregoing function. The hardware circuit may include an application specific integrated circuit (application specific integrated circuit, ASIC), an electronic circuit, a processor (such as a shared processor, a dedicated processor, or a packet processor) configured to execute one or more software or firmware programs, a memory, a combined logical circuit, and/or another suitable component that supports the described functions.

This application further provides an electronic device, including: one or more processors; a memory; and one or more computer programs, where the one or more computer programs are stored in the memory, the one or more computer programs include instructions, and when the instructions are executed by the electronic device, the electronic device is enabled to perform the coordination control method according to any one of the first aspect or the possible implementations of the first aspect.

This application further provides a computer-readable storage medium, where the computer-readable storage medium stores a computer program, and when the computer program is executed by a processor, the processor is enabled to perform the coordination control method according to any one of the first aspect or the possible implementations of the first aspect.

This application further provides a chip, where the chip includes a processor and a data interface, and the processor reads, through the data interface, instructions stored in a memory, to perform the coordination control method according to any one of the first aspect or the possible implementations of the first aspect.

Optionally, the chip may further include a memory, where the memory stores instructions, the processor is configured to execute the instructions stored in the memory, and when the instructions are executed, the processor is configured to perform the coordination control method according to any one of the first aspect or the possible implementations of the first aspect.

The memory may be a read-only memory (read-only memory, ROM), another type of static storage device that may store static information and instructions, a random access memory (random access memory, RAM), or another type of dynamic storage device that may store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), magnetic disk storage media, or another magnetic storage device, or any another medium that can be used to carry or store desired program code in the form of an instruction or a data structure and that can be accessed by a computer.

In embodiments of this application, the term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items" or a similar expression means any combination of these items, including a single item or any combination of a plurality of items. For example, at least one of a, b, and c may represent: a, b, c, a-b, a-c, b-c, or a-b-c, where a, b, and c may be single or multiple.

A person of ordinary skill in the art may be aware that the units and algorithm steps described in the embodiments disclosed herein can be implemented by a combination of electronic hardware, computer software, and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In several embodiments provided in this application, when any function is implemented in the form of a software functional unit and sold or used as an independent product, the functions may be stored in a computer-readable storage medium. Based on such an understanding, the technical solutions of this application essentially, or the part contributing to the prior art, some of the technical solutions may be implemented in the form of a software product. The computer software product is stored in a storage medium and includes several instructions for instructing a computing device (this may be a personal computer, a server, a network device, or the like) to perform all or some of the steps of the methods described in the embodiments of this application. However, the foregoing storage medium includes: any medium that can store program code, such as a USB flash drive, a removable hard disk, a ROM, a RAM, a magnetic disk, or an optical disc.

The foregoing descriptions are merely specific implementations of this application, and any modification or replacement readily figured out by a person skilled in the art within the technical scope disclosed in this application shall fall within the protection scope of this application. The protection scope of this application shall be subject to the protection scope of the claims.

## Claims

1. A coordination control method, applied to a first device, the first device establishing a communication connection to a second device, the first device establishing a communication connection to a third device, and comprising:
displaying (S3301) a first interface (501), wherein the first interface (501) comprises a plurality of setting options, and the plurality of setting options comprises a super terminal option (515, 2015, 2515, 3014);
displaying (S3302) a second interface (401, 601, 1901, 1902, 2001) in response to a user clicking the super terminal option (515, 2015, 2515, 3014) in the first interface (501), wherein the second interface (401, 601, 1901, 1902, 2001) comprises options (1911) of a plurality of coordination services, the options (1911) of the plurality of coordination services comprise a super call option (612, 2112, 2712, 3112, 3212, 8012, 8022, 8032, 8042), the second interface (401, 601, 1901, 1902, 2001) further comprises a my device list, and the my device list comprises a second device option and a third device option; displaying a super call interface (702, 1201, 1202, 2801) when the super call option (612, 2112, 2712, 3112, 3212, 8012, 8022, 8032, 8042) is clicked in the second interface (401, 601, 1901, 1902, 2001), wherein the super call interface (702, 1201, 1202, 2801) comprises a super call function button (2815, 7021); displaying a super setting interface (801-804, 1501, 1601, 1701, 1801, 1804) of the second device when the second device option is clicked in the second interface (401, 601, 1901, 1902, 2001), wherein the super setting interface (801-804, 1501, 1601, 1701, 1801, 1804) of the second device comprises a super call function button (2815, 7021) of the second device;
wherein a super call function of each of the first device, the second device, and the third device is enabled (S3303), and after a first incoming call request is received, the first incoming call request is displayed, by the second device and the third device;
disabling (S3304) the super call function of the first device in response to the user clicking the super call function button (2815, 7021) in the super call interface (702, 1201, 1202, 2801), wherein after a second incoming call request is received, the second device and the third device do not display the second incoming call request;
enabling (S3305) the super call function of the first device in response to the user clicking the super call function button (2815, 7021) in the super call interface (702, 1201, 1202, 2801); and
disabling the super call function of the second device in response to the user clicking the super call function button (2815, 7021) in the super setting interface (801-804, 1501, 1601, 1701, 1801, 1804) of the second device, wherein after a third incoming call request is received, the second device does not display the third incoming call request, and the third device displays the third incoming call request.

2. The coordination control method according to claim 1, after the step of displaying a second interface (401, 601, 1901, 1902, 2001), further comprising:
when a first dialing request of the second device is received, displaying the first dialing request, performing a dialing operation of the first dialing request, wherein the third device does not display the first dialing request; and
after the super call function of the first device is disabled, a second dialing request of the second device is not displayed.

3. The coordination control method according to claim 1, wherein the first device is a first mobile phone (401), the second device is a second mobile phone (401, 402), and the super call function of each of the first device, the second device, and the third device is enabled, and
after the step of displaying a second interface (401, 601, 1901, 1902, 2001), the method further comprises:
when the second device receives a fourth incoming call request, displaying the fourth incoming call request, wherein the third device displays the fourth incoming call request;
disabling the super call function of the first device in response to the user clicking the super call function button (2815, 7021) in the super call interface (702, 1201, 1202, 2801); and
when the second device receives a fifth incoming call request, not displaying the fifth incoming call request, wherein the third device displays the fifth incoming call request.

4. The coordination control method according to claim 1, wherein the options (1911) of the plurality of coordination services further comprise a super connection option (611, 2111, 2711, 3111, 3211, 8011, 8021, 8031, 8032, 8041), and when the super connection option (611, 2111, 2711, 3111, 3211, 8011, 8021, 8031, 8032, 8041) is clicked in the second interface (401, 601, 1901, 1902, 2001), a super connection interface (701, 901, 902) is displayed, wherein the super connection interface (701, 901, 902) comprises a super connection function button (7011); the super setting interface (801-804, 1501, 1601, 1701, 1801, 1804) of the second device comprises a super connection function button (7011) of the second device; and
after the step of displaying a second interface (401, 601, 1901, 1902, 2001), the method further comprises:
displaying a current running interface of the target application, wherein a super connection function of each of the first device, the second device, and the third device is enabled, a target application is installed on each of the first device, the second device, and the third device, and an icon (602-606, 1010, 8010, 8020, 8030, 8040) of the target application is displayed through flickering, by the second device and the third device;
disabling the super connection function of the first device in response to the user clicking the super connection function button (7011) in the super connection interface (701, 901, 902), wherein when the first device displays the current running interface of the target application, the second device and the third device do not display the icon (602-606, 1010, 8010, 8020, 8030, 8040) of the target application;
enabling the super connection function of the first device in response to the user clicking the super connection function button (7011) in the super connection interface (701, 901, 902); and
disabling the super connection function of the second device in response to the user clicking the super connection function button (7011) in the super setting interface (801-804, 1501, 1601, 1701, 1801, 1804) of the second device, wherein when the first device displays the current running interface of the target application, the second device does not display the icon (602-606, 1010, 8010, 8020, 8030, 8040) of the target application, and the third device displays the icon (602-606, 1010, 8010, 8020, 8030, 8040) of the target application.

5. The coordination control method according to claim 1, wherein the options (1911) of the plurality of coordination services further comprise a super notification option (613, 2113, 2713, 3213, 8013, 8023, 8043), and when the super notification option (613, 2113, 2713, 3213, 8013, 8023, 8043) is clicked in the second interface (401, 601, 1901, 1902, 2001), a super notification interface (703, 1301, 1302, 2201, 2401) is displayed, wherein the super notification interface (703, 1301, 1302, 2201, 2401) comprises a super notification function button (2213, 7031); the super setting interface (801-804, 1501, 1601, 1701, 1801, 1804) of the second device comprises a super notification function button (2213, 7031) of the second device; and
after the step of displaying a second interface (401, 601, 1901, 1902, 2001), the method further comprises:
receiving first notification information, wherein a super notification function of each of the first device, the second device, and the third device is enabled, and the first notification information is displayed by the second device and the third device;
disabling the super notification function of the first device in response to the user clicking the super notification function button (2213, 7031) in the super notification interface (703, 1301, 1302, 2201, 2401), wherein after second notification information is received, the second device and the third device do not display the second notification information;
enabling the super notification function of the first device in response to the user clicking the super notification function button (2213, 7031) in the super notification interface (703, 1301, 1302, 2201, 2401); and
disabling the super notification function of the second device in response to the user clicking the super notification function button (2213, 7031) in the super setting interface (801-804, 1501, 1601, 1701, 1801, 1804) of the second device; wherein after third notification information is received, the second device does not display the third notification information, and the third device displays the third notification information.

6. The coordination control method according to claim 5, wherein the super notification interface (703, 1301, 1302, 2201, 2401) further comprises a plurality of application options (7032), and the plurality of application options (7032) comprise a first application option and a second application option; the first notification information is notification information of a first application or a second application; and
after the step of receiving first notification information, and displaying, by the second device and the third device, the first notification information, the method further comprises:
in response to the user clicking the first application option in the super notification interface (703, 1301, 1302, 2201, 2401), disabling a super call function corresponding to the first application; wherein after fourth notification information of the first application is received, the second device and the third device do not display the fourth notification information; and after fifth notification information of the second application is received, the second device and the third device display the fifth notification information.

7. The coordination control method according to claim 1, wherein the options (1911) of the plurality of coordination services further comprise a super keyboard and mouse option, when the super keyboard and mouse option is clicked in the second interface (401, 601, 1901, 1902, 2001), a super keyboard and mouse interface is displayed, and the super keyboard and mouse interface comprises a super keyboard and mouse function button; the super setting interface (801-804, 1501, 1601, 1701, 1801, 1804) of the second device comprises a super keyboard and mouse function button of the second device; and
after the step of displaying a second interface (401, 601, 1901, 1902, 2001), the method further comprises:
when an input device sharing instruction of the second device is received, displaying a cursor corresponding to an input device of the second device, wherein a super keyboard and mouse function of each of the first device, the second device, and the third device is enabled;
disabling the super keyboard and mouse function of the first device in response to the user clicking the super keyboard and mouse function button in a super keyboard and mouse interface of the first device, and not displaying the cursor corresponding to the input device of the second device, wherein an icon (602-606, 1010, 8010, 8020, 8030, 8040) of the first device is not displayed in a super keyboard and mouse interface of the second device; and
enabling the super keyboard and mouse function of the first device in response to the user clicking the super keyboard and mouse function button in the super keyboard and mouse interface of the first device, wherein the icon (602-606, 1010, 8010, 8020, 8030, 8040) of the first device is displayed in the super keyboard and mouse interface of the second device.

8. The coordination control method according to any one of claims 1 to 7, after the step of disabling the super call function of the second device, further comprising:
sending prompt information of a status modification of the super call function to the second device, wherein the second device present the prompt information in a hovering manner, in response to an operation of the user clicking the prompt information, the second device display a coordination setting interface (2101, 2201, 2701, 3101) of the second device, the coordination setting interface (2101, 2201, 2701, 3101) comprises a super call option (612, 2112, 2712, 3112, 3212, 8012, 8022, 8032, 8042) of the second device, and the super call function of the second device is disabled.

9. An electronic device (200), comprising: one or more processors (210), a memory (221); and one or more computer programs, wherein the one or more computer programs are stored in the memory (221), the one or more computer programs comprise instructions, and when the instructions are executed by the electronic device (200), the electronic device (200) is enabled to perform the coordination control method according to any one of claims 1 to 8.

10. A computer-readable storage medium, wherein the computer-readable storage medium stores a computer program, and when the computer program is executed by a processor (210), the processor (210) is enabled to perform the coordination control method according to any one of claims 1 to 8.

## Patentansprüche

1. Koordinationssteuerungsverfahren, angewendet auf eine erste Vorrichtung, wobei die erste Vorrichtung eine Kommunikationsverbindung zu einer zweiten Vorrichtung herstellt, die erste Vorrichtung eine Kommunikationsverbindung zu einer dritten Vorrichtung herstellt, und umfassend:
Anzeigen (S3301) einer ersten Schnittstelle (501), wobei die erste Schnittstelle (501) eine Vielzahl von Einstellungsoptionen umfasst und die Vielzahl von Einstellungsoptionen eine Super-Terminal-Option (515, 2015, 2515, 3014) umfasst;
Anzeigen (S3302) einer zweiten Schnittstelle (401, 601, 1901, 1902, 2001) als Reaktion darauf, dass ein Benutzer auf die Super-Terminal-Option (515, 2015, 2515, 3014) in der ersten Schnittstelle (501) klickt, wobei die zweite Schnittstelle (401, 601, 1901, 1902, 2001) Optionen (1911) für eine Vielzahl von Koordinationsdiensten umfasst, die Optionen (1911) für die Vielzahl von Koordinationsdiensten eine Super-Anruf-Option (612, 2112, 2712, 3112, 3212, 8012, 8022, 8032, 8042) umfassen, die zweite Schnittstelle (401, 601, 1901, 1902, 2001) ferner eine Liste meiner Geräte umfasst und die Liste meiner Geräte eine Option für die zweite Vorrichtung und eine Option für die dritte Vorrichtung umfasst; Anzeigen einer Super-Anruf-Schnittstelle (702, 1201, 1202, 2801), wenn die Super-Anruf-Option (612, 2112, 2712, 3112, 3212, 8012, 8022, 8032, 8042) in der zweiten Schnittstelle (401, 601, 1901, 1902, 2001) angeklickt wird, wobei die Super-Anruf-Schnittstelle (702, 1201, 1202, 2801) eine Super-Anruf-Funktionstaste (2815, 7021) umfasst; Anzeigen einer Super-Einstellungsschnittstelle (801-804, 1501, 1601, 1701, 1801, 1804) der zweiten Vorrichtung, wenn die Option für die zweite Vorrichtung in der zweiten Schnittstelle (401, 601, 1901, 1902, 2001) angeklickt wird, wobei die Super-Einstellungsschnittstelle (801-804, 1501, 1601, 1701, 1801, 1804) der zweiten Vorrichtung eine Super-Anruf-Funktionstaste (2815, 7021) der zweiten Vorrichtung umfasst;
wobei eine Super-Anruf-Funktion jeder der ersten Vorrichtung, der zweiten Vorrichtung und der dritten Vorrichtung aktiviert ist (S3303) und nach Empfang einer ersten eingehenden Anrufanforderung die erste eingehende Anrufanforderung durch die zweite Vorrichtung und die dritte Vorrichtung angezeigt wird;
Deaktivieren (S3304) der Super-Anruf-Funktion der ersten Vorrichtung als Reaktion darauf, dass der Benutzer auf die Super-Anruf-Funktionstaste (2815, 7021) in der Super-Anruf-Schnittstelle (702, 1201, 1202, 2801) klickt, wobei nach Empfang einer zweiten eingehenden Anrufanforderung die zweite Vorrichtung und die dritte Vorrichtung die zweite eingehende Anrufanforderung nicht anzeigen;
Aktivieren (S3305) der Super-Anruf-Funktion der ersten Vorrichtung als Reaktion darauf, dass der Benutzer auf die Super-Anruf-Funktionstaste (2815, 7021) in der Super-Anruf-Schnittstelle (702, 1201, 1202, 2801) klickt; und
Deaktivierung der Super-Call-Funktion des zweiten Geräts als Reaktion auf das Klicken des Benutzers auf die Super-Call-Funktionsschaltfläche (2815, 7021) in der Super-Einstellungsoberfläche (801-804, 1501, 1601, 1701, 1801, 1804) des zweiten Geräts, wobei das zweite Gerät nach Empfang einer dritten Anrufanforderung die dritte Anrufanforderung nicht anzeigt und das dritte Gerät die dritte Anrufanforderung anzeigt.

2. Koordinationssteuerungsverfahren nach Anspruch 1, nach dem Schritt des Anzeigens einer zweiten Schnittstelle (401, 601, 1901, 1902, 2001), ferner umfassend:
wenn eine erste Wählanforderung des zweiten Geräts empfangen wird, Anzeigen der ersten Wählanforderung, Durchführen eines Wählvorgangs der ersten Wählanforderung, wobei das dritte Gerät die erste Wählanforderung nicht anzeigt; und
nachdem die Super-Call-Funktion des ersten Geräts deaktiviert wurde, wird eine zweite Wählanforderung des zweiten Geräts nicht angezeigt.

3. Koordinationssteuerungsverfahren nach Anspruch 1, wobei das erste Gerät ein erstes Mobiltelefon (401) ist, das zweite Gerät ein zweites Mobiltelefon (401, 402) ist und die Super-Call-Funktion jedes des ersten Geräts, des zweiten Geräts und des dritten Geräts aktiviert ist, und
nach dem Schritt des Anzeigens einer zweiten Schnittstelle (401, 601, 1901, 1902, 2001) umfasst das Verfahren ferner:
wenn das zweite Gerät eine vierte Anrufanforderung empfängt, Anzeigen der vierten Anrufanforderung, wobei das dritte Gerät die vierte Anrufanforderung anzeigt;
Deaktivieren der Super-Call-Funktion des ersten Geräts als Reaktion auf das Klicken des Benutzers auf die Super-Call-Funktionsschaltfläche (2815, 7021) in der Super-Call-Schnittstelle (702, 1201, 1202, 2801); und
wenn das zweite Gerät eine fünfte Anrufanforderung empfängt, Nichtanzeigen der fünften Anrufanforderung, wobei das dritte Gerät die fünfte Anrufanforderung anzeigt.

4. Koordinationssteuerungsverfahren nach Anspruch 1, wobei die Optionen (1911) der Vielzahl von Koordinationsdiensten ferner eine Super-Verbindungsoption (611, 2111, 2711, 3111, 3211, 8011, 8021, 8031, 8032, 8041) umfassen, und wenn die Super-Verbindungsoption (611, 2111, 2711, 3111, 3211, 8011, 8021, 8031, 8032, 8041) in der zweiten Schnittstelle (401, 601, 1901, 1902, 2001) angeklickt wird, eine Super-Verbindungsschnittstelle (701, 901, 902) angezeigt wird, wobei die Super-Verbindungsschnittstelle (701, 901, 902) eine Super-Verbindungsfunktionsschaltfläche (7011) umfasst; die Super-Einstellungsoberfläche (801-804, 1501, 1601, 1701, 1801, 1804) des zweiten Geräts eine Super-Verbindungsfunktionsschaltfläche (7011) des zweiten Geräts umfasst; und
nach dem Schritt des Anzeigens einer zweiten Schnittstelle (401, 601, 1901, 1902, 2001) umfasst das Verfahren ferner:
Anzeigen einer aktuell laufenden Schnittstelle der Zielanwendung, wobei eine Super-Verbindungsfunktion jeweils des ersten Geräts, des zweiten Geräts und des dritten Geräts aktiviert ist, eine Zielanwendung auf jedem des ersten Geräts, des zweiten Geräts und des dritten Geräts installiert ist und ein Symbol (602-606, 1010, 8010, 8020, 8030, 8040) der Zielanwendung durch das zweite Gerät und das dritte Gerät blinkend angezeigt wird;
Deaktivieren der Super-Verbindungsfunktion des ersten Geräts als Reaktion darauf, dass der Benutzer auf die Super-Verbindungsfunktionsschaltfläche (7011) in der Super-Verbindungsschnittstelle (701, 901, 902) klickt, wobei, wenn das erste Gerät die aktuell laufende Schnittstelle der Zielanwendung anzeigt, das zweite Gerät und das dritte Gerät das Symbol (602-606, 1010, 8010, 8020, 8030, 8040) der Zielanwendung nicht anzeigen;
Aktivieren der Super-Verbindungsfunktion des ersten Geräts als Reaktion darauf, dass der Benutzer auf die Super-Verbindungsfunktionsschaltfläche (7011) in der Super-Verbindungsschnittstelle (701, 901, 902) klickt; und
Deaktivieren der Super-Verbindungsfunktion des zweiten Geräts als Reaktion darauf, dass der Benutzer auf die Super-Verbindungsfunktionsschaltfläche (7011) in der Super-Einstellungsschnittstelle (801-804, 1501, 1601, 1701, 1801, 1804) des zweiten Geräts klickt, wobei, wenn das erste Gerät die aktuell laufende Schnittstelle der Zielanwendung anzeigt, das zweite Gerät das Symbol (602-606, 1010, 8010, 8020, 8030, 8040) der Zielanwendung nicht anzeigt und das dritte Gerät das Symbol (602-606, 1010, 8010, 8020, 8030, 8040) der Zielanwendung anzeigt.

5. Koordinationssteuerungsverfahren nach Anspruch 1, wobei die Optionen (1911) der Vielzahl von Koordinationsdiensten ferner eine Super-Benachrichtigungsoption (613, 2113, 2713, 3213, 8013, 8023, 8043) umfassen, und wenn die Super-Benachrichtigungsoption (613, 2113, 2713, 3213, 8013, 8023, 8043) in der zweiten Schnittstelle (401, 601, 1901, 1902, 2001) angeklickt wird, eine Super-Benachrichtigungsschnittstelle (703, 1301, 1302, 2201, 2401) angezeigt wird, wobei die Super-Benachrichtigungsschnittstelle (703, 1301, 1302, 2201, 2401) eine Super-Benachrichtigungsfunktionsschaltfläche (2213, 7031) umfasst; die Super-Einstellungsschnittstelle (801-804, 1501, 1601, 1701, 1801, 1804) des zweiten Geräts umfasst eine Super-Benachrichtigungsfunktionsschaltfläche (2213, 7031) des zweiten Geräts; und
nach dem Schritt des Anzeigens einer zweiten Schnittstelle (401, 601, 1901, 1902, 2001) umfasst das Verfahren ferner:
Empfangen erster Benachrichtigungsinformationen, wobei eine Super-Benachrichtigungsfunktion jeweils des ersten Geräts, des zweiten Geräts und des dritten Geräts aktiviert ist und die ersten Benachrichtigungsinformationen durch das zweite Gerät und das dritte Gerät angezeigt werden;
Deaktivieren der Super-Benachrichtigungsfunktion des ersten Geräts als Reaktion darauf, dass der Benutzer die Super-Benachrichtigungsfunktionsschaltfläche (2213, 7031) in der Super-Benachrichtigungsschnittstelle (703, 1301, 1302, 2201, 2401) anklickt, wobei das zweite Gerät und das dritte Gerät nach dem Empfang der zweiten Benachrichtigungsinformationen die zweiten Benachrichtigungsinformationen nicht anzeigen;
Aktivieren der Super-Benachrichtigungsfunktion des ersten Geräts als Reaktion darauf, dass der Benutzer die Super-Benachrichtigungsfunktionsschaltfläche (2213, 7031) in der Super-Benachrichtigungsschnittstelle (703, 1301, 1302, 2201, 2401) anklickt; und
Deaktivieren der Super-Benachrichtigungsfunktion des zweiten Geräts als Reaktion darauf, dass der Benutzer die Super-Benachrichtigungsfunktionsschaltfläche (2213, 7031) in der Super-Einstellungsschnittstelle (801-804, 1501, 1601, 1701, 1801, 1804) des zweiten Geräts anklickt; wobei das zweite Gerät nach dem Empfang der dritten Benachrichtigungsinformationen die dritten Benachrichtigungsinformationen nicht anzeigt und das dritte Gerät die dritten Benachrichtigungsinformationen anzeigt.

6. Das Koordinationssteuerungsverfahren nach Anspruch 5, wobei die Super-Benachrichtigungsschnittstelle (703, 1301, 1302, 2201, 2401) ferner eine Vielzahl von Anwendungsoptionen (7032) umfasst und die Vielzahl von Anwendungsoptionen (7032) eine erste Anwendungsoption und eine zweite Anwendungsoption umfasst; wobei es sich bei den ersten Benachrichtigungsinformationen um Benachrichtigungsinformationen einer ersten Anwendung oder einer zweiten Anwendung handelt; und
nach dem Schritt des Empfangens der ersten Benachrichtigungsinformationen und des Anzeigens der ersten Benachrichtigungsinformationen durch das zweite Gerät und das dritte Gerät umfasst das Verfahren ferner:
als Reaktion darauf, dass der Benutzer die erste Anwendungsoption in der Super-Benachrichtigungsschnittstelle (703, 1301, 1302, 2201, 2401) anklickt, Deaktivieren einer Super-Anruffunktion, die der ersten Anwendung entspricht; wobei nach dem Empfang der vierten Benachrichtigungsinformationen der ersten Anwendung das zweite Gerät und das dritte Gerät die vierten Benachrichtigungsinformationen nicht anzeigen; und nach dem Empfang der fünften Benachrichtigungsinformationen der zweiten Anwendung das zweite Gerät und das dritte Gerät die fünften Benachrichtigungsinformationen anzeigen.

7. Das Koordinationssteuerungsverfahren nach Anspruch 1, wobei die Optionen (1911) der Vielzahl von Koordinationsdiensten ferner eine Super-Tastatur-und-Maus-Option umfassen, wobei, wenn die Super-Tastatur-und-Maus-Option in der zweiten Schnittstelle (401, 601, 1901, 1902, 2001) angeklickt wird, eine Super-Tastatur-und-Maus-Schnittstelle angezeigt wird und die Super-Tastatur-und-Maus-Schnittstelle eine Super-Tastatur-und-Maus-Funktionsschaltfläche umfasst; wobei die Super-Einstellungsschnittstelle (801-804, 1501, 1601, 1701, 1801, 1804) des zweiten Geräts eine Super-Tastatur-und-Maus-Funktionsschaltfläche des zweiten Geräts umfasst; und
nach dem Schritt des Anzeigens einer zweiten Schnittstelle (401, 601, 1901, 1902, 2001) umfasst das Verfahren ferner:
wenn ein Befehl zur Freigabe eines Eingabegeräts des zweiten Geräts empfangen wird, Anzeigen eines Cursors, der einem Eingabegerät des zweiten Geräts entspricht, wobei eine Super-Tastatur-und-Maus-Funktion jedes der ersten Geräte, der zweiten Geräte und der dritten Geräte aktiviert ist;
Deaktivieren der Super-Tastatur-und-Maus-Funktion des ersten Geräts als Reaktion darauf, dass der Benutzer die Super-Tastatur-und-Maus-Funktionstaste in einer Super-Tastatur-und-Maus-Schnittstelle des ersten Geräts anklickt, und Nicht-Anzeigen des Cursors, der dem Eingabegerät des zweiten Geräts entspricht, wobei ein Symbol (602-606, 1010, 8010, 8020, 8030, 8040) des ersten Geräts nicht in einer Super-Tastatur-und-Maus-Schnittstelle des zweiten Geräts angezeigt wird; und
Aktivieren der Super-Tastatur-und-Maus-Funktion des ersten Geräts als Reaktion darauf, dass der Benutzer die Super-Tastatur-und-Maus-Funktionstaste in der Super-Tastatur-und-Maus-Schnittstelle des ersten Geräts anklickt, wobei das Symbol (602-606, 1010, 8010, 8020, 8030, 8040) des ersten Geräts in der Super-Tastatur-und-Maus-Schnittstelle des zweiten Geräts angezeigt wird.

8. Koordinationssteuerungsverfahren nach einem der Ansprüche 1 bis 7, das nach dem Schritt des Deaktivierens der Super-Anruffunktion des zweiten Geräts ferner umfasst:
Senden von Informationen zur Statusänderung der Super-Anruffunktion an das zweite Gerät, wobei das zweite Gerät die Informationen in einer schwebenden Weise präsentiert, als Reaktion auf eine Benutzeraktion durch Anklicken der Informationen das zweite Gerät eine Koordinations-Einstellungsschnittstelle (2101, 2201, 2701, 3101) des zweiten Geräts anzeigt, die Koordinations-Einstellungsschnittstelle (2101, 2201, 2701, 3101) eine Super-Anrufoption (612, 2112, 2712, 3112, 3212, 8012, 8022, 8032, 8042) des zweiten Geräts umfasst und die Super-Anruffunktion des zweiten Geräts deaktiviert ist.

9. Elektronisches Gerät (200), umfassend: einen oder mehrere Prozessoren (210), einen Speicher (221); und ein oder mehrere Computerprogramme, wobei das eine oder die mehreren Computerprogramme in dem Speicher (221) gespeichert sind, das eine oder die mehreren Computerprogramme Anweisungen umfassen und wenn die Anweisungen durch das elektronische Gerät (200) ausgeführt werden, das elektronische Gerät (200) dazu befähigt ist, das Koordinationssteuerungsverfahren nach einem der Ansprüche 1 bis 8 durchzuführen.

10. Computerlesbares Speichermedium, wobei das computerlesbare Speichermedium ein Computerprogramm speichert und wenn das Computerprogramm durch einen Prozessor (210) ausgeführt wird, der Prozessor (210) dazu befähigt ist, das Koordinationssteuerungsverfahren nach einem der Ansprüche 1 bis 8 durchzuführen.

## Revendications

1. Un procédé de commande de coordination, appliqué à un premier dispositif, le premier dispositif établissant une connexion de communication avec un deuxième dispositif, le premier dispositif établissant une connexion de communication avec un troisième dispositif, et comprenant :
l'affichage (S3301) d'une première interface (501), dans laquelle la première interface (501) comprend une pluralité d'options de réglage, et la pluralité d'options de réglage comprend une option de super terminal (515, 2015, 2515, 3014) ;
l'affichage (S3302) d'une deuxième interface (401, 601, 1901, 1902, 2001) en réponse à un clic de l'utilisateur sur l'option de super terminal (515, 2015, 2515, 3014) dans la première interface (501), dans laquelle la deuxième interface (401, 601, 1901, 1902, 2001) comprend des options (1911) d'une pluralité de services de coordination, les options (1911) de la pluralité de services de coordination comprennent une option de super appel (612, 2112, 2712, 3112, 3212, 8012, 8022, 8032, 8042), la deuxième interface (401, 601, 1901, 1902, 2001) comprend en outre une liste de mes dispositifs, et la liste de mes dispositifs comprend une option de deuxième dispositif et une option de troisième dispositif ; l'affichage d'une interface de super appel (702, 1201, 1202, 2801) lorsque l'option de super appel (612, 2112, 2712, 3112, 3212, 8012, 8022, 8032, 8042) est cliquée dans la deuxième interface (401, 601, 1901, 1902, 2001), dans laquelle l'interface de super appel (702, 1201, 1202, 2801) comprend un bouton de fonction de super appel (2815, 7021) ; l'affichage d'une interface de super réglage (801-804, 1501, 1601, 1701, 1801, 1804) du deuxième dispositif lorsque l'option de deuxième dispositif est cliquée dans la deuxième interface (401, 601, 1901, 1902, 2001), dans laquelle l'interface de super réglage (801-804, 1501, 1601, 1701, 1801, 1804) du deuxième dispositif comprend un bouton de fonction de super appel (2815, 7021) du deuxième dispositif ;
dans lequel une fonction de super appel de chacun parmi le premier dispositif, le deuxième dispositif et le troisième dispositif est activée (S3303), et après réception d'une première demande d'appel entrant, la première demande d'appel entrant est affichée par le deuxième dispositif et le troisième dispositif ;
la désactivation (S3304) de la fonction de super appel du premier dispositif en réponse à un clic de l'utilisateur sur le bouton de fonction de super appel (2815, 7021) dans l'interface de super appel (702, 1201, 1202, 2801), dans laquelle après réception d'une deuxième demande d'appel entrant, le deuxième dispositif et le troisième dispositif n'affichent pas la deuxième demande d'appel entrant ;
l'activation (S3305) de la fonction de super appel du premier dispositif en réponse à un clic de l'utilisateur sur le bouton de fonction de super appel (2815, 7021) dans l'interface de super appel (702, 1201, 1202, 2801) ; et
désactivation de la fonction d'appel super du second dispositif en réponse au clic de l'utilisateur sur le bouton de fonction d'appel super (2815, 7021) dans l'interface de réglage super (801-804, 1501, 1601, 1701, 1801, 1804) du second dispositif, dans laquelle après la réception d'une troisième requête d'appel entrant, le second dispositif n'affiche pas la troisième requête d'appel entrant, et le troisième dispositif affiche la troisième requête d'appel entrant.

2. Procédé de commande de coordination selon la revendication 1, comprenant en outre, après l'étape d'affichage d'une seconde interface (401, 601, 1901, 1902, 2001) :
lorsqu'une première requête de numérotation du second dispositif est reçue, l'affichage de la première requête de numérotation, l'exécution d'une opération de numérotation de la première requête de numérotation, dans lequel le troisième dispositif n'affiche pas la première requête de numérotation ; et
après que la fonction d'appel super du premier dispositif est désactivée, une seconde requête de numérotation du second dispositif n'est pas affichée.

3. Procédé de commande de coordination selon la revendication 1, dans lequel le premier dispositif est un premier téléphone mobile (401), le second dispositif est un second téléphone mobile (401, 402), et la fonction d'appel super de chacun parmi le premier dispositif, le second dispositif et le troisième dispositif est activée, et
après l'étape d'affichage d'une seconde interface (401, 601, 1901, 1902, 2001), le procédé comprend en outre :
lorsque le second dispositif reçoit une quatrième requête d'appel entrant, l'affichage de la quatrième requête d'appel entrant, dans lequel le troisième dispositif affiche la quatrième requête d'appel entrant ;
la désactivation de la fonction d'appel super du premier dispositif en réponse au clic de l'utilisateur sur le bouton de fonction d'appel super (2815, 7021) dans l'interface d'appel super (702, 1201, 1202, 2801) ; et
lorsque le second dispositif reçoit une cinquième requête d'appel entrant, le non-affichage de la cinquième requête d'appel entrant, dans lequel le troisième dispositif affiche la cinquième requête d'appel entrant.

4. Procédé de commande de coordination selon la revendication 1, dans lequel les options (1911) de la pluralité de services de coordination comprennent en outre une option de connexion super (611, 2111, 2711, 3111, 3211, 8011, 8021, 8031, 8032, 8041), et lorsque l'option de connexion super (611, 2111, 2711, 3111, 3211, 8011, 8021, 8031, 8032, 8041) est cliquée dans la seconde interface (401, 601, 1901, 1902, 2001), une interface de connexion super (701, 901, 902) est affichée, dans laquelle l'interface de connexion super (701, 901, 902) comprend un bouton de fonction de connexion super (7011) ; l'interface de réglage super (801-804, 1501, 1601, 1701, 1801, 1804) du second dispositif comprend un bouton de fonction de connexion super (7011) du second dispositif ; et
après l'étape d'affichage d'une seconde interface (401, 601, 1901, 1902, 2001), le procédé comprend en outre :
affichage d'une interface d'exécution actuelle de l'application cible, dans laquelle une fonction de super connexion de chacun du premier dispositif, du deuxième dispositif et du troisième dispositif est activée, une application cible est installée sur chacun du premier dispositif, du deuxième dispositif et du troisième dispositif, et une icône (602-606, 1010, 8010, 8020, 8030, 8040) de l'application cible est affichée par clignotement, par le deuxième dispositif et le troisième dispositif ;
désactivation de la fonction de super connexion du premier dispositif en réponse au clic de l'utilisateur sur le bouton de fonction de super connexion (7011) dans l'interface de super connexion (701, 901, 902), dans laquelle lorsque le premier dispositif affiche l'interface d'exécution actuelle de l'application cible, le deuxième dispositif et le troisième dispositif n'affichent pas l'icône (602-606, 1010, 8010, 8020, 8030, 8040) de l'application cible ;
activation de la fonction de super connexion du premier dispositif en réponse au clic de l'utilisateur sur le bouton de fonction de super connexion (7011) dans l'interface de super connexion (701, 901, 902) ; et
désactivation de la fonction de super connexion du deuxième dispositif en réponse au clic de l'utilisateur sur le bouton de fonction de super connexion (7011) dans l'interface de super réglage (801-804, 1501, 1601, 1701, 1801, 1804) du deuxième dispositif, dans laquelle lorsque le premier dispositif affiche l'interface d'exécution actuelle de l'application cible, le deuxième dispositif n'affiche pas l'icône (602-606, 1010, 8010, 8020, 8030, 8040) de l'application cible, et le troisième dispositif affiche l'icône (602-606, 1010, 8010, 8020, 8030, 8040) de l'application cible.

5. Procédé de commande de coordination selon la revendication 1, dans lequel les options (1911) de la pluralité de services de coordination comprennent en outre une option de super notification (613, 2113, 2713, 3213, 8013, 8023, 8043), et lorsque l'option de super notification (613, 2113, 2713, 3213, 8013, 8023, 8043) est cliquée dans la deuxième interface (401, 601, 1901, 1902, 2001), une interface de super notification (703, 1301, 1302, 2201, 2401) est affichée, dans laquelle l'interface de super notification (703, 1301, 1302, 2201, 2401) comprend un bouton de fonction de super notification (2213, 7031) ; l'interface de super réglage (801-804, 1501, 1601, 1701, 1801, 1804) du deuxième dispositif comprend un bouton de fonction de super notification (2213, 7031) du deuxième dispositif ; et
après l'étape d'affichage d'une deuxième interface (401, 601, 1901, 1902, 2001), le procédé comprend en outre :
réception d'une première information de notification, dans laquelle une fonction de super notification de chacun du premier dispositif, du deuxième dispositif et du troisième dispositif est activée, et la première information de notification est affichée par le deuxième dispositif et le troisième dispositif ;
désactiver la fonction de super notification du premier dispositif en réponse à l'utilisateur cliquant sur le bouton de fonction de super notification (2213, 7031) dans l'interface de super notification (703, 1301, 1302, 2201, 2401), où après la réception de secondes informations de notification, le deuxième dispositif et le troisième dispositif n'affichent pas les secondes informations de notification ;
activer la fonction de super notification du premier dispositif en réponse à l'utilisateur cliquant sur le bouton de fonction de super notification (2213, 7031) dans l'interface de super notification (703, 1301, 1302, 2201, 2401) ; et
désactiver la fonction de super notification du deuxième dispositif en réponse à l'utilisateur cliquant sur le bouton de fonction de super notification (2213, 7031) dans l'interface de super paramètres (801-804, 1501, 1601, 1701, 1801, 1804) du deuxième dispositif ; où après la réception de troisièmes informations de notification, le deuxième dispositif n'affiche pas les troisièmes informations de notification, et le troisième dispositif affiche les troisièmes informations de notification.

6. Le procédé de commande de coordination selon la revendication 5, dans lequel l'interface de super notification (703, 1301, 1302, 2201, 2401) comprend en outre une pluralité d'options d'application (7032), et la pluralité d'options d'application (7032) comprend une première option d'application et une deuxième option d'application ; les premières informations de notification sont des informations de notification d'une première application ou d'une deuxième application ; et
après l'étape de réception des premières informations de notification, et d'affichage, par le deuxième dispositif et le troisième dispositif, des premières informations de notification, le procédé comprend en outre :
en réponse à l'utilisateur cliquant sur la première option d'application dans l'interface de super notification (703, 1301, 1302, 2201, 2401), désactiver une fonction de super appel correspondant à la première application ; où après la réception de quatrièmes informations de notification de la première application, le deuxième dispositif et le troisième dispositif n'affichent pas les quatrièmes informations de notification ; et après la réception de cinquièmes informations de notification de la deuxième application, le deuxième dispositif et le troisième dispositif affichent les cinquièmes informations de notification.

7. Le procédé de commande de coordination selon la revendication 1, dans lequel les options (1911) de la pluralité de services de coordination comprennent en outre une option de super clavier et souris, lorsque l'option de super clavier et souris est sélectionnée dans la deuxième interface (401, 601, 1901, 1902, 2001), une interface de super clavier et souris est affichée, et l'interface de super clavier et souris comprend un bouton de fonction de super clavier et souris ; l'interface de super paramètres (801-804, 1501, 1601, 1701, 1801, 1804) du deuxième dispositif comprend un bouton de fonction de super clavier et souris du deuxième dispositif ; et
après l'étape d'affichage d'une seconde interface (401, 601, 1901, 1902, 2001), le procédé comprend en outre :
lorsqu'une instruction de partage de périphérique d'entrée du second dispositif est reçue, l'affichage d'un curseur correspondant à un périphérique d'entrée du second dispositif, dans lequel une fonction de super clavier et souris de chacun du premier dispositif, du second dispositif et du troisième dispositif est activée ;
la désactivation de la fonction de super clavier et souris du premier dispositif en réponse au clic de l'utilisateur sur le bouton de fonction de super clavier et souris dans une interface de super clavier et souris du premier dispositif, et la non-affichage du curseur correspondant au périphérique d'entrée du second dispositif, dans lequel une icône (602-606, 1010, 8010, 8020, 8030, 8040) du premier dispositif n'est pas affichée dans une interface de super clavier et souris du second dispositif ; et
l'activation de la fonction de super clavier et souris du premier dispositif en réponse au clic de l'utilisateur sur le bouton de fonction de super clavier et souris dans l'interface de super clavier et souris du premier dispositif, dans lequel l'icône (602-606, 1010, 8010, 8020, 8030, 8040) du premier dispositif est affichée dans l'interface de super clavier et souris du second dispositif.

8. Le procédé de commande de coordination selon l'une quelconque des revendications 1 à 7, comprenant en outre, après l'étape de désactivation de la fonction de super appel du second dispositif :
l'envoi d'informations d'invite concernant une modification de statut de la fonction de super appel au second dispositif, dans lequel le second dispositif présente les informations d'invite de manière flottante, en réponse à une opération de clic de l'utilisateur sur les informations d'invite, le second dispositif affiche une interface de réglage de coordination (2101, 2201, 2701, 3101) du second dispositif, l'interface de réglage de coordination (2101, 2201, 2701, 3101) comprend une option de super appel (612, 2112, 2712, 3112, 3212, 8012, 8022, 8032, 8042) du second dispositif, et la fonction de super appel du second dispositif est désactivée.

9. Dispositif électronique (200), comprenant : un ou plusieurs processeurs (210), une mémoire (221) ; et un ou plusieurs programmes informatiques, dans lequel le ou les programmes informatiques sont stockés dans la mémoire (221), le ou les programmes informatiques comprennent des instructions, et lorsque les instructions sont exécutées par le dispositif électronique (200), le dispositif électronique (200) est activé pour exécuter le procédé de commande de coordination selon l'une quelconque des revendications 1 à 8.

10. Support de stockage lisible par ordinateur, dans lequel le support de stockage lisible par ordinateur stocke un programme informatique, et lorsque le programme informatique est exécuté par un processeur (210), le processeur (210) est activé pour exécuter le procédé de commande de coordination selon l'une quelconque des revendications 1 à 8.
